# EUROPEAN PATENT APPLICATION

(11) **EP 4 797 815 A1**
(43) Date of publication of application: **26.08.2026**
(21) Application number: 24915453.5
(22) Date of filing: 30.12.2024
(51) Int. Cl.: H04W 52/02, H04W 56/00, H04W 68/02, H04B 17/318, H04W 24/10, H04W 24/08, H04W 72/232

(54) **METHOD AND DEVICE FOR ENERGY SAVING IN WIRELESS COMMUNICATION SYSTEM**

(30) Priority: 02.01.2024 KR 20240000291
(71) Applicant: Samsung Electronics Co., Ltd., Suwon-si, Gyeonggi-do 16677 (KR)
(72) Inventor: LEE, Jaewon, Suwon-si, Gyeonggi-do 16677 (KR); KIM, Youngbum, Suwon-si, Gyeonggi-do 16677 (KR); KIM, Younsun, Suwon-si, Gyeonggi-do 16677 (KR); RYU, Hyunsuk, Suwon-si, Gyeonggi-do 16677 (KR); YI, Junyung, Suwon-si, Gyeonggi-do 16677 (KR)
(74) Representative: Gulde & Partner
(86) International application number: PCT/KR2024/021485
(87) International publication number: WO 2025/147041

(57) **Abstract**

The present disclosure relates to a 5G or 6G communication system for supporting higher data transmission rates. In addition, the present disclosure provides a method and a device for reducing a delay time for reducing energy consumption of a base station in a mobile communication system. A method performed by a terminal in a wireless communication system according to an embodiment of the present disclosure may comprise the steps of: receiving a system information block from a first cell on which the terminal in a radio resource control (RRC) idle or RRC inactive state is camped; receiving a physical downlink control channel (PDCCH) including a downlink control information (DCI) format from the first cell, wherein the DCI format includes information for triggering activation of a second cell; performing a synchronization procedure to the second cell after a first time from a time point at which the PDCCH has been received; and receiving data traffic from the second cell.

## Description

### [Technical Field]

The present disclosure relates to a wireless communication system, and more particularly, to a method and device for energy saving of a base station in a wireless communication system.

### [Background Art]

5th generation (5G) mobile communication technologies define broad frequency bands such that high transmission rates and new services are possible, and can be implemented not only in "Sub 6GHz" bands such as 3.5 GHz, but also in "Above 6 GHz" bands referred to as mmWave including 28 GHz and 39 GHz. In addition, it has been considered to implement 6th generation (6G) mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multi input multi output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, new radio (NR) UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

The present disclosure provides a method and device for energy saving in a wireless communication system.

The technical subjects pursued in the disclosure may not be limited to the above-mentioned matters, and other technical subjects which are not mentioned herein may be considered from the following description of various embodiments of the disclosure by those skilled in the art to which the disclosure pertains.

### [Technical Solution]

According to an embodiment of the present disclosure, a method performed by a terminal in a wireless communication system includes: receiving a system information block from a first cell on which the terminal in a radio resource control (RRC) idle or RRC inactive state is camped; receiving a physical downlink control channel (PDCCH) including a downlink control information (DCI) format from the first cell, the DCI format including information for triggering activation of a second cell; performing a synchronization procedure to the second cell after a first time from a time point at which the PDCCH is received; and receiving data traffic from the second cell.

According to another embodiment of the present disclosure, a method performed by a base station associated with a first cell in a wireless communication system includes: transmitting a system information block to a terminal in a RRC idle or RRC inactive state, the terminal being camped on the first cell; transmitting, to the terminal, a PDCCH including a DCI format, the DCI format including information for triggering an activation of a second cell having data traffic to be transmitted to the terminal; and transmitting, to the second cell, information indicating the activation, in which a synchronization procedure to the second cell is performed after a first time from a time point at which the PDCCH is transmitted.

According to still another embodiment of the present disclosure, a terminal in a wireless communication system includes: a transceiver; and a processor, wherein the processor is configured to receive a system information block from a first cell on which the terminal in a RRC idle or RRC inactive state is camped, receive a PDCCH including a DCI format from the first cell, the DCI format including information for triggering activation of a second cell, perform a synchronization procedure to the second cell after a first time from a time point at which the PDCCH is received, and receive data traffic from the second cell.

According to still yet another embodiment of the present disclosure, a base station associated with a first cell in a wireless communication system includes: a transceiver; and a processor, wherein the processor is configured to transmit a system information block to a terminal in a RRC idle or RRC inactive state, the terminal being camped on the first cell, transmit a PDCCH including a DCI format to the terminal, the DCI format including information for triggering an activation of a second cell having data traffic to be transmitted to the terminal, and transmit, to the second cell, information indicating the activation, in which a synchronization procedure to the second cell is performed after a first time from a time point at which the PDCCH is transmitted.

Various embodiments of the present disclosure described above are merely some of the embodiments of the present disclosure, and various embodiments reflecting the technical features of various embodiments of the present disclosure may be derived and understood by those skilled in the art based on the detailed description to be described below.

### [Advantageous Effect]

According to an embodiment of the present disclosure, by defining a signal transmission method of a base station in a wireless communication system, it is possible to resolve the problem of excessive energy consumption and achieve high energy efficiency.

Advantageous effects obtainable from various embodiments of the disclosure may not be limited to the above-mentioned effects, and other effects which are not mentioned herein may be clearly derived and understood, based on the following description, by those skilled in the art to which the disclosure pertains.

### [Description of Drawings]

FIG. 1 illustrates a basic structure of a time-frequency resource domain in a 5G system according to an embodiment of the disclosure.
FIG. 2 illustrates a time domain mapping structure of a synchronization signal and a beam sweeping operation according to an embodiment of the present disclosure.
FIG. 3 illustrates a random access procedure according to an embodiment of the present disclosure.
FIG. 4 illustrates a procedure in which the UE reports the UE capability information to the gNB according to an embodiment of the present disclosure.
FIG. 5 illustrates a control resource set (CORESET) as a time-frequency resource to which a physical downlink control channel (PDCCH) is mapped according to an embodiment of the present disclosure.
FIG. 6 illustrates mapping of downlink control information (DCI) and demodulation reference signal (DMRS) in a resource element group (REG), which is a basic unit of a downlink control channel according to an embodiment of the present disclosure.
FIG. 7 illustrates base station beam allocation according to a transmission configuration indicator (TCI) state configuration according to an embodiment of the present disclosure.
FIG. 8 illustrates a hierarchical signaling method for dynamic allocation with regard to a PDCCH.
FIG. 9 illustrates a TCI indication medium access control-control element (MAC-CE) signaling structure for a PDCCH DMRS according to an embodiment of the present disclosure.
FIG. 10 is a diagram for describing a method for a base station and a UE to transmit and receive data in consideration of a downlink data channel and rate matching resources according to an embodiment of the present disclosure.
FIG. 11 illustrates a method for reporting aperiodic channel state information (CSI) when a channel state information-reference signal (CSI-RS) offset is 0 according to an embodiment of the present disclosure.
FIG. 12 illustrates a method for reporting aperiodic CSI when the CSI-RS offset is 1 according to an embodiment of the present disclosure.
FIG. 13 illustrates a configuration for a bandwidth part in a 5G communication system according to an embodiment of the present disclosure.
FIG. 14 illustrates discontinuous reception (DRX) in the 5G communication system according to an embodiment of the present disclosure.
FIG. 15 is a diagram for describing an existing network communication system to which an embodiment of the present disclosure is applicable.
FIGS. 16A and 16B are diagrams for describing a network communication system for realizing energy saving according to an embodiment of the present disclosure.
FIGS. 17A and 17B are diagrams for describing the network communication system for realizing energy saving according to an embodiment of the present disclosure.
FIG. 18 is a diagram illustrating a classification of latency from the time during which a UE camps on a synchronization cell according to a cell structure of an embodiment of the present disclosure until the UE receives all packets after accessing a data cell when data traffic occurs.
FIG. 19 is a diagram illustrating two octet structures of a trigger for MAC CE-based fast secondary cell (SCell) activation according to an embodiment of the present disclosure.
FIG. 20 is a diagram illustrating a timeline for the fast SCell activation according to an embodiment of the present disclosure.
FIGS. 21A, 21B, and 21C illustrate three timelines from the traffic occurrence for the UE to a time point at which the data cell is activated according to an embodiment of the present disclosure.
FIG. 22 illustrates signaling between a terminal and a base station operating based on fast data cell activation according to an embodiment of the present disclosure.
FIG. 23 illustrates a terminal transceiver according to an embodiment of the present disclosure.
FIG. 24 is a block diagram of a terminal according to an embodiment of the present disclosure.
FIG. 25 is a block diagram of a base station according to an embodiment of the present disclosure.

### [Mode for Disclosure]

Hereinafter, embodiments of the disclosure will be described in detail with reference to the accompanying drawings.

For convenience of description, apparatuses not directly related to the present disclosure may be omitted from illustration and description. In describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of flowchart illustrations, and combinations of blocks in the flowchart illustrations, may be performed by computer program instructions. These computer program instructions may be loaded collectively onto a processor of a general purpose computer, special purpose computer, or other programmable data processing apparatus to produce a machine, such that the instructions, which perform through the rocessor of the computer or other programmable data processing apparatus, create means for performing the functions specified in the flowchart block(s). These computer program instructions may also be stored in a non-transitory computer usable or computer-readable memory that may direct a computer or other programmable data processing apparatus to function in a particular manner, such that the instructions stored in the computer usable or computer-readable memory produce an article of manufacture including instruction means that perform the function specified in the flowchart block(s). The computer program instructions may also be loaded onto a computer or other programmable data processing apparatus to cause a series of operational steps to be performed on the computer or other programmable data processing apparatus to produce a computer executed process such that the instructions that perform on the computer or other programmable data processing apparatus provide steps for executing the functions specified in the flowchart block(s).

Further, each block may represent a module, segment, or portion of code, which includes one or more executable instructions for executing the specified logical function(s). It should also be noted that in some alternative implementations, the functions noted in the blocks may occur out of the order. For example, two blocks shown in succession may in fact be performed substantially concurrently or the blocks may sometimes be performed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Further, the "unit" in the embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher layer signaling (higher signaling) refers to a signal transfer scheme from a base station to a terminal via a downlink data channel of a physical layer, or from a terminal to a base station via an uplink data channel of a physical layer. The higher layer signaling may also be understood as radio resource control (RRC) signaling, PDCP signaling, or a media access control (MAC) control element (CE).

In the following description, terms and names defined in the 3GPP new radio standards (3GPP NR: 5th generation mobile communication standards) are used for the sake of descriptive convenience. However, the disclosure is not limited by these terms and names, and may be applied in the same way to systems that conform other standards. In addition, the term "terminal" may refer to not only cellular phones, smartphones, IoT devices, and sensors, but also other wireless communication devices.

In the following description, a base station is an entity that allocates resources to terminals, and may be at least one of a gNode B, a gNB, an eNode B, an eNB, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

To cope with rapidly increasing mobile data traffic in recent years, initial standards for a 5G system or new radio (NR) access technology, which is a next-generation communication system following long term evolution (LTE) or evolved universal terrestrial radio access (E-UTRA) and LTE-advanced (LTE-A) or E-UTRA evolution, have been completed. While the existing mobile communication system mainly focuses on voice/data communication, the 5G system aims to meet various services and requirements, such as enhanced mobile broadband (eMBB) for improving existing voice/data communications, ultra-reliable and low latency communication (URLLC) service, and massive machine type communication (MTC) for supporting a large number of thing communications.

While a system transmission bandwidth per carrier in the LTE and the LTE-A is limited to a maximum of 20 MHz, the 5G system aims to provide ultra-high-speed data services reaching several Gbps by utilizing a much wider ultra-wideband than the 20 MHz. Accordingly, the 5G system considers an ultra-high frequency band ranging from several GHz to about 100 GHz as candidate frequency bands, in which ultra-wideband frequency may be relatively easily secured. In addition, wideband frequency for the 5G system can be secured through frequency rearrangement or allocation in a frequency band ranging from several hundred MHz to several GHz used in the existing mobile communication system.

Radio waves in the ultra-high frequency band have a wavelength of several millimeters, which may be referred to as mmWave. However, in the ultra-high frequency band, a path loss of the radio waves increases in proportion to a frequency band, and thus coverage of the mobile communication system may decrease.

To overcome the reduced coverage in the ultra-high frequency band, beamforming technology may be applied, which uses multiple antennas to concentrate the radiated energy of the radio waves toward a predetermined target point, thereby extending a propagation distance of the radio waves. In other words, a beam width of a signal to which the beamforming technology is applied becomes relatively narrow, and since the radiated energy is concentrated within the narrow beam width, the propagation distance of the radio waves may increase. The beamforming technology may be applied to a transmitting end and a receiving end, respectively. In addition to increasing the coverage, the beamforming technology may also reduce interference in a region outside a beamforming direction. For the beamforming technology to operate properly, a method for accurately measuring the transmit and receive beams and providing feedback on the transmit/receive beams is required. The beamforming technology may be applied to a control or data channel that has a one-to-one correspondence between a predetermined terminal and a base station. In addition, to increase the coverage, the beamforming technology may also be applied to the control or data channels used to transmit common signals from a base station to multiple terminals in a system, such as synchronization signals, the physical broadcast channel (PBCH), or system information. When the beamforming technology will be applied to common signals, beam sweeping technology, which changes the direction of the beam for signal transmission, may be applied to ensure that the common signals reach terminals at any locations within a cell.

Another requirement for the 5G system requires ultra-low latency services in which transmission latency between the transmitting and receiving ends is approximately 1 ms. As one measure to reduce the transmission latency, a frame structure based on a short transmission time interval (TTI) shorter than that of the LTE and the LTE-A needs to be designed. The TTI is a basic time unit used for scheduling. In the LTE system and the LTE-A system, the TTI is 1 ms, which corresponds to duration of one subframe. As a short TTI for satisfying requirements for ultra-low latency services of the 5G system, TTIs shorter than those of the existing LTE and LTE-A systems, such as 0.5 ms, 0.25 ms, and 0.125 ms, may be used.

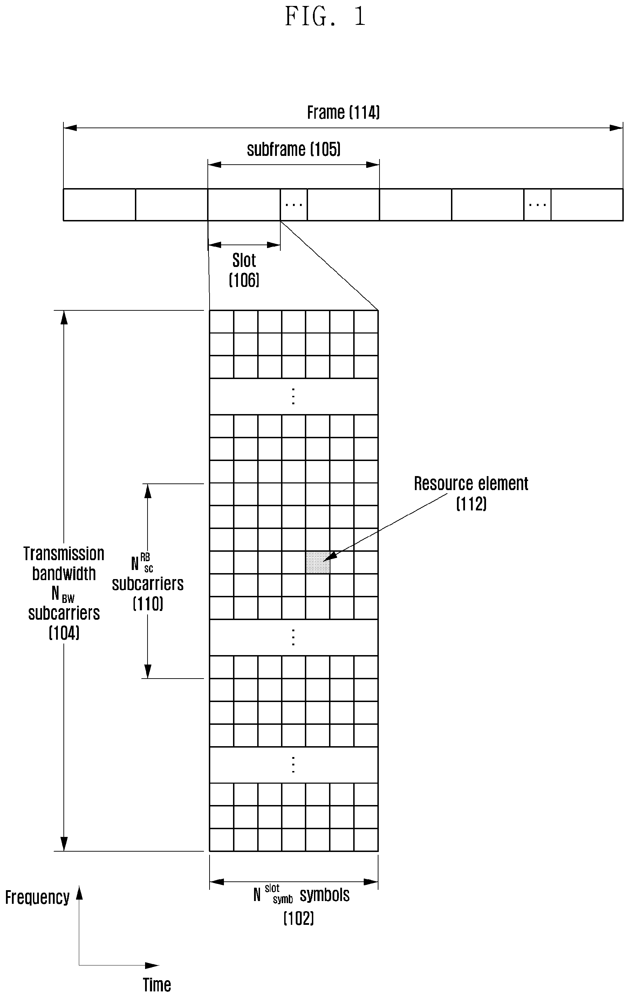

FIG. 1 illustrates a basic structure of a time-frequency resource domain in a 5G system according to an embodiment of the disclosure. That is, FIG. 1 illustrates a basic structure of a time-frequency resource domain which is a radio resource domain used to transmit data or control channels in a 5G system.

Referring to FIG. 1, the horizontal axis denotes the time domain, and the vertical axis denotes the frequency domain in FIG. 1. The minimum transmission unit in the time domain of the 5G system is an orthogonal frequency division multiplexing (OFDM) symbol, a group of ${N}_{symb}^{slot}$ symbols 102 may constitute one slot 106, and a group of ${N}_{slot}^{subframe}$ slots may constitute one subframe 105. The length of the subframe may be 1.0ms, and a group of ten subframes may constitute a 10ms frame 114. The minimum transmission unit in the frequency domain is a subcarrier, and a total of NBW subcarriers 104 may constitute the entire system transmission bandwidth.

The basic unit of resources in the time-frequency domain is a resource element (RE) 112, which may be represented by an OFDM symbol index and a subcarrier index. A resource block (RB) or a physical resource block (PRB) may be defined by consecutive ${N}_{sc}^{RB}$ subcarriers 110 in the frequency domain. In the 5G system, ${N}_{sc}^{RB} = 12$, and the data rate may increase in proportion to the number of RBs scheduled for a UE.

In the 5G system, a base station may map data in units of RBs, and may generally schedule RBs constituting one slot with regard to a specific UE. That is, the basic time unit to perform scheduling in 5G systems may be a slot, and the basic frequency unit to perform scheduling may be an RB.

The number of OFDM symbols, ${N}_{symb}^{slot}$, is determined according to the length of a cyclic prefix (CP) which is added to each symbol in order to prevent inter-symbol interference. For example, if a normal CP is applied, ${N}_{symb}^{slot} = 14$ and, if an extended CP is applied, ${N}_{symb}^{slot} = 12$. The extended CP is applied to a system having a longer radio-wave transmission distance than for the normal CP, thereby maintaining inter-symbol orthogonality. In the case of the normal CP, the ratio between the CP length and the symbol length may be maintained at a constant value such that the overhead due to the CP remains constant regardless of the subcarrier spacing. That is, the symbol length may increase if the subcarrier spacing decreases, thereby increasing the CP length. To the contrary, the symbol length may decrease if the subcarrier spacing increases, thereby decreasing the CP length. The symbol length and the CP length may be inversely proportional to the subcarrier spacing.

In order to satisfy various services and requirements in 5G systems, various frame structures may be supported by adjusting the subcarrier spacing. For example,
- In terms of the operating frequency band, the larger the subcarrier spacing, the more advantageous for restoration of phase noise in high-frequency bands.
- In terms of the transmission time, the larger the subcarrier spacing, the smaller the symbol length in the time domain. The resulting smaller slot length makes it more advantageous to support a super-low-latency service such as URLLC.
- In terms of the cell size, the larger the CP length, the larger cell can be supported, meaning that the smaller the subcarrier spacing, the larger cell can be supported. The term "cell" refers to a region covered by one base station in connection with mobile communication.

The subcarrier spacing, the CP length, and the like correspond to information indispensable to OFDM transmission/reception, and a gNB and a UE need to recognize the subcarrier spacing, the CP length, and the like as mutually common values such that efficient transmission/reception is possible. Table 1 enumerates the relationship between the subcarrier spacing configuration (µ), the subcarrier spacing(Δf), and the CP length supported in a 5G system.

**[Table 1]**

| *µ* | Δf = 2*^{µ}* · 15[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

Table 2 below enumerates the number ( ${N}_{symb}^{slot}$) of symbols per one slot, the number( ${N}_{symb}^{slot}$) of slots per one frame, and the number ( ${N}_{slot}^{subframe , μ}$) of slots per one subframe with regard to each subcarrier spacing configuration (µ) in the case of a normal CP.

**[Table 2]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 below enumerates the number ( ${N}_{symb}^{slot}$) of symbols per one slot, the number ( ${N}_{slot}^{frame , μ}$) of slots per one frame, and the number ( ${N}_{slot}^{subframe , μ}$) of slots per one subframe with regard to each subcarrier spacing configuration (µ) in the case of an extended CP.

**[Table 3]**

| *µ* | ${N}_{symb}^{slot}$ | ${N}_{slot}^{frame , μ}$ | ${N}_{slot}^{subframe , μ}$ |
|---|---|---|---|
| 2 | 12 | 40 | 4 |

It is expected that 5G systems, in the early state of introduction, will at least coexist with legacy LTE and/or LTE-A (hereinafter, referred to as LTE/LTE-A) systems or operate in a dual mode. Accordingly, legacy LTE/LTE-A may provide UEs with stable system operations, and the 5G system may play the role of providing UEs with improved services. Therefore, the frame structure of the 5G system needs to at least include the frame structure of LTE/LTE-A or a necessary parameter set (subcarrier spacing = 15kHz).

For example, a comparison between a frame structure having a subcarrier spacing configuration µ = 0 (hereinafter, referred to as frame structure A) and a frame structure having a subcarrier spacing configuration µ = 1 (hereinafter, referred to as frame structure B) shows that, compared with frame structure A, frame structure B has double the subcarrier spacing and the RB size, and has half the slot length and the symbol length. In the case of frame structure B, two slots may constitute one subframe, and 20 subframes may constitute one frame.

To generalize the frame structure of the 5G system, the subcarrier spacing, the CP length, the slot length, and the like, which constitute a necessary parameter set, of respective frame structures are related so as to correspond to integer multiples with each other, thereby providing a high degree of extendibility. In addition, a subframe having a fixed length of 1ms may be defined to represent a reference time unit unrelated to the frame structure.

The frame structure may be applied according to various scenarios. In terms of the cell size, the larger the CP length, the larger cells can be supported, meaning that frame structure A may support larger cells than frame structure B. In terms of the operating frequency band, the larger the subcarrier spacing, the more advantageous to high-frequency-band phase noise restoration, meaning that frame structure B may support a higher operating frequency than frame structure A. In terms of the service, the smaller the slot length (basic time unit of scheduling), the more advantageous for supporting an ultra-low latency service (for example, URLLC). Therefore, frame structure B may be more appropriate for the URLLC service than frame structure A.

As used in the following description of the disclosure, the uplink may refer to a radio link via which a UE transmits data or control signals to a base station, and the downlink may refer to a radio link via which the base station transmits data or control signals to the UE.

In an initial access step in which the UE initially accesses a system, the UE may perform downlink time and frequency domain synchronization and acquire a cell identifier (ID) from a synchronization signal, transmitted by a base station, through a cell search. In addition, the UE may receive a physical broadcast channel (PBCH) by using the acquired cell ID and acquire a master information block (MIB) as mandatory system information from the PBCH. Additionally, the UE may receive system information (system information block (SIB)) transmitted by the base station to acquire cell-common transmission and reception-related control information. The cell-common transmission and reception-related control information may include random-access-related control information, paging-related control information, common control information for various physical channels, etc.

A synchronization signal is a signal that serves as a reference for a cell search, and for each frequency band, a subcarrier spacing may be applied adaptively to a channel environment, such as phase noise. For a data channel or a control channel, in order to support various services as described above, a subcarrier spacing may be applied differently depending on a service type.

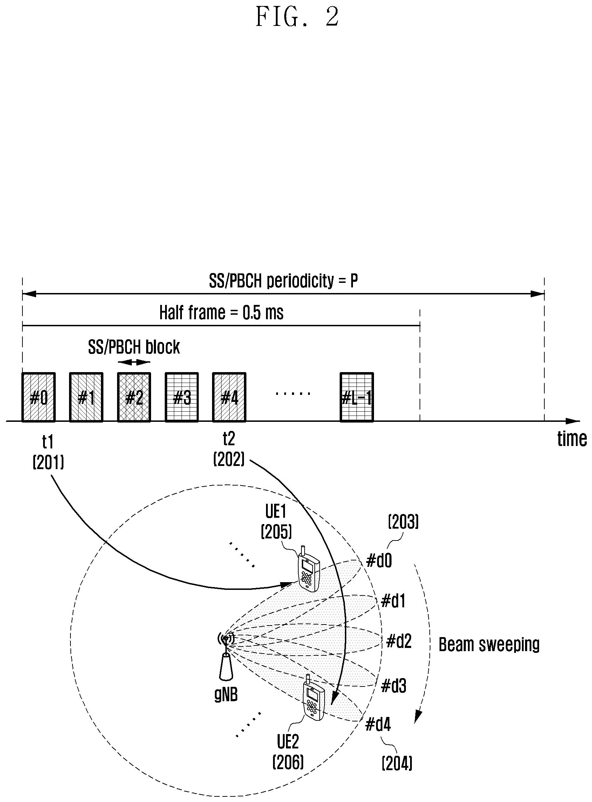

FIG. 2 illustrates a beam sweeping operation and a time domain mapping structure of a synchronization signal according to an embodiment of the disclosure.

For the sake of description, the following elements may be defined
- Primary synchronization signal (PSS): A PSS is a signal that serves as a reference for DL time/frequency synchronization, and provides a part of cell ID information.
- Secondary synchronization signal (SSS): An SSS serves as a reference for DL time/frequency synchronization, and provides the other part of the cell ID information. Additionally, the SSS may serve as a reference signal for PBCH demodulation of a PBCH.
- Physical broadcast channel (PBCH): A PBCH provides a master information block(MIB) which is essential system information required for transmission and reception of a data channel and a control channel of a UE. The mandatory system information may include search space-related control information indicating radio resource mapping information of a control channel, scheduling control information for a separate data channel for transmission of system information, a system frame number (SFN) which is a frame unit index that serves as a timing reference, and other information.
- Synchronization signal/PBCH block (SS/PBCH block) or SSB: An SS/PBCH block is configured by N OFDM symbols and may include a combination of a PSS, an SSS, a PBCH, etc. For a system to which a beam sweeping technology is applied, an SS/PBCH block is a minimum unit to which beam sweeping is applied. In the 5G system, N=4 may be satisfied. A base station may transmit up to a maximum of L SS/PBCH blocks, and the L SS/PBCH blocks are mapped within a half frame (0.5ms). In addition, the L SS/PBCH blocks are periodically repeated at predetermined periods P. The base station may inform a user equipment of period P via signaling. If there is no separate signaling of period P, the user equipment may apply a previously agreed default value.

FIG. 2 illustrates an example in which beam sweeping is applied in units of SS/PBCH blocks over time. Referring to FIG. 2, UE 1 205 receives an SS/PBCH block by means of a beam emitted in direction #d0 203 by beamforming applied to SS/PBCH block #0 at time point t1 201. In addition, UE 2 206 receives an SS/PBCH block by means of a beam emitted in direction #d4 204 by beamforming applied to SS/PBCH block #4 at time point t2 202. The UE may acquire, from the base station, an optimal synchronization signal via a beam emitted in the direction where the UE is located. For example, it may be difficult for UE 1 205 to acquire time/frequency synchronization and mandatory system information from the SS/PBCH block through the beam emitted in direction #d4 far away from the location of UE 1.

In addition to the initial access procedure, for the purpose of determining whether the radio link quality of a current cell is maintained at a certain level or higher, the UE may also receive the SS/PBCH block. Furthermore, during a handover procedure in which the UE moves access from the current cell to an adjacent cell, the UE may receive an SS/PBCH block of the adjacent cell in order to determine the radio link quality of the adjacent cell and acquire time/frequency synchronization with the adjacent cell.

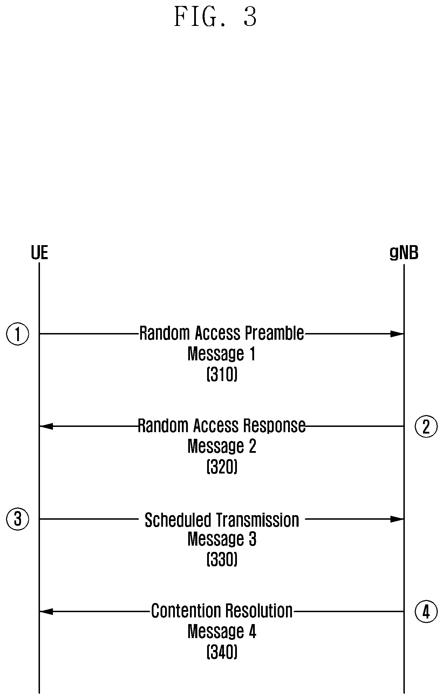

After acquiring an MIB and system information from the base station through the initial access procedure, the UE may perform a random access procedure in order to switch a link to the base station to a connected state (or RRC_CONNECTED state). Upon completing the random access procedure, the UE switches to a connected state in which one-to-one communication between the base station and the UE is possible. Hereinafter, a random access procedure will be described in detail with reference to FIG. 3.

FIG. 3 illustrates a random access procedure according to an embodiment of the disclosure. FIG. 3 illustrates an example of a random access procedure, and the disclosure is not limited thereto. Furthermore, the disclosure is not limited to a 4-step random access procedure as illustrated in FIG. 3, and may be applied to a 2-step random access procedure (transmission/reception of message A (message including information corresponding to message 1 and message 3) and transmission/reception of message B (message including information corresponding to message 2 and message 4)).

Referring to FIG. 3, in a first step 310 of the random access procedure, the UE transmits a random access preamble to the base station. The random access preamble, which is a message initially transmitted by the UE in the random access procedure, may be referred to as message 1. The base station may measure the transmission delay value between the UE and the base station from the random access preamble, and may make uplink synchronization. The UE may arbitrarily select which random access preamble is to be used, from a random access preamble set given by system information in advance. In addition, the initial transmission power of the random access preamble may be determined according to the pathloss between the base station and the UE, which is measured by the UE. Furthermore, the UE may determine the transmission beam direction of the random access preamble from a synchronization signal received from the base station, thereby transmitting the random access preamble.

In a second step 320, the base station transmits an uplink transmission timing adjustment command to the UE, based on the transmission delay value measured from the random access preamble received in the first step 310. In addition, the base station may transmit, as scheduling information, a power control command and an uplink resource to be used by the UE. The scheduling information may include control information regarding the UE's uplink transmission beam.

If the UE fails to receive a random access response (RAR) (or message 2) which is scheduling information regarding message 3 from the base station within a predetermined time in the second step 320, the UE may conduct the first step 310 again. If performing the first step 310 again, the UE may transmit the random access preamble after increasing the transmission power thereof by a predetermined step (power ramping), thereby increasing the probability that the base station will receive the random access preamble.

In a third step 330, the UE transmits uplink data (message 3) including the UE's ID to the base station through a physical uplink shared channel (PUSCH) by using the uplink resource assigned in the second step 320. The transmission timing of the PUSCH for transmitting message 3 may follow the timing control command received from the base station in the second step 320. In addition, the transmission power of the PUSCH for transmitting message 3 may be determined in consideration of a power control command received from the base station in the second step 320 and the power ramping value of the random access preamble. The uplink data channel for transmitting message 3 may refer to the first uplink data signal transmitted to the base station by the UE, after transmission of the random access preamble by the UE.

In a fourth step 340, upon determining that the UE has performed a random access without colliding with other UEs, the base station may transmit data (message 4) including the ID of the UE which has transmitted uplink data in the third step 330 to the corresponding UE. Upon receiving the signal transmitted by the base station in the fourth step 340 from the base station, the UE may determine that the random access is successful. In addition, the UE may transmit HARQ-ACK information to the base station through a physical uplink control channel (PUCCH) to indicate whether message 4 is successfully received or not.

If the gNB fails to receive a data signal from the UE due to collision between data transmitted by the UE in the third step 330 and data from another UE, the base station may no longer transmit data to the UE. In this case, if the UE fails to receive data transmitted from the base station in the fourth step 340 within a predetermined period of time, the UE may determine that the random access procedure is unsuccessful, and may restart from the first step 310.

When the random access procedure is successfully completed, the UE transitions to the connected state, enabling one-to-one communication between the gNB and the UE. The gNB receives a report of UE capability information from the UE in the connected state and may adjust scheduling by referring to the UE capability information of the corresponding UE. Through the UE capability information, the UE may inform the gNB whether the UE supports its own predetermined function, the maximum allowable value of the predetermined functions supported by the UE, etc. Therefore, the UE capability information reported by each UE to the gNB may be different values for each UE.

For example, the UE may report, to the gNB, the UE capability information that includes at least some of the following control information as the UE capability information.
- Frequency band-related control information supported by UE
- Channel bandwidth-related control information supported by UE
- Maximum modulation scheme related control information supported by UE
- The maximum number of beam-related control information supported by UE
- The maximum number of layers-related control information supported by UE
- CSI reporting-related control information supported by UE
- Control information regarding whether UE supports frequency hopping
- Bandwidth-related control information when supporting carrier aggregation (CA)
- When supporting carrier aggregation, control information regarding whether to support cross carrier scheduling

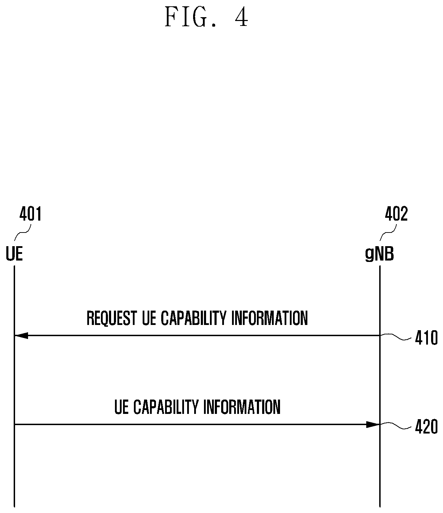

FIG. 4 illustrates a procedure in which the UE reports the UE capability information to the gNB according to an embodiment of the present disclosure.

Referring to FIG. 4, in step 410, a gNB 402 may transmit a UE capability information request message to a UE 401. In response to the UE capability information request of the gNB, in step 420, the UE transmits the UE capability information to the gNB.

Through the above process, the UE connected to the gNB is a UE in the RRC connected (RRC_CONNECTED) state, and the UE connected to the gNB may perform one-to-one communication. Conversely, the UE that is not connected is in the RRC idle (RRC_IDLE) state, and the operations of the UE in the corresponding state may be distinguished as follows:
- Operation for performing a UE-specific discontinuous reception (DRX) cycle configured by the higher layer,
- Operation for receiving a paging message from a core network,
- Acquiring system information, and/or
- Neighbor cell-related measurement operation and cell reselection.

In the 5G system, a UE in a new state called RRC inactive (RRC_INACTIVE) has been defined to reduce the energy and time consumed for an initial access of the UE. The RRC inactive (RRC_INACTIVE) UE may perform the following operations in addition to the operations performed by an RRC-idle (RRC_IDLE) UE:
- Store access stratum (AS) information required for cell access,
- Perform UE-specific DRX cycle operations configured by an RRC layer,
- Configure and periodically update an RAN-based notification area (RNA) that may be utilized during handover by the RRC layer, and/or
- Monitor an RAN-based paging message transmitted via inactive-radio network temporary identifier (I-RNTI).

The following describes a scheduling method in which a gNB transmits downlink data to a UE or instructs the UE to transmit uplink data.

The downlink control information (DCI) is control information transmitted by the gNB to the UE via a downlink, and may include downlink data scheduling information or uplink data scheduling information for a predetermined UE. Generally, the gNB may independently channel-code DCI for each UE and then transmit the channel-coded DCI to each UE via the physical downlink control channel (PDCCH).

The gNB may apply and operate a predefined DCI format to the UE to be scheduled, depending on purposes such as whether the DCI is scheduling information (downlink assignment) for downlink data, whether the DCI is scheduling information (uplink grant) for uplink data, or whether the DCI is DCI for power control.

The gNB may transmit the downlink data to the UE via the physical downlink shared channel (PDSCH) that is a physical channel for downlink data transmission. The scheduling information, such as a specific mapping position of the PDSCH in the time and frequency domains, a modulation scheme, HARQ-related control information, and power control information, may be informed to the UE by the gNB through DCI related to downlink data scheduling, among the DCI transmitted via the PDCCH.

The UE may transmit the uplink data to the gNB via the physical uplink shared channel (PUSCH) that is a physical channel for uplink data transmission. The scheduling information, such as a specific mapping position of the PUSCH in the time and frequency domains, the modulation scheme, the HARQ-related control information, and the power control information, may be informed to the UE by the gNB through the DCI related to uplink data scheduling, among the DCI transmitted via the PDCCH.

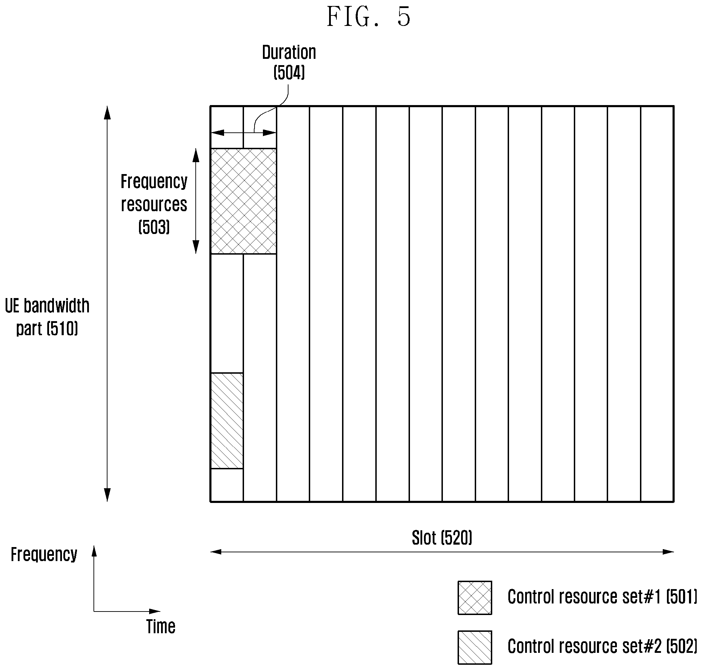

FIG. 5 illustrates a control resource set (CORESET) as a time-frequency resource to which a PDCCH is mapped according to an embodiment of the disclosure.

Referring to FIG. 5, a UE bandwidth part 510 may be configured along the frequency axis, and two control resource sets (control resource set #1 501 and control resource set #2 502) may be configured within one slot 520 along the time axis. The control resource sets 501 and 502 may be configured in a specific frequency resource 503 within the entire UE bandwidth part 510 along the frequency axis. The control resource sets may be each configured as one or multiple OFDM symbols along the time domain, and the number of the OFDM symbols may be defined as a control resource set duration 504.

Control resource set #1 501 may be configured to have a control resource set duration corresponding to two symbols, and control resource set #2 502 may be configured to have a control resource set duration corresponding to one symbol.

The base station may configure one or multiple CORESETs to a UE through higher layer signaling (e.g., system information, master information block (MIB), radio resource control (RRC) signaling). The description that a CORESET is configured for the UE may mean that information such as a CORESET identity, the CORESET's frequency location, or the CORESET's symbol length is provided. Pieces of information provided to the UE by the base station in order to configure a CORESET may include at least some of the pieces of information included in Table 4.

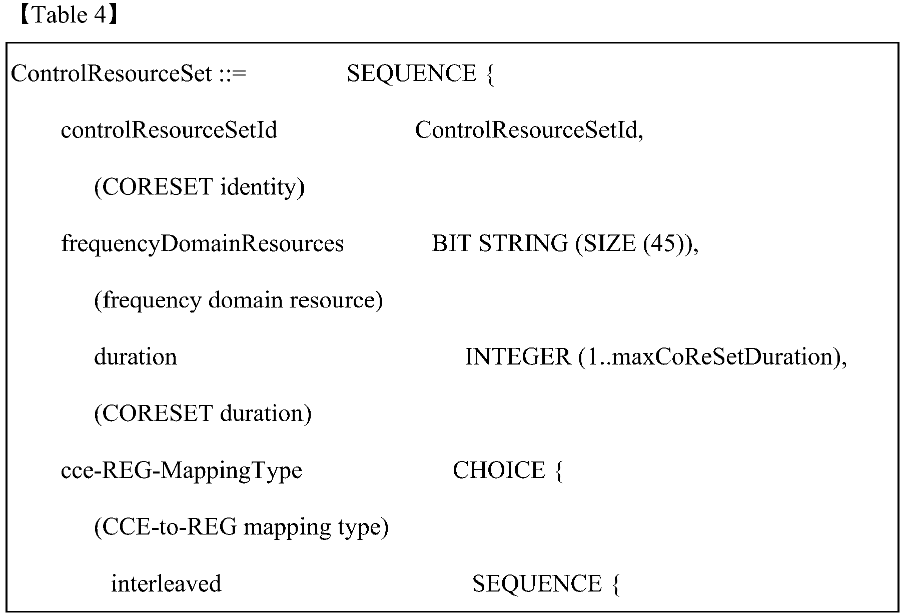

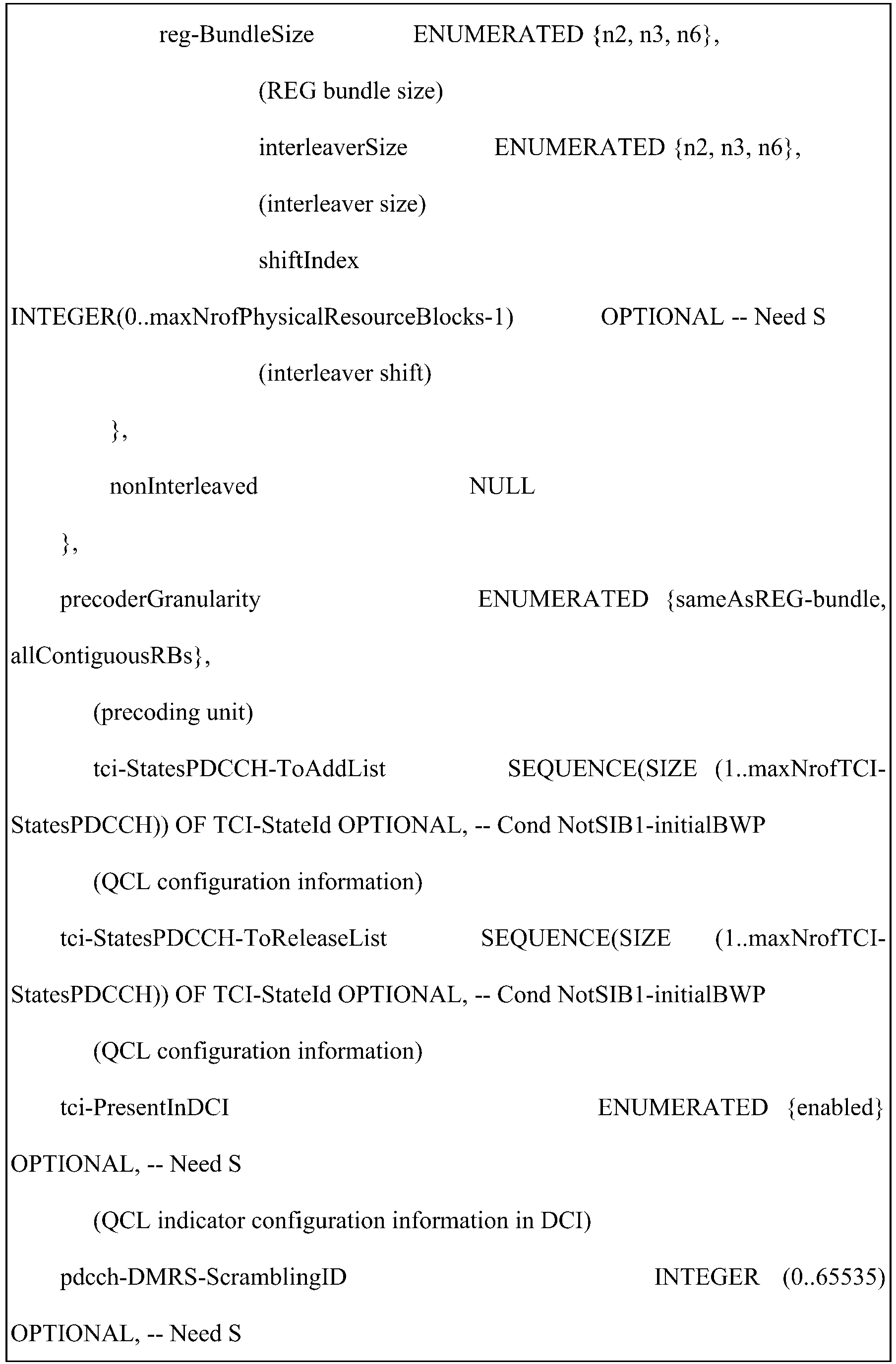

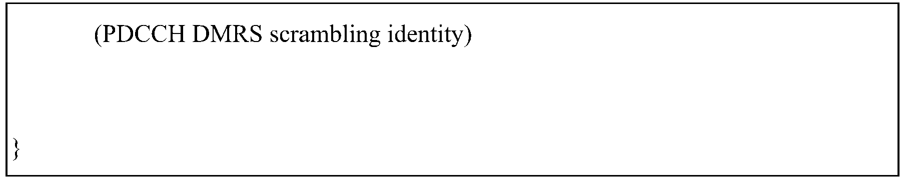

The CORESET may be configured by ${N}_{RB}^{CORESET}$ RBs in the frequency domain and may be configured by ${N}_{symb}^{CORESET} ∈ \left\{1, 2, 3\right\}$ symbols in the time domain. An NR PDCCH may be configured by one or multiple control channel elements (CCEs). One CCE may be configured by six resource element groups (REGs), and each REG may be defined as one RB during one OFDM symbol. In one CORESET, REGs may be indexed in the time-first order starting from REG index 0, from the lowest RB of the first OFDM of the CORESET.

As a PDCCH-related transmission method, an interleaved type and a non-interleaved type may be supported. The base station may configure, for the UE, whether interleaved or non-interleaved transmission is performed with regard to each CORESET through higher layer signaling. Interleaving may be performed at the REG bundle level. The REG bundle may be defined as one REG or a set of multiple REGs. The UE may determine the CCE-to-REG type in the corresponding CORESET, based on the configuration by the base station regarding whether transmission is of the interleaved type or the non-interleaved type, in a manner as in [Table 5] below.

**[Table 5]**

| | |
|---|---|
| The CCE-to-REG mapping for a control-resource set can be interleaved or non-interleaved and is described by REG bundles: | |
| | - REG bundle *i* is defined as REGs {*iL,iL+*1,*...,iL+L-*1} where *L* is the REG bundle size, $i = 0 , 1 , … , {N}_{REG}^{CORESET} / L - 1$, and ${N}_{REG}^{CORESET} = {N}_{RB}^{CORESET} {N}_{symb}^{CORESET}$ is the number of REGs in the CORESET |
| | - CCE *j* consists of REG bundles {*f*(*6j*/*L),f*(*6j*/*L*+1),...,*f*(*6j*/*L+*6/*L*-1)} where *f*(·) is an interleaver |
| For non-interleaved CCE-to-REG mapping, *L* = 6 and *f*(*x*) *= x.* | |
| For interleaved CCE-to-REG mapping, *L* ∈ {2,6} for ${N}_{symb}^{CORESET} = 1$ and $L ∈$ $\left\{{N}_{symb}^{CORESET}, 6\right\}$ for ${N}_{symb}^{CORESET} ∈ \left\{2, 3\right\}$. The interleaver is defined by | |
| | $f \left(x\right) = \left(rC+c+{n}_{shift}\right) mod \left({N}_{REG}^{CORESET}/L\right)$ |
| | *x = cR + r* |
| | *r* = 0,1, ... , *R* - 1 |
| | *c* = 0,1, ... , *C* - 1 |
| | $C = {N}_{REG}^{CORESET} / \left(LR\right)$ |
| where *R* ∈ {2,3,6}. | |

The base station may provide the UE with configuration information regarding to which symbol the PDCCH is mapped in the slot, the transmission period, and the like through signaling.

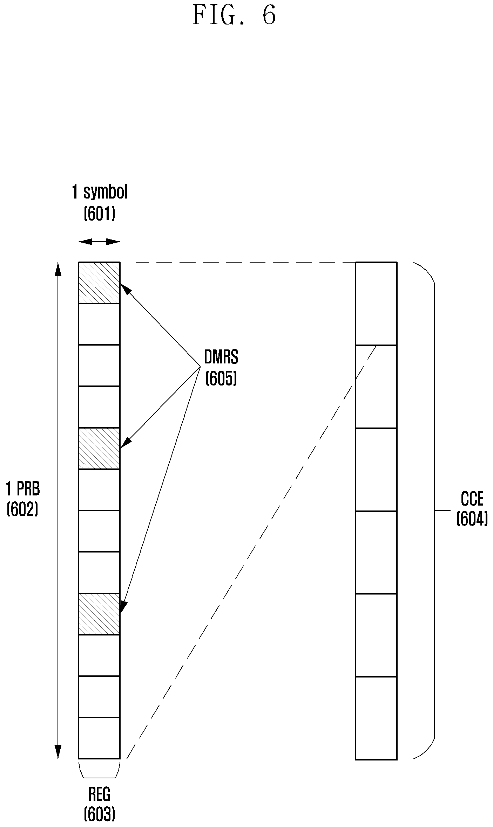

FIG. 6 illustrates mapping of DCI and a DMRS in an REG which is a basic unit of a downlink control channel according to an embodiment of the disclosure.

Referring to FIG. 6, the basic unit of the downlink control channel, that is, the REG 603, may include both REs to which DCI is mapped, and an area to which a reference signal (DMRS 605) for decoding the same is mapped. In addition, three DRMSs 605 may be transmitted in one REG 603.

Hereinafter, a PDCCH search space will be described. The number of CCEs necessary to transmit a PDCCH may be 1, 2, 4, 8, or 16 according to aggregation levels (ALs), and different number of CCEs may be used to implement link adaption of a downlink control channel. For example, in the case of AL=L, one downlink control channel may be transmitted through L CCEs. The UE performs blind decoding for detecting a signal while being no information regarding the downlink control channel, and to this end, a search space indicating a set of CCEs may be defined. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

The search spaces may be classified into common search spaces (CSSs) and UE-specific search spaces (USSs). A group of UEs or all UEs may search a common search space of the PDCCH in order to receive cell-common control information such as dynamic scheduling regarding system information (system information block, SIB) or a paging message. For example, the UE may receive PDSCH scheduling allocation information for reception of system information by searching the common search space for the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space for the PDCCH. The UE-specific search space may be defined UE-specifically as a function of various system parameters and the identity (ID) of the UE.

The base station may configure configuration information of the search space for the PDCCH to the UE through higher layer signaling (e.g., SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set (CORESET) index for monitoring the search space, and the like. For example, parameters of the search space for the PDCCH may include the following pieces of information given in Table 6 below.

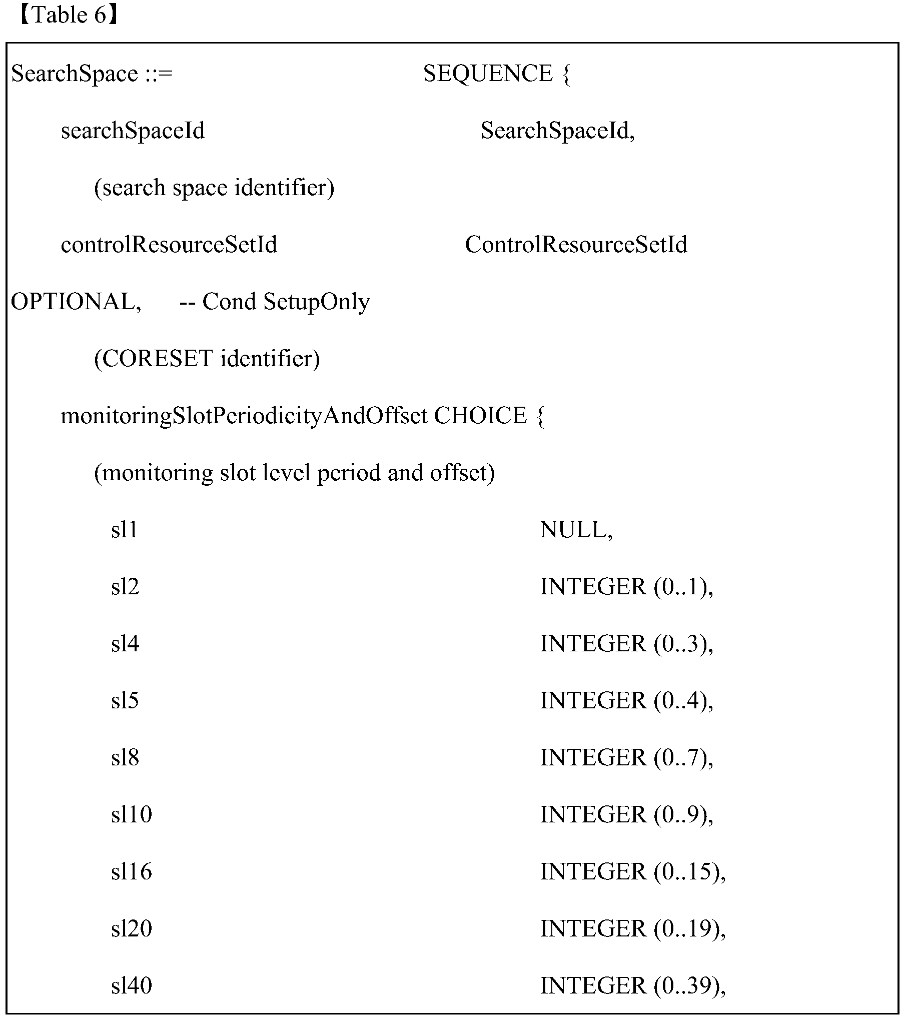

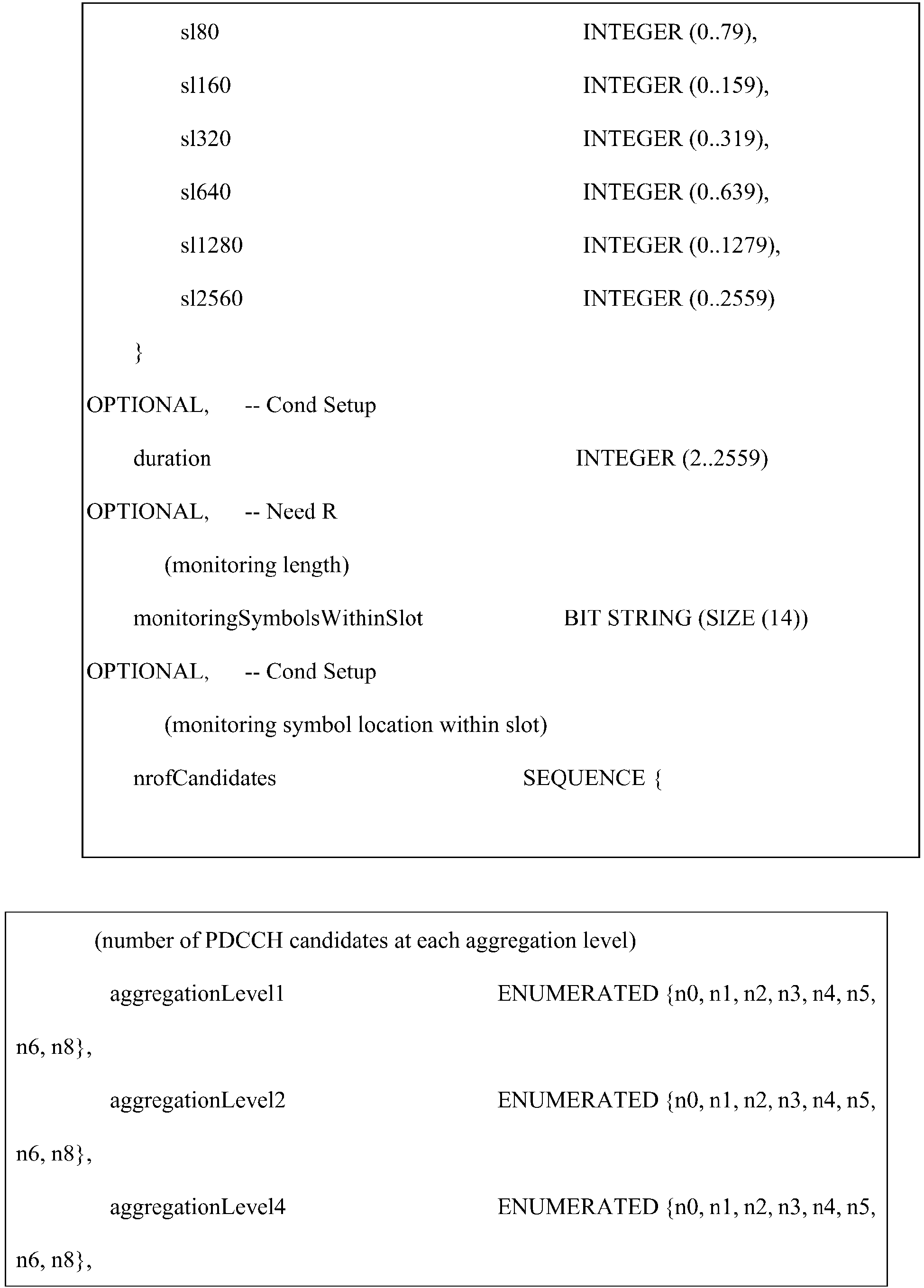

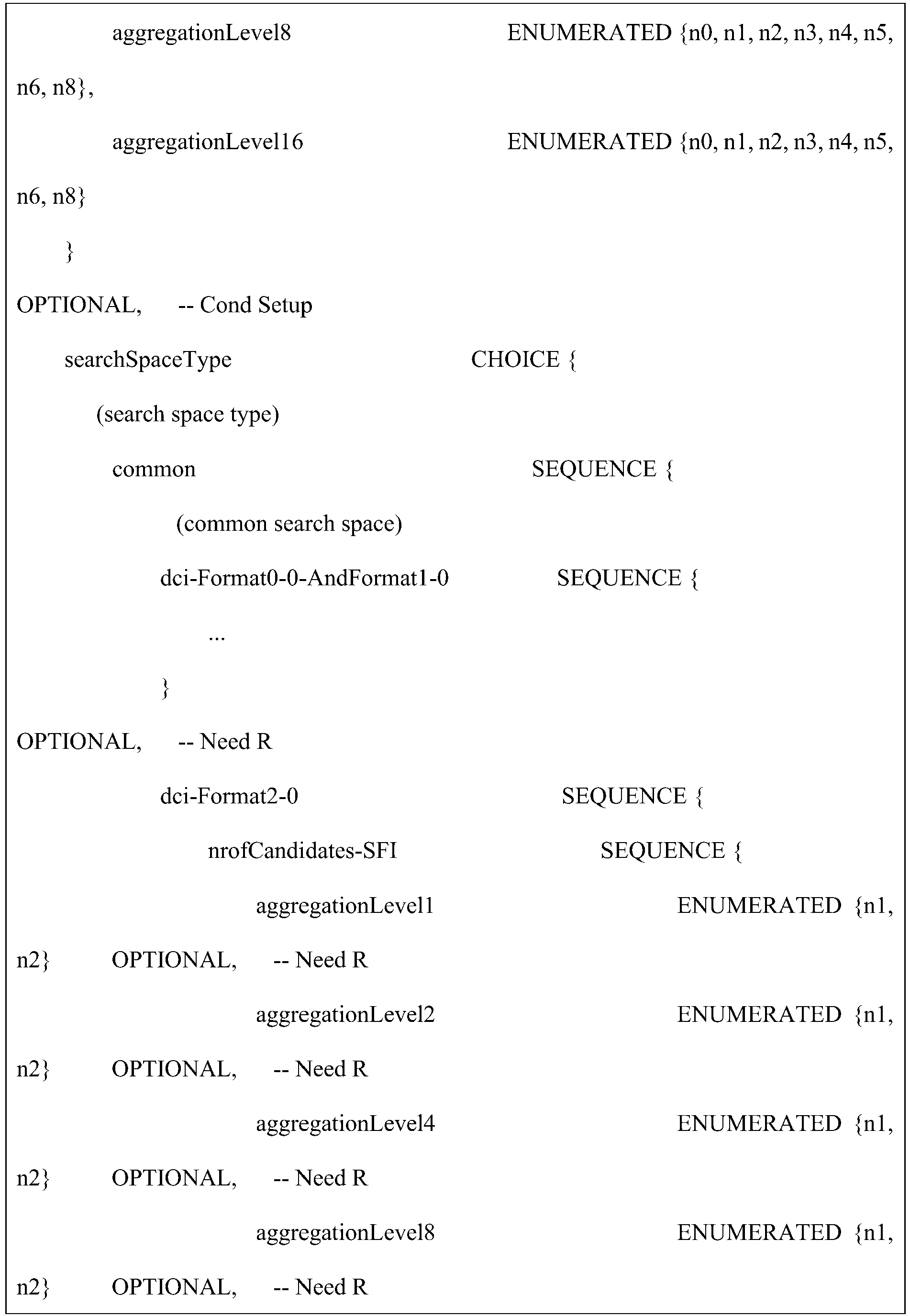

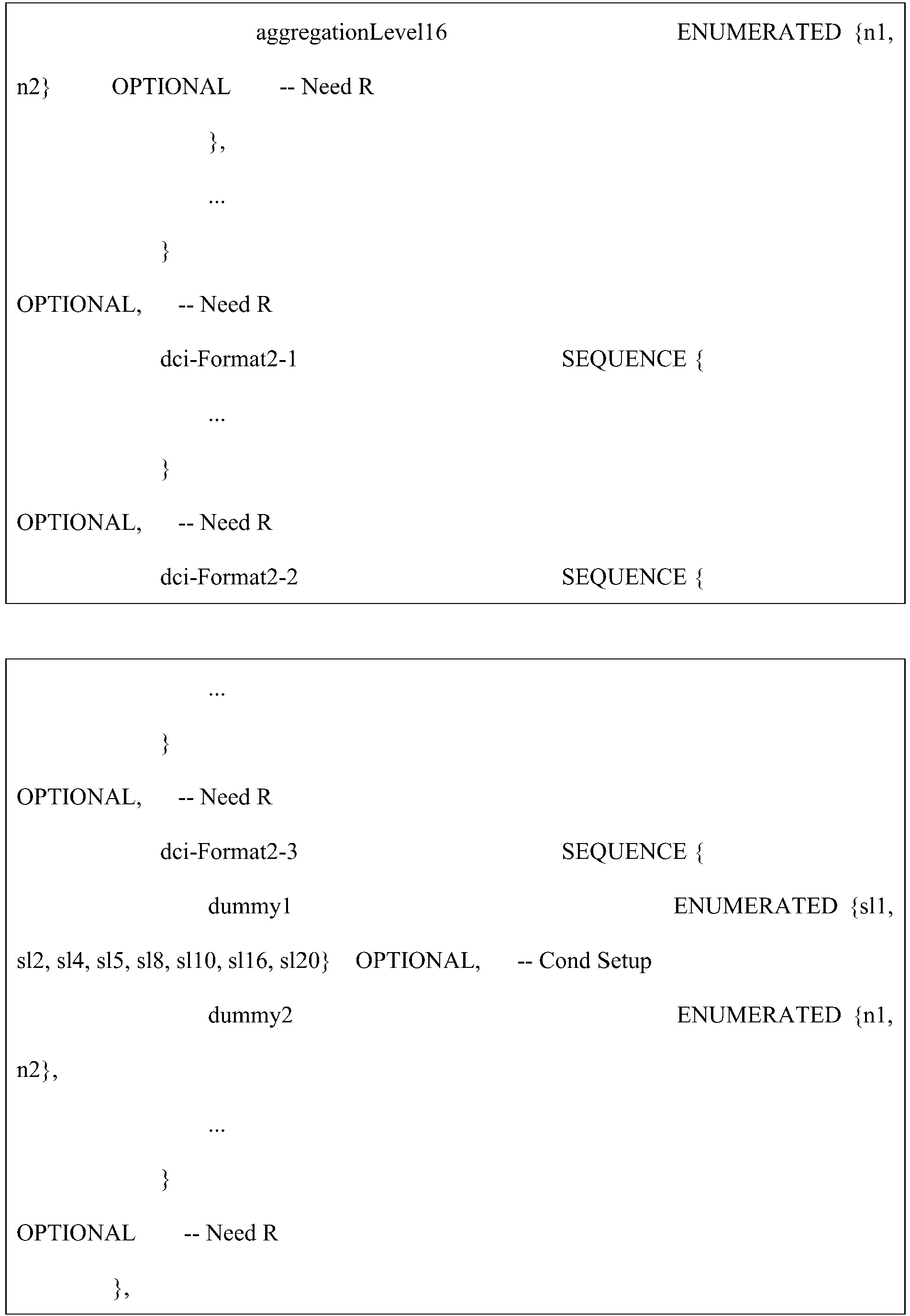

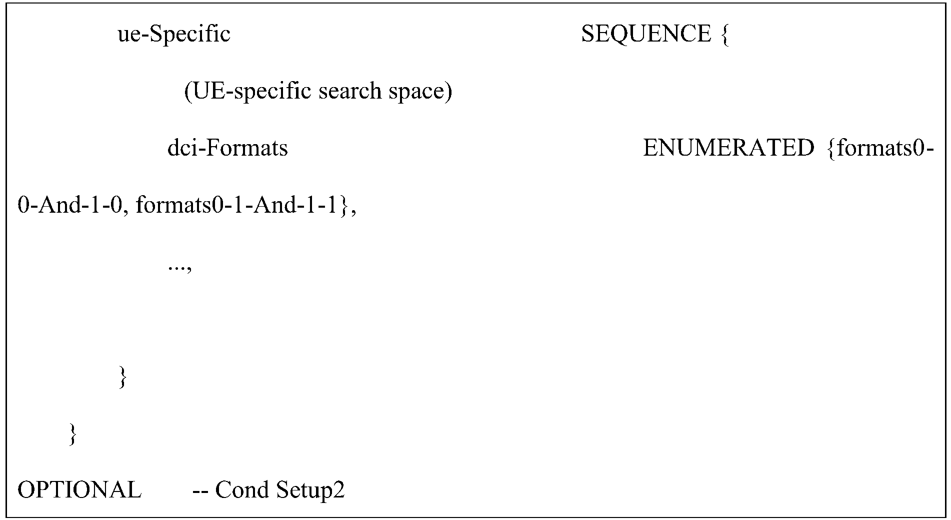

According to configuration information, the base station may configure one or multiple search space sets for the UE. According to some embodiments, the base station may configure search space set 1 and search space set 2 for the UE. In search space set 1, the UE may be configured to monitor DCI format A scrambled by an X-RNTI in a common search space, and in search space set 2, the UE may be configured to monitor DCI format B scrambled by a Y-RNTI in a UE-specific search space.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

In a common search space, the UE may monitor combinations of DCI formats and RNTIs given below. Obviously, the examples given below are not limiting.
- DCI format 0_0/1_0 with cyclic redundancy check (CRC) scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_0 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI
- DCI format 2_4 with CRC scrambled by CI-RNTI
- DCI format 2_5 with CRC scrambled by AI-RNTI
- DCI format 2_6 with CRC scrambled by PS-RNTI
- DCI format 2_7 with CRC scrambled by PEI-RNTI

In the common search space, the UE may monitor the following combinations of DCI formats and RNTIs. Of course, the combinations of the DCI formats and the RNTIs are not limited to the following examples.
- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may follow the following definitions and uses.
Cell RNTI (C-RNTI): For the purpose of UE-specific PDSCH or PUSCH scheduling
Temporary Cell RNTI (TC-RNTI): For the purpose of UE-specific PDSCH scheduling
Configured Scheduling RNTI (CS-RNTI): For the purpose of semi-statistically configured UE-specific PDSCH scheduling

Random Access RNTI (RA-RNTI): For the purpose of PDSCH scheduling during the random access step.

Paging RNTI (P-RNTI): For the purpose of PDSCH scheduling on which the paging is transmitted.

System Information RNTI (SI-RNTI): For the purpose of PDSCH scheduling on which the system information is transmitted.

Interruption RNTI (INT-RNTI): For the purpose of notifying whether puncturing is applied to the PDSCH.

Transmit Power Control for PUSCH RNTI (TPC-PUSCH-RNTI): For the purpose of power control command indication on the PUSCH.

Transmit Power Control for PUCCH RNTI (TPC-PUCCH-RNTI): For the purpose of power control command indication on the PUCCH.

Transmit Power Control for SRS RNTI (TPC-SRS-RNTI): For the purpose of power control command indication on the SRS.

The DCI formats enumerated above may follow the definitions given in Table 7 below.

**[Table 7]**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying paging early indication and TRS availability indication for one or more UEs. |
| 3_0 | Scheduling of NR sidelink in one cell |
| 3_1 | Scheduling of LTE sidelink in one cell |
| 4_0 | Schedulng of PDSCH with CRC scrambled by MCCH-RNTI/G-RNTI for broadcast |
| 4_1 | Schedulng of PDSCH with CRC scrambled by G-RNTI/GCS-RNTI for multicast |
| 4_2 | Schedulng of PDSCH with CRC scrambled by G-RNTI/GCS-RNTI for multicast |

A search space of aggregation level L in CORESET p and search space set s may be expressed as Equation below.$L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{p , s , max}^{\left(L\right)}}\right⌋+{n}_{CI}\right)mod\left⌊\frac{{N}_{CCE , p}}{L}\right⌋\right\} + i$
- L: aggregation level
- *n_{CI}*: carrier index
- *N_{CCE,p}*: total number of CCEs existing in control resource set p
- ${n}_{s , f}^{μ}$: slot index
- ${M}_{p , s , max}^{\left(L\right)}$: number of PDCCH candidates at aggregation level L
- ${m}_{s , {n}_{CI}} = 0 , … , {M}_{p , s , max}^{\left(L\right)} - 1$: PDCCH candidate index at aggregation level L
- *i* = 0, ..., *L-1*
- ${Y}_{p , {n}_{s , f}^{μ}} = \left({A}_{p}⋅{Y}_{p , {n}_{s , f}^{μ} - 1}\right) mod D$, *Y*_{*p,-*1} *= n_{RNTI}* ≠ *0, Aₚ* = 39827, *Aₚ* = 39829, *Aₚ* = 39839, *D* = 65537
- *n_{RNTI}*: UE identity

The ${Y}_{p , {n}_{s , f}^{μ}}$ value may correspond to 0 in the case of a common search space.

The ${Y}_{p , {n}_{s , f}^{μ}}$ value may correspond to a value changed by the UE's ID (C-RNTI or ID configured for the UE by the base station) and the time index in the case of a UE-specific search space.

Hereinafter, a method of configuring a TCI state with regard to a PDCCH (or PDCCH DMRS) in the 5G communication system will be described.

It may be possible for the base station to configure or indicate a TCI state with regard to a PDCCH (or PDCCH DMRS) via appropriate signaling. According to the above description, it may be possible for the base station to configure or indicate a TCI state with regard to a PDCCH (or PDCCH DMRS) via appropriate signaling. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 8 below.

**[Table 8]**

| **QCL type** | **Large-scale characteristics** |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 9 below. Referring to Table 9, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 8 above.

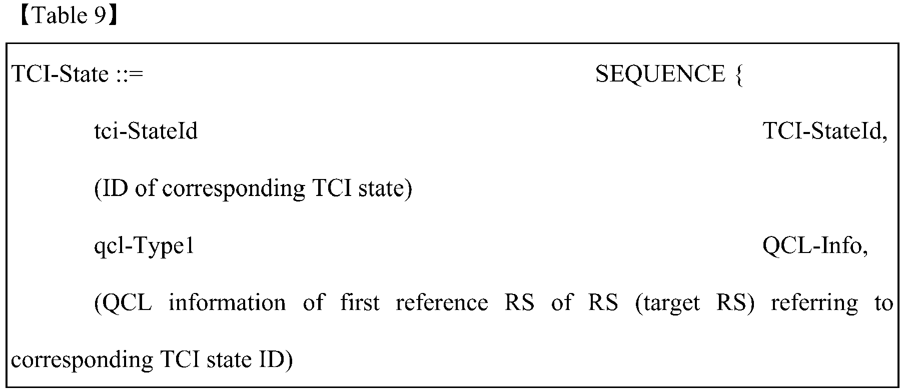

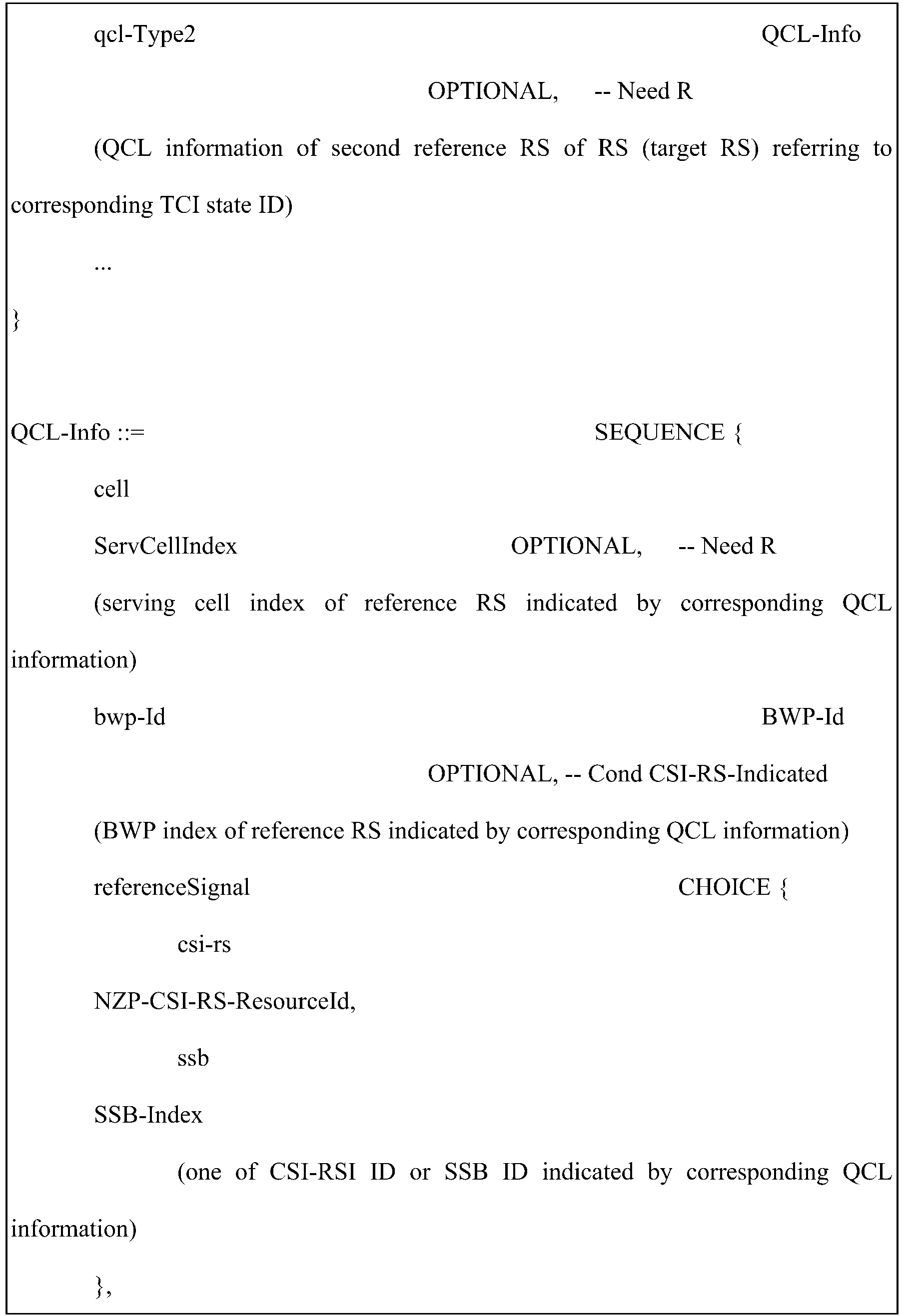

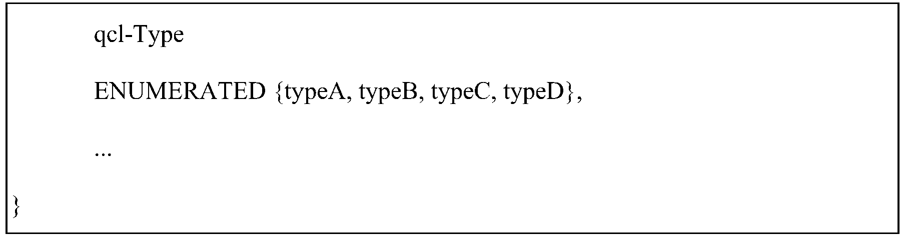

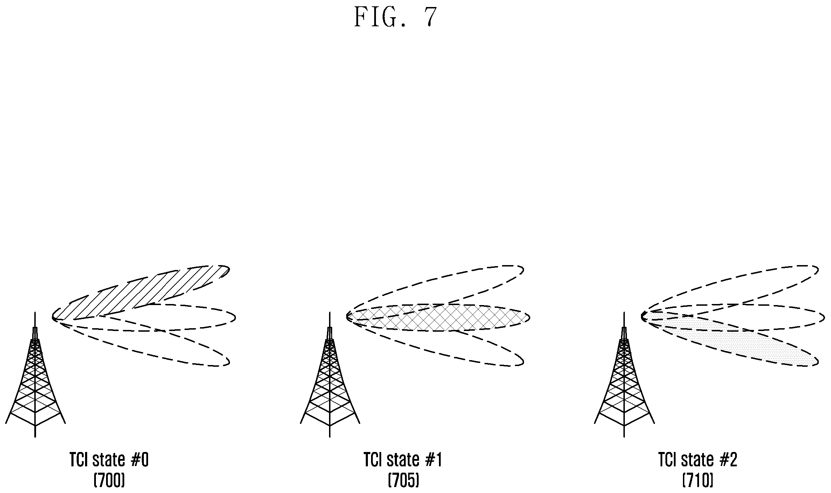

FIG. 7 illustrates base station beam allocation according to a TCI state configuration according to an embodiment of the disclosure.

Referring to FIG. 7, the base station may transfer information regarding N different beams to the UE through N different TCI states. For example, in the case of N=3, the base station may configure qcl-Type2 parameters included in three TCI states 700, 705, and 710 in QCL type D while being associated with CSI-RSs or SSBs corresponding to different beams, thereby notifying that antenna ports referring to the different TCI states 700, 705, and 710 are associated with different spatial Rx parameters (that is, different beams).

Specific TCI state combinations applicable to a PDCCH DMRS antenna port may be given in Table 10 below. The fourth row in Table 10 corresponds to a combination assumed by the UE before RRC configuration, and no configuration is possible after the RRC.

**[Table 10]**

| **Valid TCI state Configuration** | **DL RS 1** | **qcl-Type1** | **DL RS 2 (if configured)** | **qcl-Type2 (if configured)** |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

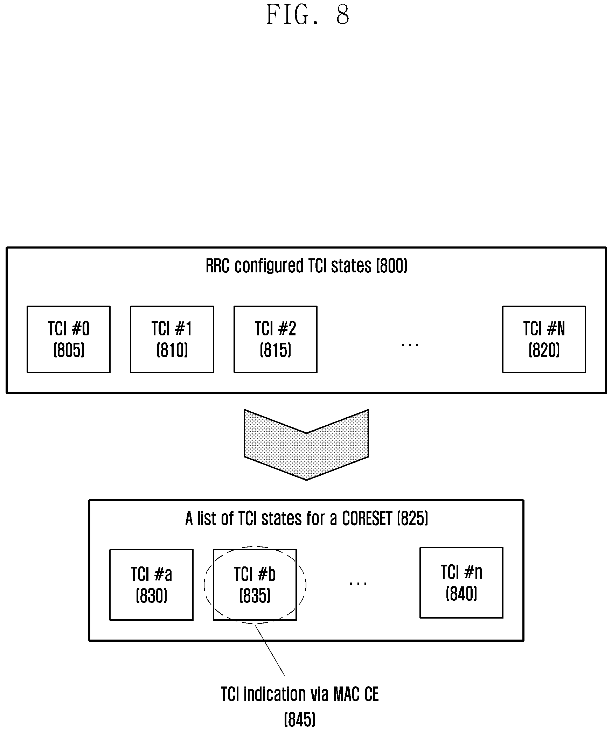

In NR, a hierarchical signaling method as illustrated in FIG. 8 is supported for dynamic allocation regarding a PDCCH beam.

FIG. 8 illustrates a hierarchical signaling method for dynamic allocation with regard to a PDCCH according to an embodiment of the disclosure.

Referring to FIG. 8, the base station may configure N TCI states 805, 810, ..., 820 for the UE through RRC signaling 800, and may configure some thereof as TCI states for a CORESET (825). The base station may then indicate one of the TCI states 830, 835, and 840 for the CORESET to the UE through MAC CE signaling (845). The UE receives a PDCCH based on beam information included in the TCI state indicated by the MAC CE signaling.

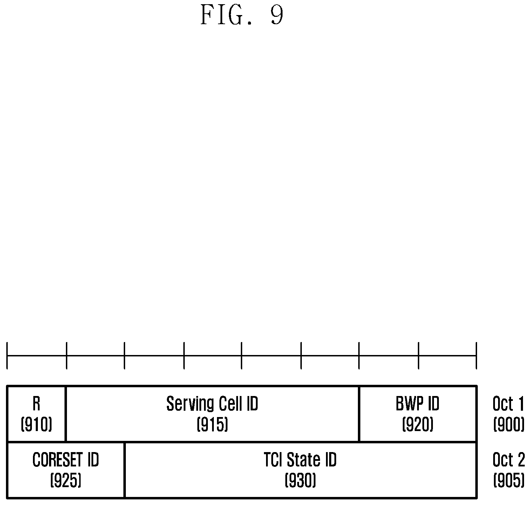

FIG. 9 illustrates a TCI indication MAC CE signaling structure for a PDCCH DMRS according to an embodiment of the disclosure.

Referring to FIG. 9, the TCI indication MAC CE signaling for the PDCCH DMRS is configured by 2 bytes (16bits), and includes a 1-bit reserved bit 910, a 5-bit serving cell ID 915, a 2-bit BWP ID 920, a 2-bit CORESET ID 925, and a 6-bit TCI state ID 930.

The base station may indicate one of TCI state lists included in a CORESET configuration through MAC CE signaling. Until a different TCI state is indicated for the corresponding CORESET through different MAC CE signaling, the UE considers that identical QCL information is applied to all of one or more search spaces connected to the CORESET.

The above-described PDCCH beam allocation method may have a problem in that it is difficult to indicate a beam change faster than MAC CE signaling delay, and the same beam is unilaterally applied to each CORESET regardless of search space characteristics, thereby making flexible PDCCH beam operation difficult. Following embodiments of the disclosure provide a more flexible PDCCH beam configuration and operation method. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. That is, based on the activation command regarding the TCI state received through the MAC CE, the UE may correctly receive the DMRS of the corresponding CORESET, based on QCL information in the activated TCI state.

With regard to a control resource set having a configured index of 0 (control resource set #0), if the UE has failed to receive a MAC CE activation command regarding the TCI state of control resource set #0, the UE may assume that the DMRS transmitted in control resource set #0has been QCL-ed with a SS/PBCH block (SSB) identified in the initial access process or in a non-contention-based random access process not triggered by a PDCCH command.

With regard to a control resource set having a configured index value (X) other than 0 (control resource set #X), if the UE has no TCI state configured regarding control resource set #X, or if the UE has one or more TCI states configured therefor but has failed to receive a MAC CE activation command for activating one of the TCI states, the UE may assume that the DMRS transmitted in control resource set #X has been QCL-ed with a SS/PBCH block identified in the initial access process.

Next, downlink control information (DCI) in the 5G system will be described in detail below.

In the 5G system, scheduling information for uplink data (or physical uplink shared channel (PUSCH)) or downlink data (or physical downlink shared channel (PDSCH)) may be delivered from the base station to the UE via the DCI. The UE may monitor fallback and non-fallback DCI formats on the PUSCH or the PDSCH. The fallback DCI format may be composed of fixed fields predefined between the base station and the UE, and the non-fallback DCI format may include a configurable field.

The DCI may be transmitted via a physical downlink control channel (PDCCH) after being subjected to a channel coding and modulation process. A cyclic redundancy check (CRC) is attached to a DCI message payload, and the CRC may be scrambled by a radio network temporary identifier (RNTI) that corresponds to a UE's identity. Different RNTIs may be used depending on the purpose of the DCI message, such as UE-specific data transmission, power control commands, or random access responses. In other words, the RNTI is not explicitly transmitted, but is included in a CRC calculation process and transmitted. When receiving the DCI message transmitted via the PDCCH, the UE confirms the CRC using the assigned RNTI. When the CRC confirmation result is correct, the UE may know that the corresponding message has been transmitted to the UE.

For example, the DCI scheduling the PDSCH for system information (SI) can be scrambled by SI-RNTI. The DCI scheduling PDSCH for a random access response (RAR) message may be scrambled by RA-RNTI. The DCI scheduling PDSCH for a paging message may be scrambled by P-RNTI. The DCI notifying a slot format indicator (SFI) may be scrambled by SFI-RNTI. The DCI notifying transmit power control (TPC) may be scrambled by TPC-RNTI. The DCI scheduling the UE-specific PDSCH or PUSCH may be scrambled by cell RNTI (C-RNTI).

DCI format 0_0 may be used as fallback DCI for scheduling the PUSCH. In this case, the CRC may be scrambled by the C-RNTI. The DCI format 0_0 with the CRC scrambled by the C-RNTI may include, for example, pieces of information as shown in Table 11 below.

**[Table 11]**

| | |
|---|---|
| - Identifier for DCI formats (DCI format identifier) - 1 bit | |
| | - The value of this bit field is always set to 0, indicating an UL DCI format |
| - Frequency domain resource assignment (frequency domain resource allocation) - $\left⌈{log}_{2}\left({N}_{RB}^{UL , BWP}\left({N}_{RB}^{UL , BWP}+1\right)/2\right)\right⌉$ bits where ${N}_{RB}^{UL , BWP}$ is defined in subclause 7.3.1.0 | |
| | - For PUSCH hopping with resource allocation type 1: |
| | - N_{UL_hop} MSB bits are used to indicate the frequency offset according to Subclause 6.3 of [6, TS 38.214], where *N*_{UL_hop} = 1 if the higher layer par ameter *frequencyHoppingOffsetLists* contains two offset values and N_{UL}_ₕₒₚ = 2 if the higher layer parameter *frequencyHoppingOffsetLists* contai ns four offset values |
| | - $\left⌈{log}_{2}\left({N}_{RB}^{UL , BWP}\left({N}_{RB}^{UL , BWP}+1\right)/2\right)\right⌉ - {N}_{UL _ hop}$ bits provides the frequency domain reso urce allocation according to Subclause 6.1.2.2.2 of [6, TS 38.214] |
| | - For non-PUSCH hopping with resource allocation type 1: - $\left⌈{log}_{2}\left({N}_{RB}^{UL , BWP}\left({N}_{RB}^{UL , BWP}+1\right)/2\right)\right⌉$ bits provides the frequency domain resource all ocation according to Subclause 6.1.2.2.2 of [6, TS 38.214] |
| - Time domain resource assignment (time domain resource allocation)- 4 bits as d efined in Subclause 6.1.2.1 of [6, TS 38.214] | |
| - Frequency hopping flag (Frequency hopping flag) - 1 bit according to Table 7.3.1.1.1-3, as defined in Subclause 6.3 of [6, TS 38.214] | |
| - Modulation and coding scheme (Modulation and coding scheme) - 5 bits as d efined in Subclause 6.1.4.1 of [6, TS 38.214] | |
| - New data indicator (New data indicator) - 1 bit | |
| - Redundancy version (Redundancy version) - 2 bits as defined in Table 7.3.1.1 .1-2 | |
| - HARQ process number (HARQ process number) - 4 bits | |
| | |
| - TPC command for scheduled PUSCH (transmit power control command for scheduled PUSCH) - 2 bits as defined in Subclause 7.1.1 of [5, TS 38.213] | |
| - Padding bits, if required. | |
| - UL/SUL indicator (uplink/Supplementary UL indicator) - 1 bit for UEs configured with *supplementaryUplink* in *ServingCellConfig* in the cell as defined in Table | |
| 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s). | |
| - If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured; | |
| - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured. | |
| - If the UL/SUL indicator is not present in DCI format 0_0 and *pucch-Config* is not configured, the corresponding PUSCH scheduled by the DCI format 0_0 is for the uplink on which the latest PRACH is transmitted. | |

DCI format 0_1 may be used as the non-fallback DCI for scheduling the PUSCH. In this case, the CRC may be scrambled by the C-RNTI. The DCI format 0_1 with the CRC scrambled by the C-RNTI may include, for example, pieces of information as shown in Table 12 below.

**[Table 12]**

| | |
|---|---|
| - Identifier for DCI formats (DCI format identifier) - 1 bit | |
| | - The value of this bit field is always set to 0, indicating an UL DCI format |
| - Carrier indicator (Carrier indicator) - 0 or 3 bits, as defined in Subclause 10.1 of [5, TS38.213]. | |
| - UL/SUL indicator (uplink/Supplementary UL indicator) - 0 bit for UEs not configured with *supplementary Uplink* in *ServingCellConfig* in the cell or UEs configured with *supplementary Uplink* in *ServingCellConfig* in the cell but only PUCCH carrier in the cell is configured for PUSCH transmission; otherwise, 1 bit as defined in Table 7.3.1.1.1-1. | |
| - Bandwidth part indicator (Bandwidth part indicator) - 0, 1 or 2 bits as determined by the number of UL BWPs *n*_{BWP,RRC} configured by higher layers, excluding the initial UL bandwidth part. The bitwidth for this field is determined as $\left⌈{log}_{2}\left({n}_{BWP}\right)\right⌉$ bits, where | |
| | - *n*_{BWP} = *n*_{BWP,RRC} + 1 if *n*_{BWP,RRC} ≤ 3 , in which case the bandwidth part indicator is equivalent to the ascending order of the higher layer parameter *BWP-Id*; |
| | - otherwise *n*_{BWP} = *n*_{BWP,RRC}, in which case the bandwidth part indicator is defined in Table 7.3.1.1.2-1; |
| | If a UE does not support active BWP change via DCI, the UE ignores this bit field. |
| - Frequency domain resource assignment (Frequency domain resource allocation) - number of bits determined by the following, where ${N}_{RB}^{UL , BWP}$ is the size of the active UL bandwidth part: | |
| | - *N*_{RBG} bits if only resource allocation type 0 is configured, where *N*_{RBG} is defined in Subclause 6.1.2.2.1 of [6, TS 38.214], |
| | - $\left⌈{log}_{2}\left({N}_{RB}^{UL , BWP}\left({N}_{RB}^{UL , BWP}+1\right)/2\right)\right⌉$ bits if only resource allocation type 1 is configured, or $max \left(\left⌈{log}_{2}\left({N}_{RB}^{UL , BWP}\left({N}_{RB}^{UL , BWP}+1\right)/2\right)\right⌉, {N}_{RBG}\right) + 1$ bits if both resource allocation type 0 and 1 are configured. |
| | |
| | - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1. |
| | - For resource allocation type 0, the *N*_{RBG} LSBs provide the resource allocation as defined in Subclause 6.1.2.2.1 of [6, TS 38.214]. |
| - For resource allocation type 1, the $\left⌈{log}_{2}\left({N}_{RB}^{UL , BWP}\left({N}_{RB}^{UL , BWP}+1\right)/2\right)\right⌉$ LSBs provide the resource allocation as follows: | |
| | - For PUSCH hopping with resource allocation type 1: |
| | - *N*_{UL_hop} MSB bits are used to indicate the frequency offset according to Subclause 6.3 of [6, TS 38.214], where *N*_{UL_hop}= 1 if the higher layer parameter *frequencyHoppingOffsetLists* contains two offset values and *N*_{UL_hop} = 2 if the higher layer parameter *frequencyHoppingOffsetLists* contains four offset values |
| | - $\left⌈{log}_{2}\left({N}_{RB}^{UL , BWP}\left({N}_{RB}^{UL , BWP}+1\right)/2\right)\right⌉ - {N}_{UL _ hop}$ bits provides the frequency domain resource allocation according to Subclause 6.1.2.2.2 of [6, TS 38.214] |
| | - For non-PUSCH hopping with resource allocation type 1: |
| | - $\left⌈{log}_{2}\left({N}_{RB}^{UL , BWP}\left({N}_{RB}^{UL , BWP}+1\right)/2\right)\right⌉$ bits provides the frequency domain resource allocation according to Subclause 6.1.2.2.2 of [6, TS 38.214] If "Bandwidth part indicator" field indicates a bandwidth part other than the active bandwidth part and if both resource allocation type 0 and 1 are configured for the indicated bandwidth part, the UE assumes resource allocation type 0 for the |
| | indicated bandwidth part if the bitwidth of the "Frequency domain resource assignment" field of the active bandwidth part is smaller than the bitwidth of the "Frequency domain resource assignment" field of the indicated bandwidth part. |
| - Time domain resource assignment (Time domain resource allocation) - 0, 1, 2, 3, or 4 bits as defined in Subclause 6.1.2.1 of [6, TS38.214]. The bitwidth for this field is determined as $\left⌈{log}_{2}\left(I\right)\right⌉$ bits, where *I* is the number of entries in the higher | |
| | |
| layer parameter *pusch-TimeDomainAllocationList* if the higher layer parameter is configured; otherwise *I* is the number of entries in the default table. | |
| - Frequency hopping flag (Frequency hopping flag) - 0 or 1 bit: | |
| | - 0 bit if only resource allocation type 0 is configured or if the higher layer parameter *frequencyHopping* is not configured; |
| | - 1 bit according to Table 7.3.1.1.1-3 otherwise, only applicable to resource allocation type 1, as defined in Subclause 6.3 of [6, TS 38.214]. |
| - Modulation and coding scheme (Modulation and coding scheme)- 5 bits as defined in Subclause 6.1.4.1 of [6, TS 38.214] | |
| - New data indicator (New data indicator) - 1 bit | |
| - Redundancy version (Redundancy version) - 2 bits as defined in Table 7.3.1.1.1-2 | |
| - HARQ process number (HARQ process number) - 4 bits | |
| - 1^{st} downlink assignment index (first downlink assignment index) - 1 or 2 bits: | |
| | - 1 bit for semi-static HARQ-ACK codebook; |
| | - 2 bits for dynamic HARQ-ACK codebook. |
| - 2^{nd} downlink assignment index (second downlink assignment index) - 0 or 2 bits: | |
| | - 2 bits for dynamic HARQ-ACK codebook with two HARQ-ACK sub-codebooks; |
| | - 0 bit otherwise. |
| - TPC command for scheduled PUSCH (transmit power control command for scheduled PUSCH) - 2 bits as defined in Subclause 7.1.1 of [5, TS38.213] | |
| - SRS resource indicator (Sounding Reference Signal (SRS) resource indicator) - $\left⌈{log}_{2}\left({\sum }_{k = 1}^{min \left\{{L}_{max}, {N}_{SRS}\right\}} \left(\begin{matrix}{N}_{SRS} \\ k\end{matrix}\right)\right)\right⌉$ or $\left⌈{log}_{2}\left({N}_{SRS}\right)\right⌉$ bits, where *N*_{SRS} is the number of configured SRS resources in the SRS resource set associated with the higher layer parameter *usage* of value *'codeBook'* or *'nonCodeBook',* | |
| | - $\left⌈{log}_{2}\left({\sum }_{k = 1}^{min \left\{{L}_{max}, {N}_{SRS}\right\}} \left(\begin{matrix}{N}_{SRS} \\ k\end{matrix}\right)\right)\right⌉$ bits according to Tables 7.3.1.1.2-28/29/30/31 if the higher layer parameter *txConfig = nonCodebook,* where *N*_{SRS} is the number of |
| | configured SRS resources in the SRS resource set associated with the higher layer parameter *usage* of value *'nonCodeBook' and* |
| | |
| | - if UE supports operation with *maxMIMO-Layers* and the higher layer parameter *maxMIMO-Layers* of *PUSCH-ServingCellConfig* of the serving cell is configured, *Lₘₐₓ* is given by that parameter |
| | - otherwise, *Lₘₐₓ* is given by the maximum number of layers for PUSCH supported by the UE for the serving cell for non-codebook based operation. |
| | - $\left⌈{log}_{2}\left({N}_{SRS}\right)\right⌉$ bits according to Tables 7.3.1.1.2-32 if the higher layer parameter *txConfig = codebook,* where *N*_{SRS} is the number of configured SRS resources in the SRS resource set associated with the higher layer parameter *usage* of value *'codeBook'.* |
| - Precoding information and number of layers (Precoding information and number of layers) - number of bits determined by the following: | |
| | - 0 bits if the higher layer parameter *txConfig = nonCodeBook;* |
| | - 0 bits for 1 antenna port and if the higher layer parameter *txConfig = codebook;* |
| | - 4, 5, or 6 bits according to Table 7.3.1.1.2-2 for 4 antenna ports, if *txConfig = codebook,* and according to whether transform precoder is enabled or disabled, and the values of higher layer parameters *maxRank, and codebookSubset;* |
| | - 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset*; |
| | - 2 or 4 bits according to Table7.3.1.1.2-4 for 2 antenna ports, if *txConfig = codebook,* and according to whether transform precoder is enabled or disabled, and the values of higher layer parameters *maxRank* and *codebookSubset*; |
| | - 1 or 3 bits according to Table7.3.1.1.2-5 for 2 antenna ports, if *txConfig = codebook,* and according to whether transform precoder is enabled or disabled, and the values of higher layer parameters *maxRank* and *codebookSubset.* |
| - Antenna ports (Antenna ports) - number of bits determined by the following | |
| | |
| | - 2 bits as defined by Tables 7.3.1.1.2-6, if transform precoder is enabled, *dmrs-Type=*1*,* and *maxLength*=1; |
| - 4 bits as defined by Tables 7.3.1.1.2-7, if transform precoder is enabled, *dmrs-Type*=1, and *maxLength*=2; | |
| - 3 bits as defined by Tables 7.3.1.1.2-8/9/10/11, if transform precoder is disabled, *dmrs-Type*=1, and *maxLength*=1, and the value of rank is determined according to the SRS resource indicator field if the higher layer parameter *txConfig = nonCodebook* and according to the Precoding information and number of layers field if the higher layer parameter *txConfig = codebook;* | |
| - 4 bits as defined by Tables 7.3.1.1.2-12/13/14/15, if transform precoder is disabled, *dmrs-Type*=1, and *maxLength*=2, and the value of rank is determined according to the SRS resource indicator field if the higher layer parameter *txConfig* = *nonCodebook* and according to the Precoding information and number of layers field if the higher layer parameter *txConfig = codebook;* | |
| - 4 bits as defined by Tables 7.3.1.1.2-16/17/18/19, if transform precoder is disabled, *dmrs-Type*=2, and *maxLength*=1, and the value of rank is determined according to the SRS resource indicator field if the higher layer parameter *txConfig =* | |
| | *nonCodebook* and according to the Precoding information and number of layers field if the higher layer parameter *txConfig = codebook;* |
| | - 5 bits as defined by Tables 7.3.1.1.2-20/21/22/23, if transform precoder is disabled, *dmrs-Type*=2, and *maxLength*=2, and the value of rank is determined according to the SRS resource indicator field if the higher layer parameter *txConfig = nonCodebook* and according to the Precoding information and number of layers field if the higher layer parameter *txConfig = codebook.* |
| | where the number of CDM groups without data of values 1, 2, and 3 in Tables 7.3.1.1.2-6 to 7.3.1.1.2-23 refers to CDM groups {0}, {0,1}, and {0, 1,2} respectively. |
| If a UE is configured with both *dmrs-UplinkForPUSCH-MappingTypeA* and *dmrs-UplinkForPUSCH-MappingTypeB,* the bitwidth of this field equals | |
| | |
| | max{*x_{A}*,*x_{B}*} , where *x_{A}* is the "Antenna ports" bitwidth derived according to *dmrs-UplinkForPUSCH-MappingTypeA* and *x_{B}* is the "Antenna ports" bitwidth derived according to *dmrs-UplinkForPUSCH-MappingTypeB.* A number of \|*x_{A} -x_{B}*\| zeros are padded in the MSB of this field, if the mapping type of the PUSCH corresponds to the smaller value of *x_{A}* and *x_{B}*. |
| - SRS request (SRS request) - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214]. | |
| - CSI request (Channel State Information (CSI) request) - 0, 1, 2, 3, 4, 5, or 6 bits determined by higher layer parameter *reportTriggerSize.* | |
| - CBG transmission information (CBGTI) (Code Block Group (CBG) transmission information) - 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH. | |
| - PTRS-DMRS association (Phase Tracking Reference Signal)- Demodulation Reference Signal association) - number of bits determined as follows | |
| | - 0 bit if *PTRS-UplinkConfig* is not configured and transform precoder is disabled, or if transform precoder is enabled, or if *maxRank=1;* |
| | - 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field. |
| If "Bandwidth part indicator" field indicates a bandwidth part other than the active bandwidth part and the "PTRS-DMRS association" field is present for the indicated bandwidth part but not present for the active bandwidth part, the | |
| | |
| | UE assumes the "PTRS-DMRS association" field is not present for the indicate d bandwidth part. |
| - beta_offset indicator (beta_offset indicator) - 0 if the higher layer parameter b *etaOffsets = semiStatic;* otherwise 2 bits as defined by Table 9.3-3 in [5, TS 38.213]. | |
| - DMRS sequence initialization (DMRS sequence initialization) - 0 bit if transfo rm precoder is enabled; 1 bit if transform precoder is disabled. | |
| - UL-SCH indicator (uplink data channel (UL-SCH) indicator) - 1 bit. A value of "1" indicates UL-SCH shall be transmitted on the PUSCH and a value of "0" | |
| indicates UL-SCH shall not be transmitted on the PUSCH. Except for DCI fo rmat 0_1 with CRC scrambled by SP-CSI-RNTI, a UE is not expected to rec eive a DCI format 0_1 with UL-SCH indicator of "0" and CSI request of all zero(s). | |

DCI format 1_0 may be used as the fallback DCI for scheduling the PDSCH. In this case, the CRC may be scrambled by the C-RNTI. The DCI format 1_0 with the CRC scrambled by the C-RNTI may include, for example, pieces of information as shown in Table 13 below.

**[Table 13]**

| | |
|---|---|
| - Identifier for DCI formats (DCI format identifier) - 1 bits | |
| | - The value of this bit field is always set to 1, indicating a DL DCI format |
| - Frequency domain resource assignment (Frequency domain resource allocation) - $\left⌈{log}_{2}\left({N}_{RB}^{DL , BWP}\left({N}_{RB}^{DL , BWP}+1\right)/2\right)\right⌉$ bits where ${N}_{RB}^{DL , BWP}$ is given by subclause 7.3.1.0 If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows: | |
| - Random Access Preamble index (Random Access Preamble index) - 6 bits according to *ra-PreambleIndex* in Subclause 5.1.2 of [8, TS38.321] | |
| - UL/SUL indicator (uplink/Supplementary UL indicator) - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved | |
| - SS/PBCH index (Synchronization Signal (SS)/broadcast channel(Physical Broadcast Channel; PBCH) index)- 6 bits. If the value of the "Random Access Preamble index" is not all zeros, this field indicates the SS/PBCH that shall be used to determine the RACH occasion for the PRACH transmission; otherwise, this field is reserved. | |
| - PRACH Mask index (random access channel (Physical Random Access Channel; PRACH) mask index)- 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved | |
| - Reserved bits (Reserved bits) - 10 bits | |
| Otherwise, all remaining fields are set as follows: | |
| - Time domain resource assignment (Time domain resource allocation) - 4 bits as defined in Subclause 5.1.2.1 of [6, TS 38.214] | |
| - VRB-to-PRB mapping (virtual resource block-to- physical resource block mapping) - 1 bit according to Table 7.3.1.2.2-5 | |
| - Modulation and coding scheme (Modulation and coding scheme) - 5 bits as defined in Subclause 5.1.3 of [6, TS 38.214] | |
| - New data indicator (New data indicator) - 1 bit | |
| - Redundancy version (Redundancy version) - 2 bits as defined in Table 7.3.1.1.1-2 | |
| - HARQ process number (HARQ process number) - 4 bits | |
| - Downlink assignment index (Downlink assignment index) - 2 bits as defined in Subclause 9.1.3 of [5, TS 38.213], as counter DAI | |
| - TPC command for scheduled PUCCH (Transmit power control command for scheduled PUCCH) - 2 bits as defined in Subclause 7.2.1 of [5, TS 38.213] | |
| - PUCCH resource indicator (PUCCH resource indicator) - 3 bits as defined in Subclause 9.2.3 of [5, TS 38.213] | |
| - PDSCH-to-HARQ_feedback timing indicator (PDSCH-to-HARQ feedback timing indicator) - 3 bits as defined in Subclause 9.2.3 of [5, TS38.213] | |

DCI format 1_1 may be used as the non-fallback DCI for scheduling the PDSCH. In this case, the CRC may be scrambled by the C-RNTI. The DCI format 1_1 with the CRC scrambled by the C-RNTI may include, for example, pieces of information as shown in Table 14 below.

**[Table 14]**

| | |
|---|---|
| - Identifier for DCI formats (DCI format identifier) - 1 bits | |
| | - The value of this bit field is always set to 1, indicating a DL DCI format |
| - Carrier indicator (Carrier indicator) - 0 or 3 bits as defined in Subclause 10.1 of [5, TS 38.213]. | |
| - Bandwidth part indicator (Bandwidth part indicator) - 0, 1 or 2 bits as determined by the number of DL BWPs *n*_{BWP,RRC} configured by higher layers, excluding the initial DL bandwidth part. The bitwidth for this field is determined as $\left⌈{log}_{2}\left({n}_{BWP}\right)\right⌉$ bits, where | |
| | - *n*_{BWP} = *n*_{BWP,RRC} +1 if *n*_{BWP,RRC} ≤3 , in which case the bandwidth part indicator is equivalent to the ascending order of the higher layer parameter *BWP-Id;* |
| | - otherwise *n*_{BWP} = *n*_{BWP,RRC}, in which case the bandwidth part indicator is defined in Table 7.3.1.1.2-1; |
| | If a UE does not support active BWP change via DCI, the UE ignores this bit field. |
| - Frequency domain resource assignment (Frequency domain resource allocation) - number of bits determined by the following, where ${N}_{RB}^{DL , BWP}$ is the size of the active DL bandwidth part: | |
| | - *N*_{RBG} bits if only resource allocation type 0 is configured, where *N*_{RBG} is defined in Subclause 5.1.2.2.1 of [6, TS38.214], |
| | - $\left⌈{log}_{2}\left({N}_{RB}^{DL , BWP}\left({N}_{RB}^{DL , BWP}+1\right)/2\right)\right⌉$ bits if only resource allocation type 1 is configured, or |
| | - $max \left(\left⌈{log}_{2}\left({N}_{RB}^{DL , BWP}\left({N}_{RB}^{DL , BWP}+1\right)/2\right)\right⌉, {N}_{RBG}\right) + 1$ bits if both resource allocation type 0 and 1 are configured. |
| | - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1. |
| | |
| | - For resource allocation type 0, the *N*_{RBG} LSBs provide the resource allocation as defined in Subclause 5.1.2.2.1 of [6, TS 38.214]. |
| | - For resource allocation type 1, the $\left⌈{log}_{2}\left({N}_{RB}^{DL , BWP}\left({N}_{RB}^{DL , BWP}+1\right)/2\right)\right⌉$ LSBs provide the resource allocation as defined in Subclause 5.1.2.2.2 of [6, TS 38.214] |
| | If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part. |
| - Time domain resource assignment (Time domain resource allocation) - 0, 1, 2, 3, or 4 bits as defined in Subclause 5.1.2.1 of [6, TS 38.214]. The bitwidth for this field is determined as $\left⌈{log}_{2}\left(I\right)\right⌉$ bits, where I is the number of entries in the higher layer parameter *pdsch-TimeDomainAllocationList* if the higher layer parameter is configured; otherwise I is the number of entries in the default table. | |
| - VRB-to-PRB mapping (virtual resource block-to-physical resource block mapping) - 0 or 1 bit: | |
| | - 0 bit if only resource allocation type 0 is configured or if interleaved VRB-to-PRB mapping is not configured by high layers; |
| | - 1 bit according to Table 7.3.1.2.2-5 otherwise, only applicable to resource allocation type 1, as defined in Subclause 7.3.1.6 of [4, TS 38.211]. |
| - PRB bundling size indicator (PRB bundling size indicator) - 0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214]. | |
| - Rate matching indicator (Rate matching indicator) - 0, 1, or 2 bits according to higher layer parameters *rateMatchPatternGroupl* and *rateMatchPatternGroup2,* where the MSB is used to indicate | |
| | |
| *rateMatchPatternGroupl* and the LSB is used to indicate *rateMatchPatternGroup2* when there are two groups. | |
| - ZP CSI-RS trigger (zero power channel state information reference signal trigger) - 0, 1, or 2 bits as defined in Subclause 5.1.4.2 of [6, TS 38.214]. The bitwidth for this field | |
| | is determined as $\left⌈{log}_{2}\left({n}_{ZP}+1\right)\right⌉$ bits, where *n_{ZP}* is the number of aperiodic ZP CSI-RS resource sets configured by higher layer. |
| For transport block 1 (first transport block): | |
| | - Modulation and coding scheme (Modulation and coding scheme) - 5 bits as defined in Subclause 5.1.3.1 of [6, TS 38.214] |
| | - New data indicator (New data indicator) - 1 bit |
| - Redundancy version (Redundancy version) - 2 bits as defined in Table 7.3.1.1.1-2 For transport block 2 (only present if *maxNrofCodeWordsScheduledByDCI* equals 2) (second transport block): | |
| | - Modulation and coding scheme (Modulation and coding scheme) - 5 bits as defined in Subclause 5.1.3.1 of [6, TS 38.214] |
| | - New data indicator (New data indicator) - 1 bit |
| | - Redundancy version (Redundancy version) - 2 bits as defined in Table 7.3.1.1.1-2 If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the |
| | active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part. |
| - HARQ process number (HARQ process number) - 4 bits | |
| - Downlink assignment index (Downlink assignment index) - number of bits as defined in the following | |
| | |
| | - 4 bits if more than one serving cell are configured in the DL and the higher layer parameter *pdsch-HARQ-ACK-Codebook=dynamic,* where the 2 MSB bits are the counter DAI and the 2 LSB bits are the total DAI; |
| | - 2 bits if only one serving cell is configured in the DL and the higher layer parameter *pdsch-HARQ-ACK-Codebook=dynamic,* where the 2 bits are the counter DAI; |
| | - 0 bits otherwise. |
| - TPC command for scheduled PUCCH (Transmit power control command for scheduled PUCCH)- 2 bits as defined in Subclause 7.2.1 of [5, TS 38.213] | |
| - PUCCH resource indicator (PUCCH resource indicator) - 3 bits as defined in Subclause 9.2.3 of [5, TS 38.213] | |
| - PDSCH-to-HARQ_feedback timing indicator (PDSCH-to-HARQ timing indicator) - 0, 1, 2, or 3 bits as defined in Subclause 9.2.3 of [5, TS 38.213]. The bitwidth for this field is determined as $\left⌈{log}_{2}\left(I\right)\right⌉$ bits, where *I* is the number of entries in the higher layer parameter *dl-DataToUL-ACK.* | |
| - Antenna port(s) (Antenna port(s)) - 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports {*p*_{0,...,} *p*_{*υ*-1}} shall be determined according to the ordering of DMRS port(s) given by Tables 7.3.1.2.2-1/2/3/4. | |
| If a UE is configured with both *dmrs-DownlinkForPDSCH-MappingTypeA* and *dmrs-DownlinkForPDSCH-MappingTypeB,* the bitwidth of this field equals max{*x_{A},x_{B}*}, where *x_{A}* is the "Antenna ports" bitwidth derived according to *dmrs-* | |
| | *DownlinkForPDSCH-MappingTypeA* and *x_{B}* is the "Antenna ports" bitwidth derived according to *dmrs-DownlinkForPDSCH-MappingTypeB.* A number of \|*x_{A} -x_{B}*\| zeros are padded in the MSB of this field, if the mapping type of the PDSCH corresponds to the smaller value of *x_{A}* and *x_{B}*. |
| - Transmission configuration indication (Transmission configuration indication) - 0 bit if higher layer parameter *tci-PresentInDCI* is not enabled; otherwise 3 bits as defined in Subclause 5.1.5 of [6, TS38.214]. | |
| | |
| | If "Bandwidth part indicator" field indicates a bandwidth part other than the active bandwidth part, |
| | - if the higher layer parameter *tci-PresentInDCI* is not enabled for the CORESET used for the PDCCH carrying the DCI format 1_1, |
| | - the UE assumes *tci-PresentInDCI* is not enabled for all CORESETs in the indicated bandwidth part; |
| | - otherwise, |
| | - the UE assumes *tci-PresentInDCI* is enabled for all CORESETs in the indicated bandwidth part. |
| - SRS request (SRS request) - 2 bits as defined by Table 7.3.1.1.2-24 for UEs not configured with *supplementary Uplink* in *ServingCellConfig* in the cell; 3 bits for UEs configured with *supplementary Uplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214]. | |
| - CBG transmission information (CBGTI) (Code block group transmission information) - 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH. | |
| - CBG flushing out information (CBGFI) (Code block group flushing out information) | |
| | - 1 bit if higher layer parameter *codeBlockGroupFlushlndicator* is configured as "TRUE", 0 bit otherwise. |
| - DMRS sequence initialization (DMRS sequence initialization) - 1 bit. | |

The following describes a time domain resource allocation method for data channels in the 5G communication system.

The base station may configure, for the UE, a table for time domain resource allocation information for the downlink data channel (physical downlink shared channel (PDSCH) and the uplink data channel (physical uplink shared channel (PUSCH)) via the higher layer signaling (e.g., the RRC signaling). For the PDSCH, a table composed of up to maxNrofDL-Allocations=16 entries may be configured, and for the PUSCH, a table composed of up to maxNrofUL-Allocations=16 entries may be configured. For example, the time domain resource allocation information may include PDCCH-to-PDSCH slot timing (corresponding to a time interval in slot units between a time point at which the PDCCH is received and a time point at which the PDSCH scheduled by the received PDCCH is transmitted, which is denoted as K0), PDCCH-to-PUSCH slot timing (corresponding to a time interval in slot units between a time point at which the PDCCH is received and a time point at which the PUSCH scheduled by the received PDCCH is transmitted, which is denoted as K2), information on a start symbol position and length for which the PDSCH or the PUSCH is scheduled within a slot, a mapping type of the PDSCH or the PUSCH, etc. For example, the pieces of information as shown in Tables 15 and 16 below may be notified from the base station to the UE.

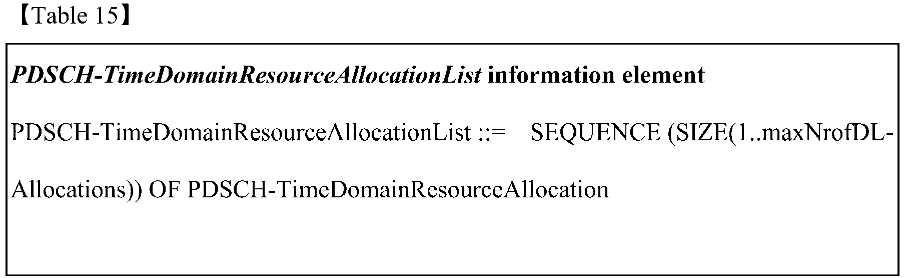

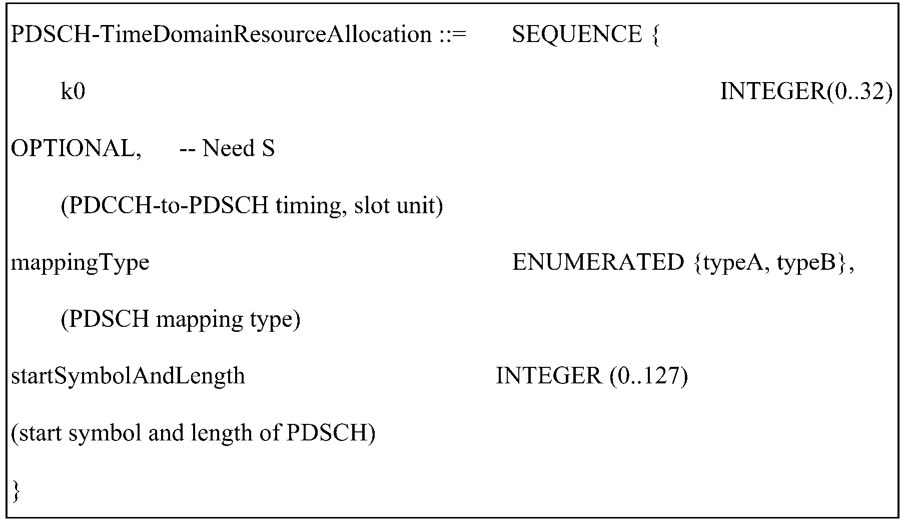

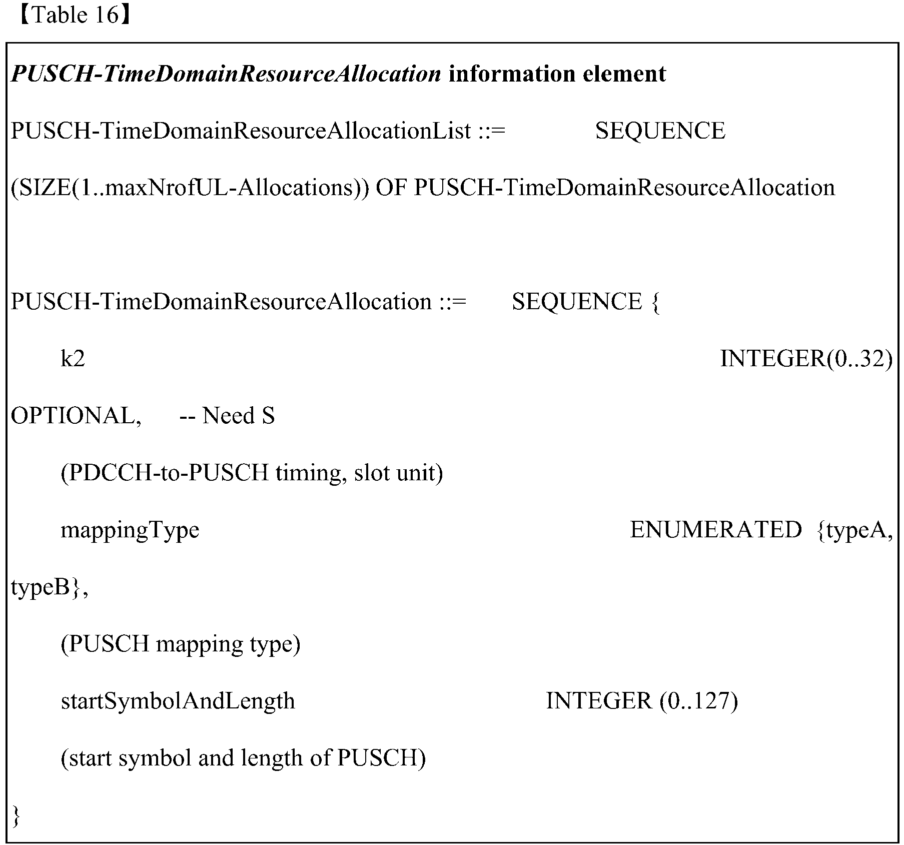

The base station may notify the UE of one of the entries in the table for the time domain resource allocation information via L1 signaling (e.g., DCI) (e.g., indicated by the 'time domain resource allocation' field in the DCI). The UE may acquire the time domain resource allocation information for the PDSCH or the PUSCH based on the DCI received from the base station.

The following describes a frequency domain resource allocation method for data channels in the 5G communication system.

In the 5G, two types, resource allocation type 0 and resource allocation type 1, are supported as a method for indicating frequency domain resource allocation information for a downlink data channel (physical downlink shared channel; PDSCH) and an uplink data channel (physical uplink shared channel; PUSCH).

### Resource Allocation Type 0

RB allocation information may be notified from the base station to the UE in the form of a bitmap for a resource block group (RBG). In this case, the RGB may be composed of a set of consecutive virtual RBs (VRBs), and a size *P* of the RGB may be determined based on a value configured by a higher layer parameter *(rbg-Size)* and a size value of a bandwidth part defined in Table 17 below.

**[Table 17]**

| **Bandwidth Part Size** | **Configuration 1** | **Configuration 2** |
|---|---|---|
| 1 - 36 | 2 | 4 |
| 37 - 72 | 4 | 8 |
| 73 - 144 | 8 | 16 |
| 145 - 275 | 16 | 16 |

- The total number of RGBs (N_{RBG}) in bandwidth part i whose size is ${N}_{{BWP}_{i}}^{size}$*,* may be defined as follows:
   ■ : ${N}_{RBG} = \left⌈{N}_{{BWP}_{i}}^{size}+\left({N}_{{BWP}_{i}}^{start} mod P\right)\right⌉ / P$, where
      ◆ the size of the first RBG is ${RBG}_{0}^{size} = P - \left({N}_{{BWP}_{i}}^{start} mod P\right)$*,*
      ◆ the size of last RBG is ${RBG}_{last}^{size} = \left({N}_{{BWP}_{i}}^{start}+{N}_{{BWP}_{i}}^{start}\right) mod P$, if $\left({N}_{{BWP}_{i}}^{start}+{N}_{{BWP}_{i}}^{start}\right) mod P > 0$ and P otherwise,
      ◆ the size of all other RBGs is P.
- Each bit of a bitmap of N_{RBG} bit size may correspond to each RGB. The RGBs may be assigned an index in increasing order of frequency, starting from the lowest frequency position of the bandwidth part. For N_{RBG} RGBs within the bandwidth part, RGB#0 to RGB#(N_{RBG}-1) may be mapped from the MSB to the LSB of the RGB bitmap. When a specific bit value within the bitmap is 1, the UE may determine that an RBG corresponding to the corresponding bit value is allocated and when the specific bit value within the bitmap is 0, the UE may determine that the RBG corresponding to the corresponding bit value is not allocated.

### Resource Allocation Type 1

- The RB allocation information may be notified from the base station to the UE as information on a start position and length of consecutively allocated VRBs. In this case, interleaving or non-interleaving may be additionally applied to the consecutively allocated VRBs. The resource allocation field of the resource allocation type 1 may be composed of a resource indication value (RIV), and the RIV may be composed of a VRB start point RBₛₜₐᵣₜ and a length L_{RBs} of the consecutively allocated RB. More specifically, the RIV within the bandwidth part of the ${N}_{BWP}^{size}$ size may be defined as follows:
   ■ if $\left({L}_{RBs}-1\right) \leq \left⌊{N}_{BWP}^{size}/2\right⌋$ then
      ◆ $RIV = {N}_{BWP}^{size} \left({L}_{RBs}-1\right) + {RB}_{start}$
   ■ else
      ◆ $RIV = {N}_{BWP}^{size} \left({N}_{BWP}^{size}-{L}_{RBs}-1\right) + \left({N}_{BWP}^{size}-1-{RB}_{start}\right)$
   ■ where L_{RBs}≥1 and shall not exceed ${N}_{BWP}^{size} - {RB}_{start}$*.*

The base station may configure, for the UE, time and frequency transmission resources and various transmit and receive parameters for the PDSCH and PUSCH semi-statically for the purpose of supporting configured grant-based transmission and reception for a physical downlink shared channel (PDSCH) or a physical uplink shared channel (PUSCH).

A more detailed description therefor will be provided below.

For the purpose of supporting downlink (DL) semi-persistent scheduling (SPS) for the UE, the base station may configure the pieces of following information as shown in Table 18 using the higher layer signaling (e.g., RRC signaling).

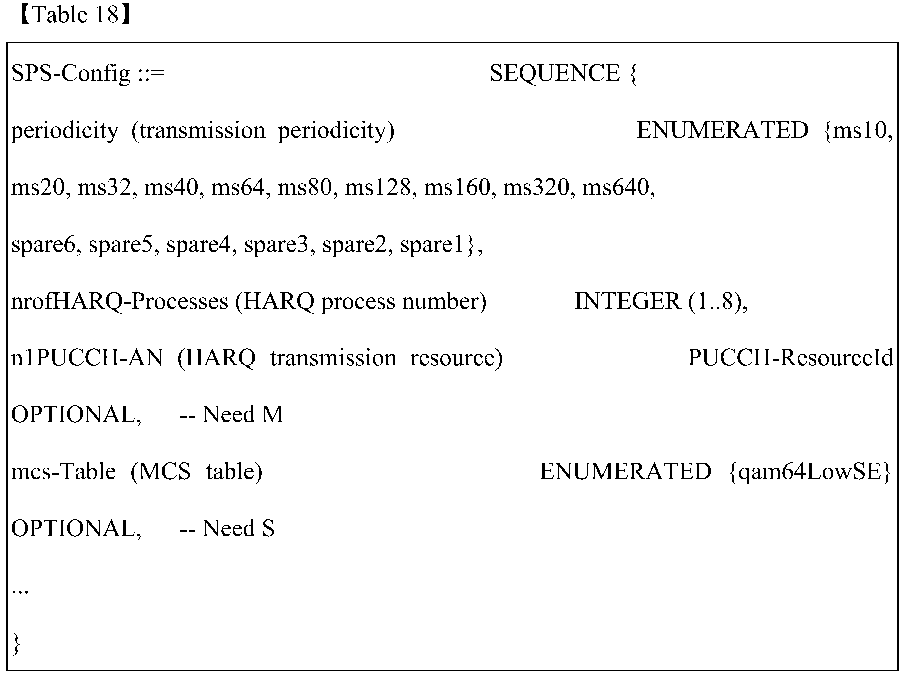

The DL SPS may be configured on a primary cell or a secondary cell, and within one cell group, the DL SPS may be set on one cell.

In the 5G, two types (type-1 PUSCH transmission with a configured grant, type-2 PUSCH transmission with a configured grant) of configured grant (named grant-free, etc.)-based transmission methods for the physical uplink shared channel (PUSCH) may be supported.

### Configured grant-Based PUSCH Transmission Type-1.

In the configured grant-based PUSCH transmission type 1, the base station may configure, for a UE, specific time/frequency resources, which allows the configured grant-based PUSCH transmission, via the higher layer signaling, for example, the RRC signaling. For example, the time domain allocation information, frequency domain allocation information, and periodicity information for resources may be configured. In addition, the base station may configure, for the UE, various parameters (e.g., frequency hopping, DMRS configuration, MCS table, MCS, resource block group (RBG) size, number of times of repeated transmissions, redundancy version (RB), etc.) for the PUSCH transmission as the higher layer signaling. More specifically, the pieces of configuration information as shown in Table 19 below may be included.

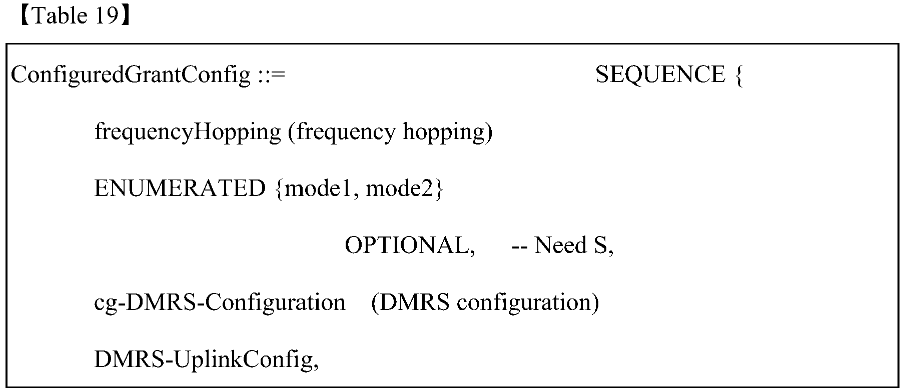

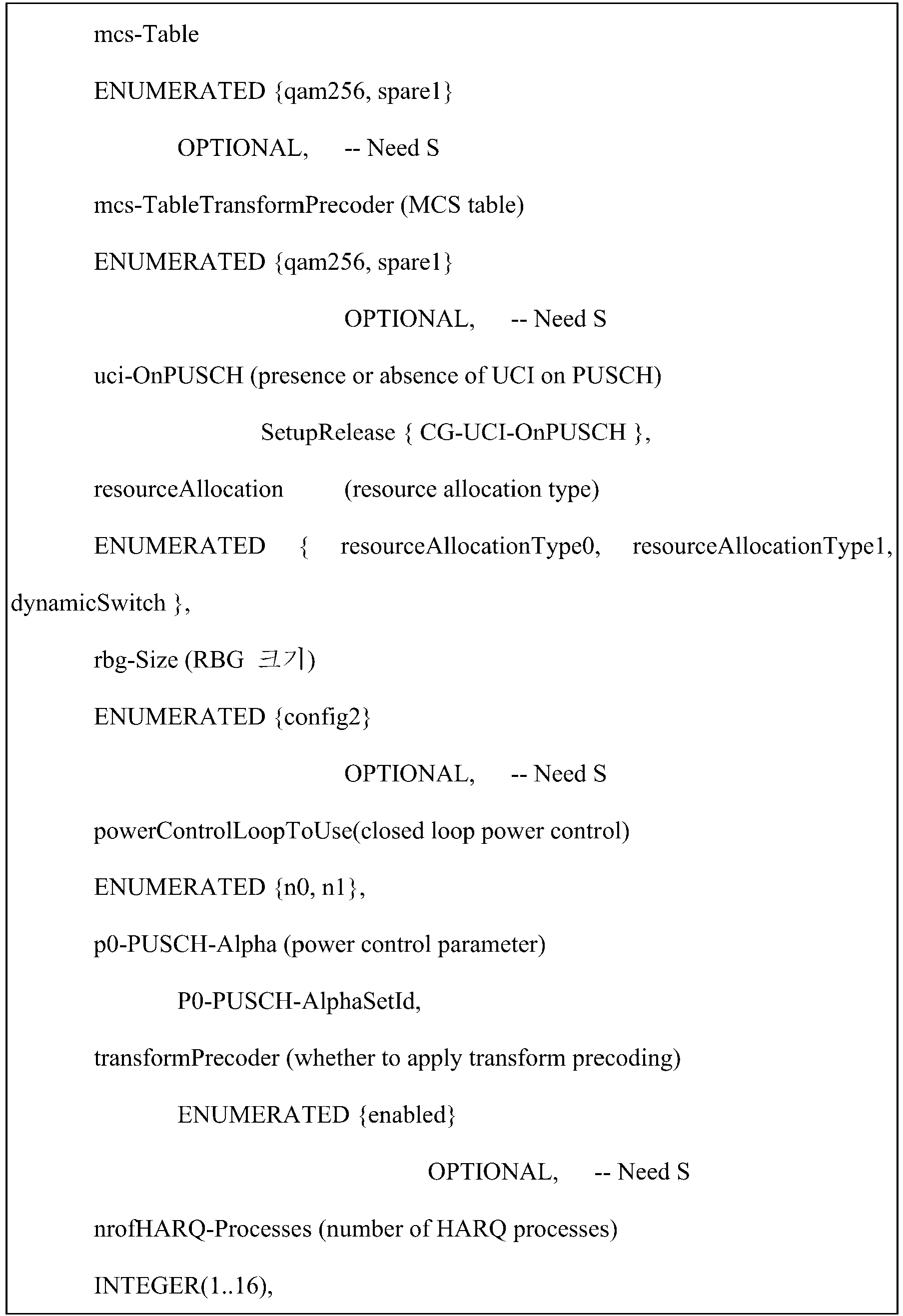

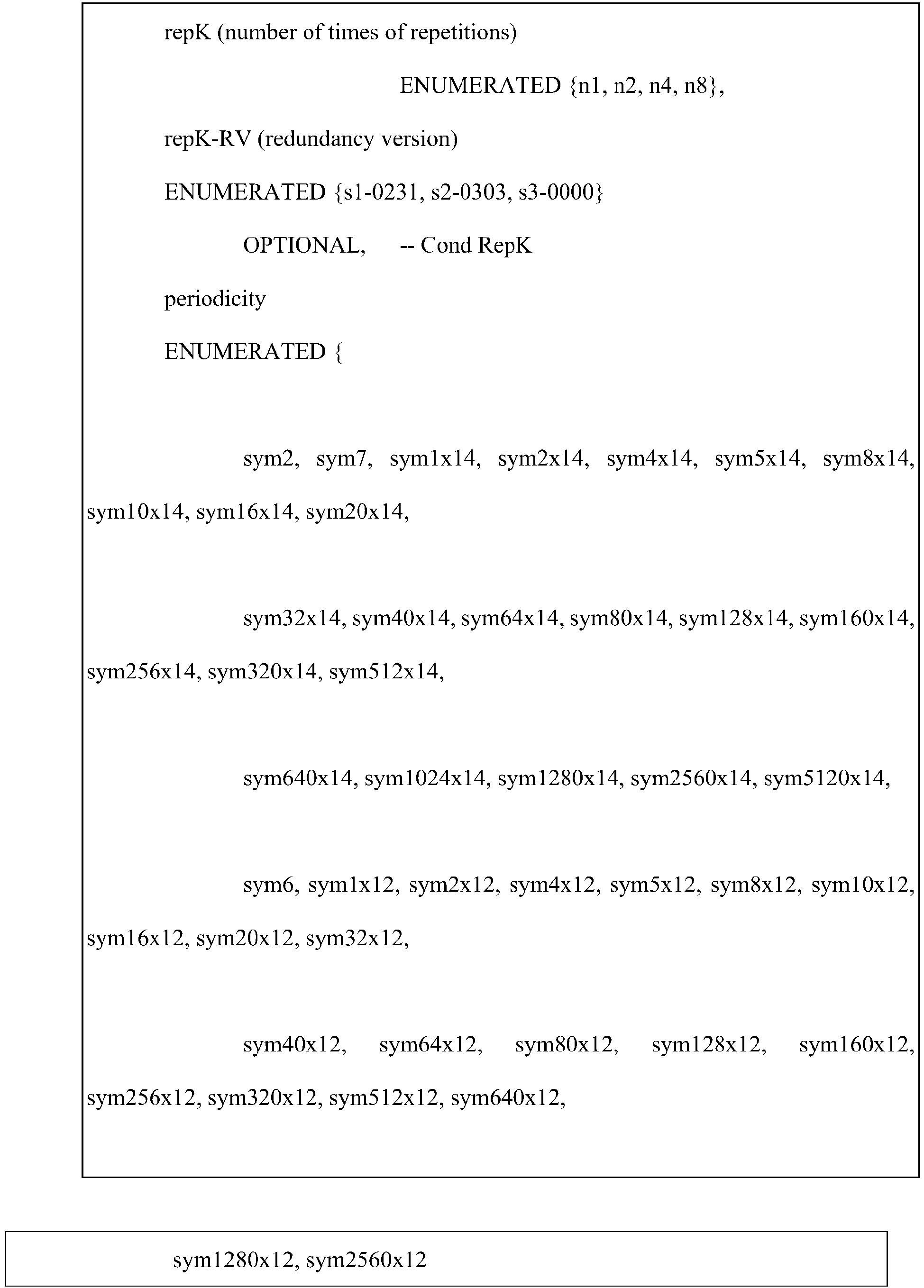

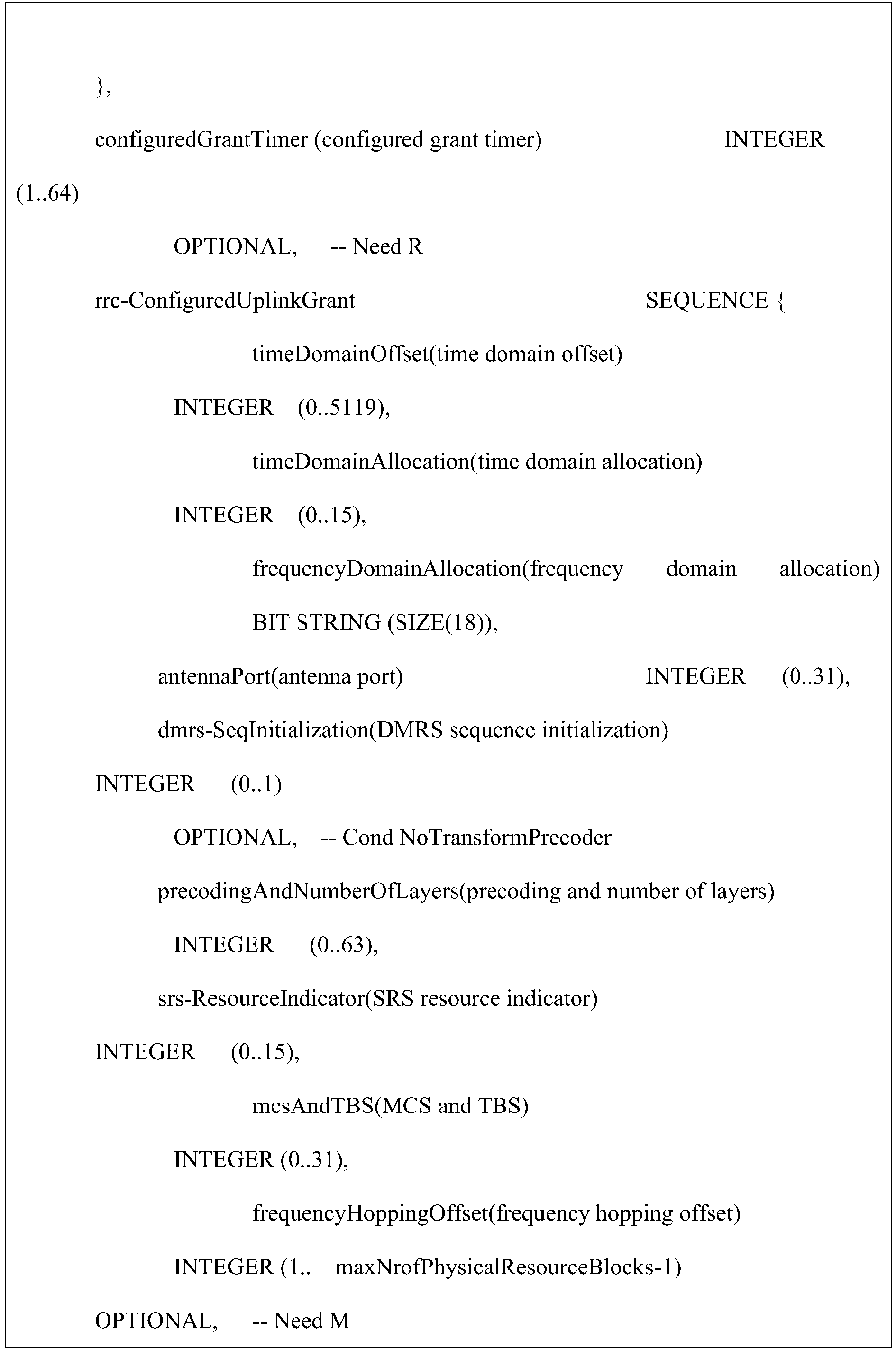

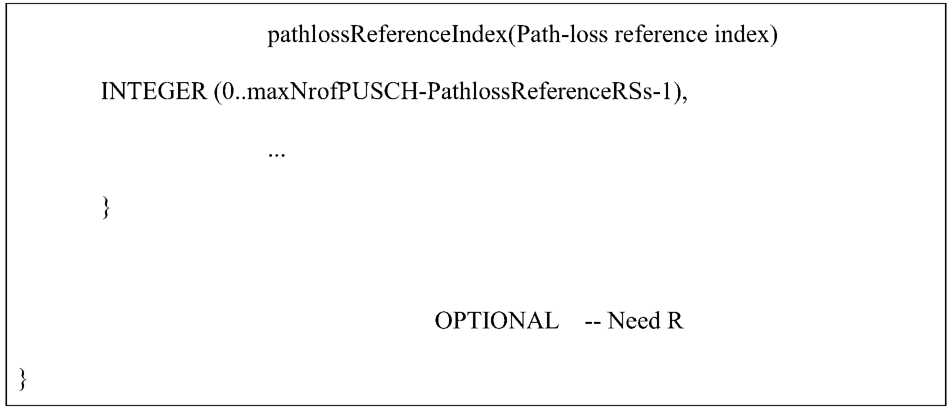

When the UE receives the configuration information for the configured grant-based PUSCH transmission type-1 from the base station, the UE may transmit the PUSCH without the authorization of the base station using periodically configured resources. Various parameters (e.g., frequency hopping, DMRS configuration, MCS, resource block group (RBG) size, the number of times of repeated transmissions, redundancy version (RV), precoding and the number of layers, antenna ports, frequency hopping offset, etc.) required to transmit the PUSCH may all follow the configuration values notified by the base station.

### Configured grant-Based PUSCH Transmission Type-2.

In the configured grant-based PUSCH transmission type-2, the base station may configure, for a UE, some (e.g., periodicity information, etc.) of the information on the specific time/frequency resources that allow the configured grant-based PUSCH as the higher layer signaling (e.g., RRC signaling). In addition, the base station may configure, for the UE, various parameters (e.g., frequency hopping, DMRS configuration, MCS table, resource block group (RBG) size, number of times of repeated transmissions, redundancy version (RB), etc.) for the PUSCH transmission as the higher layer signaling. More specifically, the base station may configure, for the UE, the configuration information as shown in Table 20 below as the higher layer signaling.

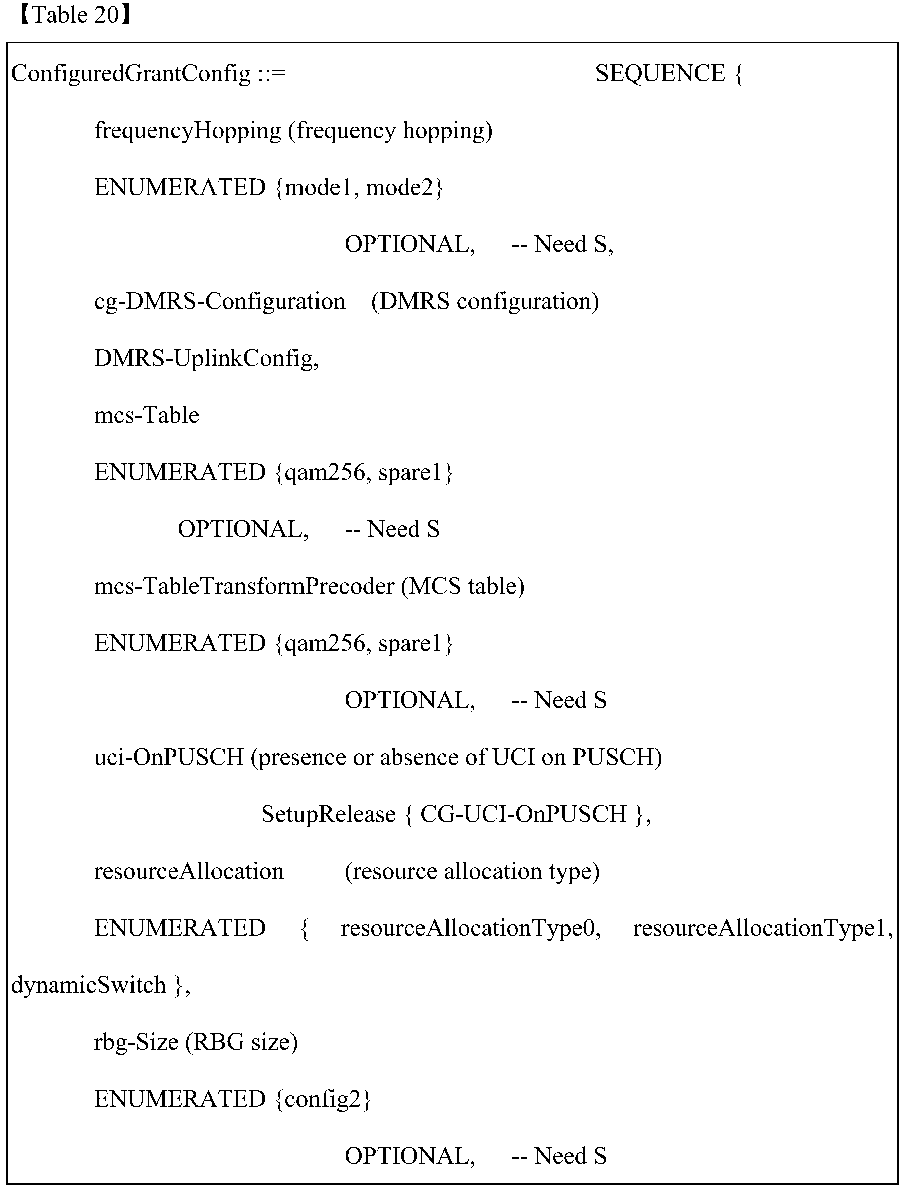

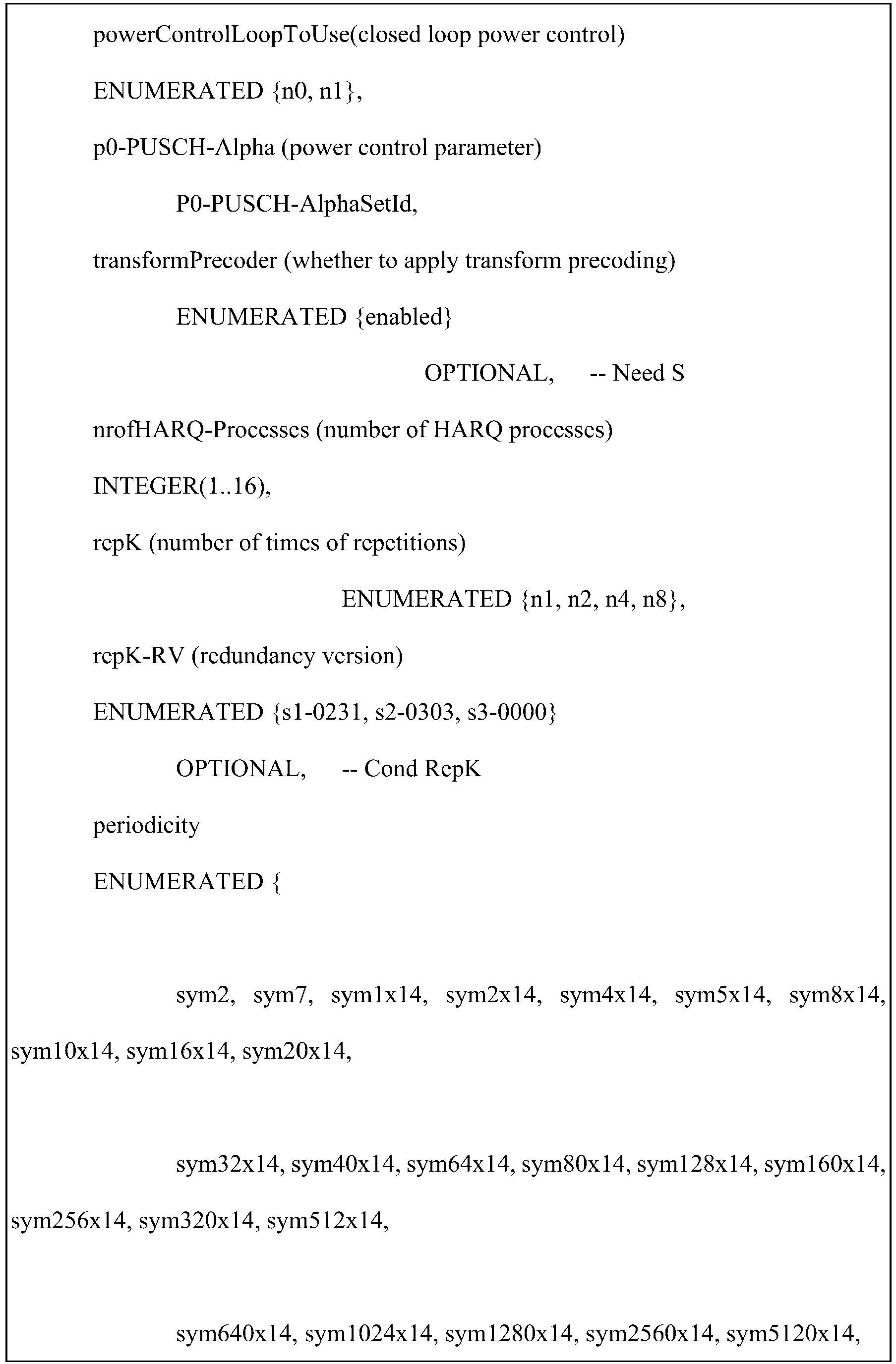

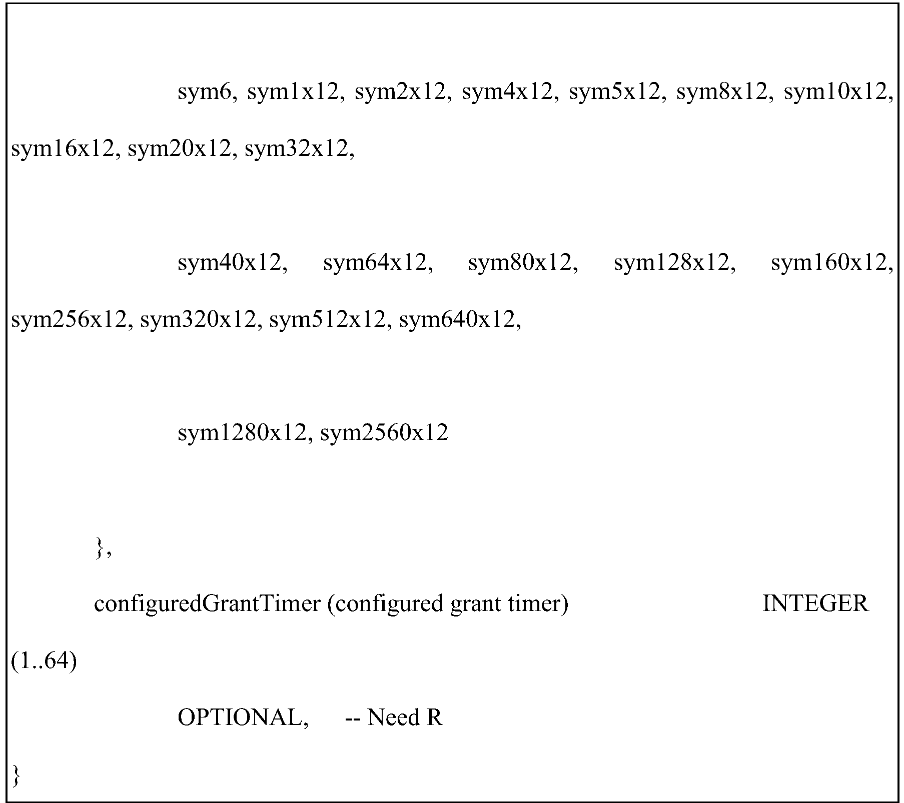

The base station may transmit DCI composed of specific DCI field values to the UE for the purpose of activation or scheduling release for the DL SPS and UL grant type 2.

A more detailed description therefor will be provided below.

The base station may configure, for the UE, the configured scheduling-RNTI (CS-RNTI), and the UE may monitor the DCI format in which the CRC is scrambled with the CS-RNTI. When the CRC of the DCI format received by the UE is scrambled with the CS-RNTI, a new data indicator (NDI) is set to '0', and the DCI field satisfies Table 21 below, the UE may regard the corresponding DCI as an instruction to activate transmission and reception for the DL SPS or UL grant type 2.

**[Table 21]**

| | DCI format 0_0/0_1 | DCI format 1_0 | DCI format 1_1 |
|---|---|---|---|
| HARQ process number | set to all '0's | set to all '0's | set to all '0's |
| Redundancy version | set to '00' | set to '00' | For the enabled transport block: set to '00' |

The base station may configure, for the UE, the configured scheduling-RNTI (CS-RNTI), and the UE may monitor the DCI format in which the CRC is scrambled with the CS-RNTI. When the CRC of the DCI format received by the UE is scrambled with the CS-RNTI, the new data indicator (NDI) is set to '0', and the DCI field satisfies Table 22 below, the UE may regard the corresponding DCI as an instruction to release the transmission and reception for the DL SPS or the UL grant type 2.

**[Table 22]**

| | **DCI format 0_0** | **DCI format 1_0** |
|---|---|---|
| HARQ process number | set to all '0's | set to all '0's |
| Redundancy version | set to '00' | set to '00' |
| Modulation and coding scheme | set to all '1's | set to all '1's |
| Frequency domain resource assignment | set to all '1's | set to all '1's |

The DCI instructing the release for the DL SPS or the UL grant type 2 follows the DCI format corresponding to the DCI format 0_0 or the DCI format 1_0. Since the DCI format 0_0 or 1_0 does not include a carrier indicator field (CIF), the UE should always monitor the PDCCH in the cell where the corresponding DL SPS or UL grant type 2 is configured in order to receive a release command for the DL SPS or the UL grant type 2 for the specific cell. Even if the specific cell is configured for cross-carrier scheduling, the UE should always monitor the DCI format 1_0 or the DCI format 0_0 in the corresponding cell to receive a release command for the DL SPS or the UL grant type 2 configured in the corresponding cell.

The following describes in detail the carrier aggregation and the scheduling method in the 5G communication system.

The UE may be configured with multiple cells (a cell or a component carrier (CC)) by the base station, and may be configured with whether cross-carrier scheduling is applied to cells configured for the UE. When the cross-carrier scheduling is configured for a specific cell (cell A, scheduled cell), PDCCH monitoring for cell A is not performed on cell A but may be performed on another cell (cell B, scheduling cell) indicated by the cross-carrier scheduling. In this case, the scheduled cell (cell A) and the scheduling cell (Cell B) may be configured with different numerologies. Here, the numerology may include a subcarrier spacing, a cyclic prefix, etc. In the case where the numerologies of the cell A and cell B differ, when the PDCCH of the cell B schedules the PDSCH of the cell A, the following minimum scheduling offset may be additionally considered between the PDCCH and the PDSCH.

### Cross-Carrier Scheduling Method

◆ When a subcarrier spacing µ_{B} of the cell B is smaller than a subcarrier spacing µ_{A} of the cell A, the PDSCH may be scheduled starting from a next PDSCH slot corresponding to a symbol after X symbols from a last symbol of the PDCCH received in the cell B. Here, X may vary depending on µ_{B} and may be defined as X=4 symbols when µ_{B}=15kHz, X=4 symbols when µ_{B}=30kHz, and X=8 symbols when µ_{B}=60kHz.
◆ When the subcarrier spacing µ_{B} of the cell B is greater than the subcarrier spacing µ_{A} of the cell A, the PDSCH may be scheduled starting from a time point corresponding to a symbol after the X symbols from the last symbol of the PDCCH received in the cell B. Here, X may vary depending on µ_{B} and may be defined as X=4 symbols when µ_{B}=30kHz, X=8 symbols when µ_{B}=60kHz, and X=12 symbols when µ_{B}=120kHz.

Rate matching and puncturing operations will be described in detail below.

When time and frequency resource A where any symbol sequence A is to be transmitted overlaps any time and frequency resource B, the transmission and reception operations of channel A considering resource C, which corresponds to a region where resource A and resource B overlap, may involve the rate matching or puncturing operations. The specific operations may follow the following contents.

### Rate Matching Operation

The base station may transmit channel A by mapping channel A only to the remaining resource regions excluding the resource C corresponding to a region overlapping with resource B among the entire resource A intended for transmitting symbol sequence A to the UE. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the base station may sequentially map and transmit the symbol sequence A to {resource #1, resource #2, resource #4} which are the remaining resources of the resource A, except for {resource #3} corresponding to the resource C. As a result, the base station may map and transmit the symbol sequence {symbol #1, symbol #2, symbol #3} to {resource #1, resource #2, resource #4}, respectively.

The UE may determine the resources A and B based on the scheduling information for the symbol sequence A from the base station, and thus, determine the resource C, which corresponds to the region where the resources A and B overlap. The UE may receive the symbol sequence A under the assumption that the symbol sequence A is mapped to and transmitted in the remaining regions excluding the resource C among the entire resource A. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the UE may receive the symbol sequence A under the assumption that the symbol sequence A is sequentially mapped to {resource #1, resource #2, resource #4} which are the remaining resources of the resource A excluding {resource #3} corresponding to the resource C. As a result, the UE may perform a series of subsequent reception operations under the assumption that the symbol sequence {symbol #1, symbol #2, symbol #3} is mapped and transmitted to {resource #1, resource #2, resource #4}, respectively.

### Puncturing Operation

When there exists a resource region C that overlaps with resource B among the entire resource A that the base station intends to use for transmitting the symbol sequence A to the UE, the base station maps the symbol sequence A to the entire resource A, but does not perform transmission in the resource region corresponding to the resource C, and perform transmission only in the remaining resource regions of the resource A excluding the resource C. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the base station may map the symbol sequence A {symbol #1, symbol #2, symbol #3, symbol #4} to the resource A {resource #1, resource #2, resource #3, resource #4}, respectively, and transmit only the symbol sequence {symbol #1, symbol #2, symbol #4} corresponding to the remaining resources {resource #1, resource #2, resource #4} of the resource A, excluding {resource #3} corresponding to the resource C, and the base station may not transmit {symbol #3} mapped to {resource #3} corresponding to the resource C. As a result, the base station may map and transmit the symbol sequence {symbol #1, symbol #2, symbol #4} to {resource #1, resource #2, resource #4}, respectively.

The UE may determine the resources A and B based on the scheduling information for the symbol sequence A from the base station, and thus, determine the resource C, which corresponds to the region where the resources A and B overlap. The UE may receive the symbol sequence A under the assumption that the symbol sequence A is mapped to the entire resource A, but is transmitted only in the remaining regions of the resource region A, excluding the resource C. For example, when the symbol sequence A is composed of {symbol #1, symbol #2, symbol #3, symbol #4}, the resource A is composed of {resource #1, resource #2, resource #3, resource #4}, and the resource B is composed of {resource #3, resource #5}, the UE may assume that the symbol sequence A {symbol #1, symbol #2, symbol #3, symbol #4} is mapped to the resource A {resource #1, resource #2, resource #3, resource #4}, respectively, but does not transmit the {symbol #3} mapped to {resource 3} corresponding to the resource C, and receive the symbol sequence {symbol#1, symbol#2, symbol#4} under the assumption that the corresponding symbol sequence {symbol#1, symbol#2, symbol#4} is mapped to the remaining resources {resource#1, resource#2, resource#4} of the resource A, excluding {resource #3} corresponding to the resource C, and transmitted. As a result, the UE may perform a series of subsequent reception operations under the assumption that the symbol sequence {symbol #1, symbol #2, symbol #4} is mapped and transmitted to {resource #1, resource #2, resource #4}, respectively.

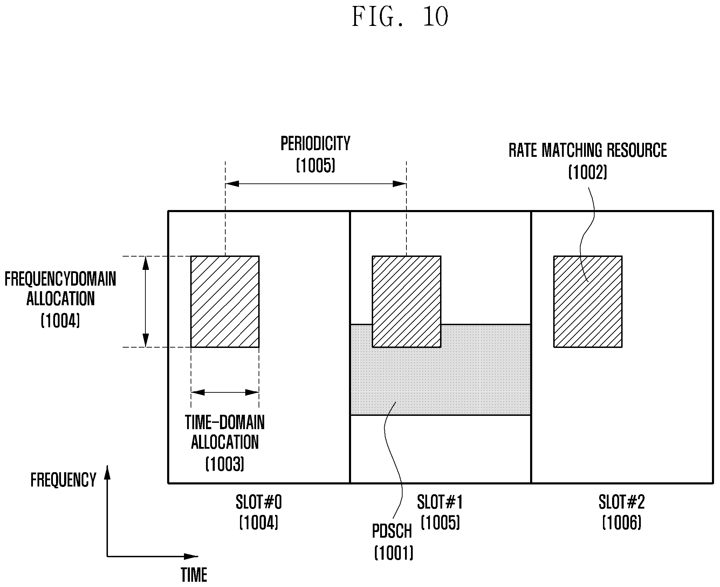

FIG. 10 is a diagram for describing a method for a base station and a UE to transmit and receive data in consideration of a downlink data channel and rate matching resources according to an embodiment of the present disclosure.

FIG. 10 illustrates a downlink data channel (PDSCH) 1001 and a rate matching resource 1002. The base station may configure one or more rate matching resources 1002 for the UE via the higher layer signaling (e.g., RRC signaling). The rate matching resource 1002 configuration information may include time domain resource allocation information 1003, frequency domain resource allocation information 1004, and periodicity information 1005. Hereinafter, a bitmap corresponding to the frequency domain resource allocation information 1004 is referred to as a "first bitmap", a bitmap corresponding to the time domain resource allocation information 1003 is referred to as a "second bitmap", and a bitmap corresponding to the periodicity information 1005 is referred to as a "third bitmap". When all or part of the time and frequency resources of the scheduled data channel 1001 overlap the configured rate matching resources 1002, the base station may rate-match the data channel 1001 in the rate matching resource 1002 portion and transmit the data channel 1001, and the UE may receive and decode the data channel 1001 after the assumption that the data channel 1001 is rate-matched in the rate matching resource 1002 portion.

The base station may dynamically notify the UE via the DCI whether to rate-match the data channel in the configured rate matching resource portion via additional configuration (which corresponds to a "rate matching indicator" within the above-described DCI format). Specifically, the base station may select some of the configured rate matching resources and group the selected rate matching resources into rate matching resource groups, and may use a bitmap scheme to indicate, to the UE, via the DCI, whether the data channel is rate-matched for each rate matching resource group. For example, when four rate matching resources, RMR#1, RMR#2, RMR#3, and RMR#4, are configured, the base station may configure RMG#1={RMR#1, RMR#2} and RMG#2={RMR#3, RMR#4} as the rate matching groups, and may use 2 bits within the DCI field to indicate to the UE, by the bitmap scheme, whether to perform the rate matching in the RMG#1 and RMG#2, respectively. For example, the case where the base station should perform the rate matching may be indicated as "1", and the case where the base station should not perform the rate matching may be indicated as "0".

In the 5G, granularities at "RB symbol level" and "RE level" are supported by the above-described method for configuring a rate matching resource in a UE. More specifically, it may follow the following configuration methods.

### RB Symbol Level

The UE may be configured with up to four RateMatchPatterns for each bandwidth part via the higher layer signaling. One RateMatchPattern may include the following contents.
- A reserved resource within the bandwidth part may include a resource whose time and frequency resource domains of the corresponding reserved resource are configured by a combination of a RB-level bitmap and a symbol-level bitmap on the frequency domain. The reserved resource may span across one or two slots. A repeated time domain pattern (periodicityAndPattern) composed of time and frequency domains formed by each RB-level and symbol-level bitmap pair may be additionally configured.
- The time and frequency domain resource region configured as the control resource set within the bandwidth part, and the resource region corresponding to the time domain pattern configured by the search space configuration in which the corresponding resource region is repeated may be included.

### RE Level

The UE may be configured with the following contents via the higher layer signaling.
- It may include, as configuration information for a RE corresponding to a cell-specific reference signal or common reference signal (LTE CRS) pattern, the number (nrofCRS-Ports) of ports of the LTE CRS, and a LTE-CRS-vshift(s) value (v-shift), location information of a center subcarrier of an LTE carrier from a reference frequency point (e.g., reference point A), bandwidth size (carrierBandwidthDL) information of the LTE carrier, subframe configuration information (mbsfn-SubframConfigList) corresponding to a multicast-broadcast single-frequency network (MBSFN), etc. The UE may determine a location of a CRS within an NR slot corresponding to the LTE subframe based on the above-described information.
- It may include configuration information for a resource set corresponding to one or more zero power (ZP) CSI-RSs within the bandwidth part.

The following describes in detail a method for measuring and reporting a channel state in the 5G communication system.

The channel state information (CSI) may include channel quality information (CQI), precoding matrix index (PMI), a CSI-RS resource indicator (CRI), an SS/PBCH block resource indicator (SSSBRI), a layer indicator (LI), a rank indicator (RI), and/or reference signal received power (L1-RSRP), etc. The base station may control the time and frequency resources for the above-described CSI measurement and reporting of the UE.

For the above-described CSI measurement and reporting, the UE may be configured with setting information (CSI-ReportConfig) for N (≥1) CSI reports, setting information (CSI-ResourceConfig) for M (≥1) RS transmission resources, and one or two pieces of trigger state (CSI-AperiodicTriggerStateList, CSI-SemiPersistentOnPUSCH-TriggerStateList) list information via the higher layer signaling.

More specifically, the setting information for the above-described CSI measurement and reporting may be as described in Tables 23-1 to 29 below.

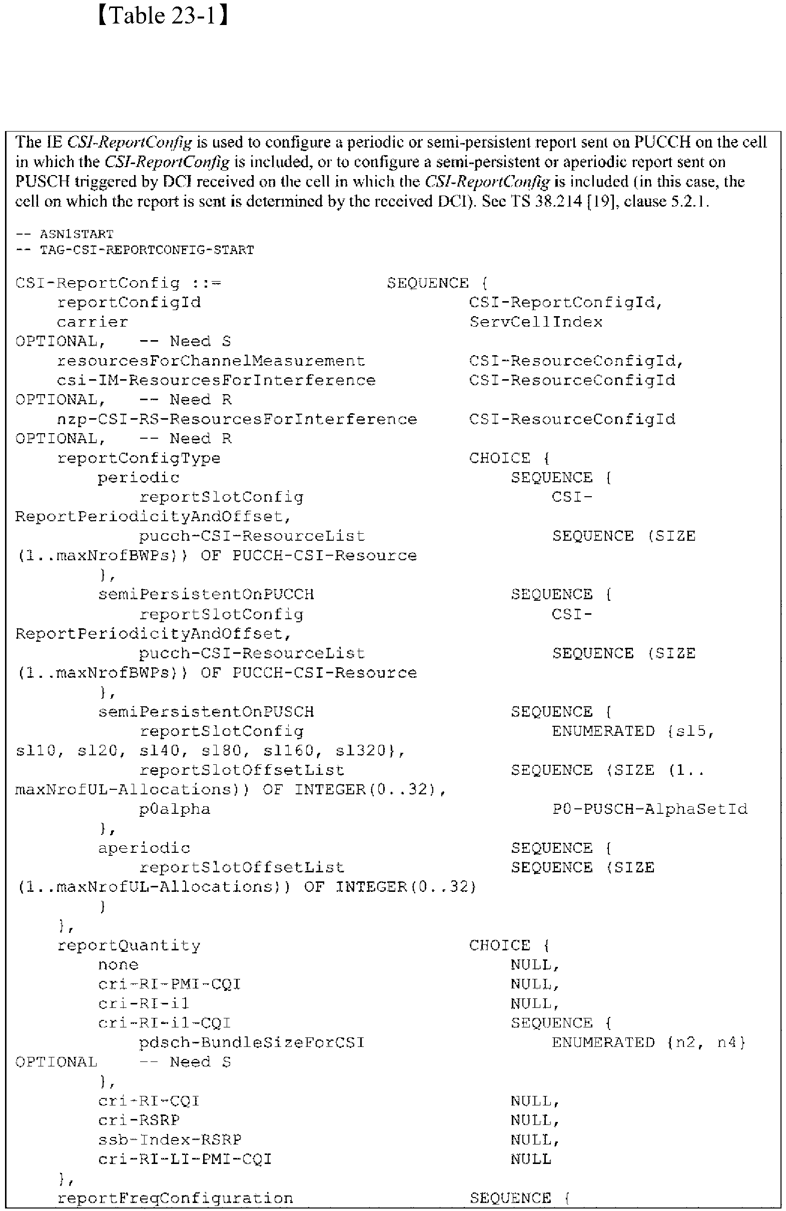

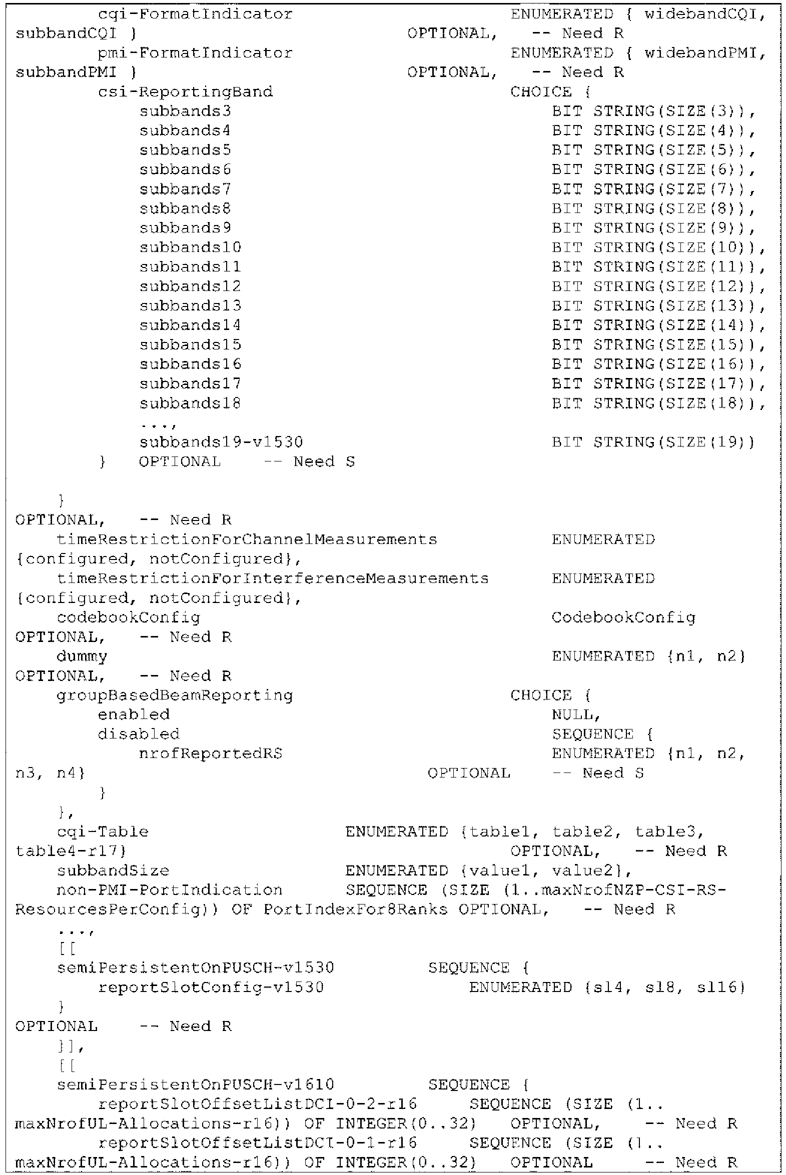

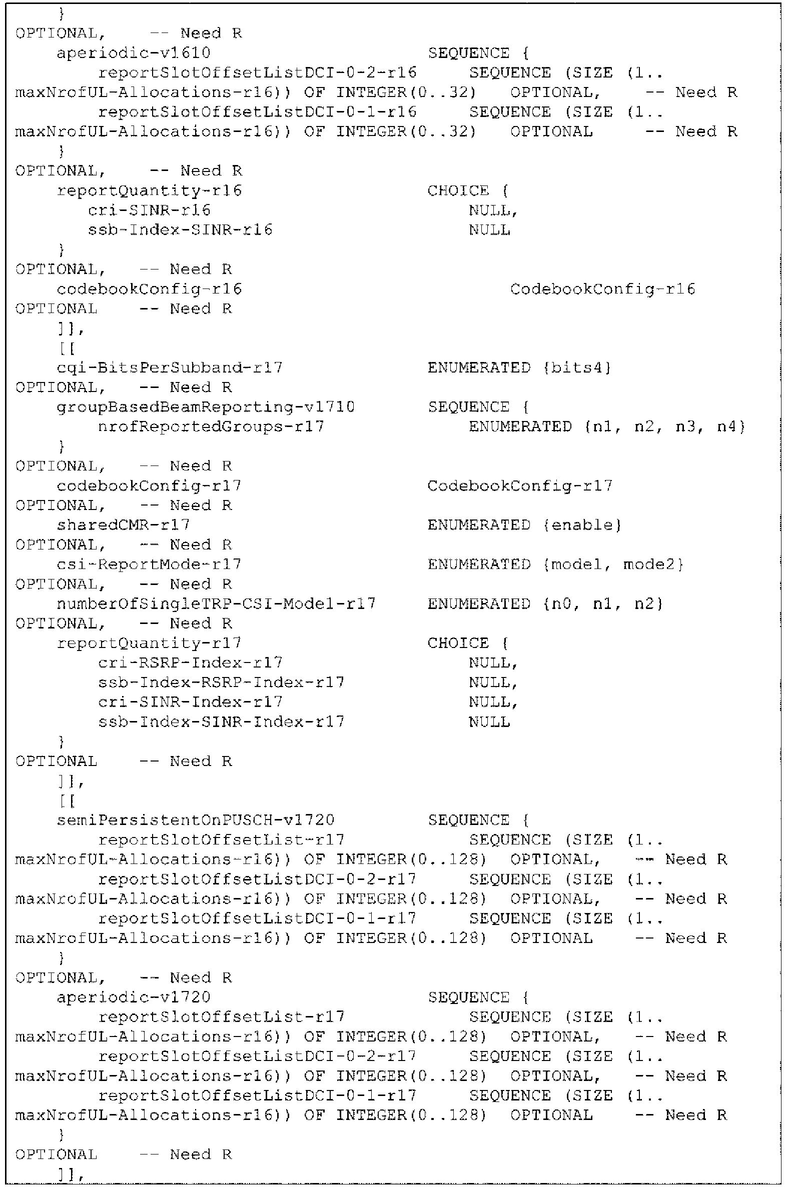

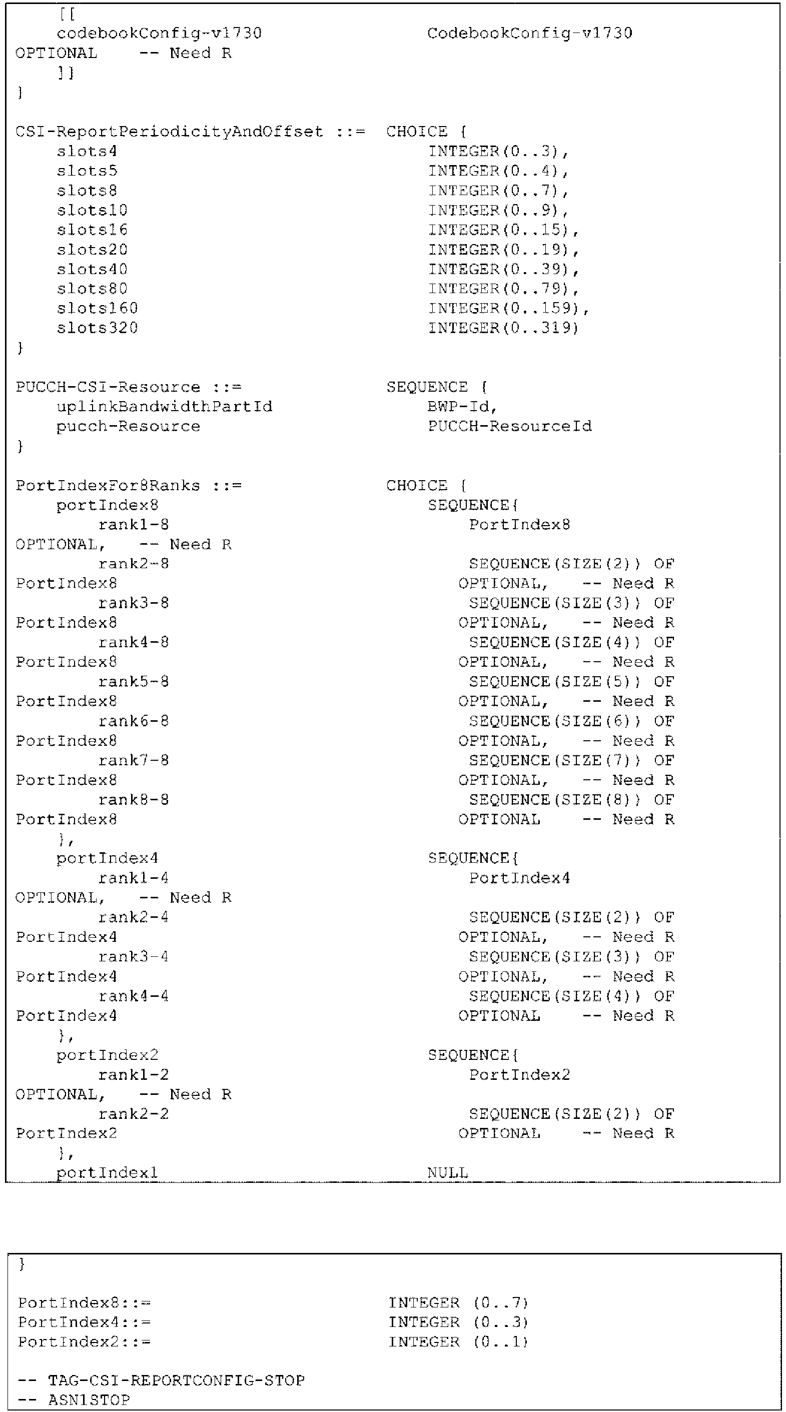

**[Table 23-2]**

| ***CSI-ReportConfig* field descriptions** |
|---|
| ***carrier*** |
| Indicates in which serving cell the *CSI-ResourceConfig* indicated below are to be found. If the field is absent, the resources are on the same serving cell as this report configuration. |
| ***codebookConfig*** |
| Codebook configuration for Type-1 or Type-2 including codebook subset restriction. |
| ***cqi-Formatindicator*** |
| Indicates whether the UE shall report a single (wideband) or multiple (subband) CQI (see TS 38.214 [19], clause 5.2.1.4). |
| ***cqi-Table*** Which CQI table to use for CQI calculation (see TS 38.214 [19], clause 5.2.2.1). |
| ***csi-IM-ResourcesForInterference*** |
| CSI IM resources for interference measurement. *csi-ResourceConfigld* of a *CSi-ResourceConfig* included in the configuration of the serving cell indicated with the field "carrier" above. The CSI-*ResourceConfig* indicated here contains only CSI-IM resources. The *bwp-Id* in that *CSI-ResourceConfig* is the same value as the *bwp-Id* in the *CSI-ResourceConfig* indicated by *resourcesForChannelMeasurement.* |
| ***csi-ReportingBand*** |
| Indicates a contiguous or non-contiguous subset of subbands in the bandwidth part which CSI shall be reported for. Each bit in the bit-string represents one subband in order of frequency position in the BWP. The right-most bit in the bit string represents the lowest subband with the lowest frequency position in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| ***dummy*** |
| This field is not used in the specification. If received it shall be ignored by the UE. |
| ***groupBasedBeamReporting*** Turning on/off group beam based reporting (see TS 38.214 [19], clause 5.2.1.4). |
| ***non-PMI-Portindication*** |
| Port indication for RI/CQI calculation. For each CSI-RS resource in the linked ResourceConfig for channel measurement, a port indication for each rank R, indicating which R ports to use. Applicable only for non-PMI feedback (see TS 38.214 [19], clause 5.2.1.4.2). |
| The first entry in *non-PMI-Portlndication* corresponds to the NZP-CSI-RS-Resource indicated by the first entry in *nzp-CSI-RS-Resources* in the *NZP-CSI-RS-ResourceSet* indicated in the first entry of *nzp-CSI-RS-ResourceSetList* of the *CSI-ResourceConfig* whose *CSI-ResourceConfigld* is indicated in a CSI-Measld together with the above *CSI-ReportConfigId;* the second entry in *non-PMI-PortIndication* corresponds to the NZP-CSI-RS-Resource indicated by the second entry in *nzp-CSI-RS-Resources* in the *NZP-CSI-RS-ResourceSet* indicated in the first entry of *nzp-CSI-RS-ResourceSetList* of the same *CSI-ResourceConfig,* and so on until the NZP-CSI-RS-Resource indicated by the last entry in *nzp-CSI-RS-Resources* in the in the *NZP-CSI-RS-ResourceSet* indicated in the first entry of *nzp-CSI-RS-ResourceSetList* of the same *CSI-ResourceConfig.* Then the next entry corresponds to the NZP-CSI-RS-Resource indicated by the first entry in *nzp-CSI-RS-Resources* in the *NZP-CSI-RS-ResourceSet* indicated in the second entry of *nzp-CSI-RS-ResourceSetList* of the same *CSI-ResourceConfig* and so on. |
| ***nrofReportedRS*** |
| The number (N) of measured RS resources to be reported per report setting in a non-group-based report. N <= N_max, where N_max is either 2 or 4 depending on UE capability. |
| (see TS 38.214 [19], clause 5.2.1.4) When the field is absent the UE applies the value 1. |
| ***nzp-CSI-RS-ResourcesForInterference*** |
| NZP CSI RS resources for interference measurement. *csi-ResourceConfigld* of a CSI-*ResourceConfig* included in the configuration of the serving cell indicated with the field "carrier" above. The *CSI-ResourceConfig* indicated here contains only NZP-CSI-RS resources. The *bwp-Id* in that *CSI-ResourceConfig* is the same value as the *bwp-ld* in the *CSI-ResourceConfig* indicated by *resourcesForChannelMeasurement.* |
| ***p0alpha*** |
| Index of the p0-alpha set determining the power control for this CSI report transmission (see TS 38.214 [19], clause 6.2.1.2). |
| ***pdsch-BundleSizeForCSI*** |
| PRB bundling size to assume for CQI calculation when *reportQuantity* is CRI/RI/i1/CQI. If the field is absent, the UE assumes that no PRB bundling is applied (see TS 38.214 [19], clause 5.2.1.4.2). |
| ***pmi-Formatindicator*** |
| Indicates whether the UE shall report a single (wideband) or multiple (subband) PMI. (see TS 38.214 [19], clause 5.2.1.4). |
| ***pucch-CSI-ResourceList*** |
| Indicates which PUCCH resource to use for reporting on PUCCH. |
| ***reportConfigType*** |
| Time domain behavior of reporting configuration. |
| ***reportFreqConfiguration*** |
| Reporting configuration in the frequency domain. (see TS 38.214 [19], clause 5.2.1.4). |
| ***reportQuantity*** |
| The CSI related quantities to report. Corresponds to L1 parameter 'ReportQuantity' (see TS 38.214 [19], clause 5.2.1). |
| ***reportSlotConfig*** |
| Periodicity and slot offset (see TS 38.214 [19], clause 5.2.1.4). |
| ***reportSlotConfig-V1530*** |
| Extended value range for reportSlotConfig for semi-persistent CSI on PUSCH. If the field is present, the UE shall ignore the value provided in the legacy field (semiPersistantOnPUSCH.reportSlotConfig). |
| ***reportSlotOffsetList*** |
| Timing offset Y for semi persistent reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on. The first report is transmitted In slot n+Y, second report in n+Y+P, where P is the configured periodicity. |
| Timing offset Y for aperiodic reporting using PUSCH. This field lists the allowed offset values. This list must have the same number of entries as the *pusch-TimeDomainAllocationList* in *PUSCH-Config.* A particular value is indicated in DCI. The network indicates in the DCI field of the UL grant, which of the configured report slot offsets the UE shall apply. The DCI value 0 corresponds to the first report slot offset in this list, the DCI value 1 corresponds to the second report slot offset in this list, and so on (see TS 38.214 [19], clause 6.1.2.1). |
| ***resourcesForChannelMeasurement*** |
| Resources for channel measurement. *csi-ResourceConfigld* of a *CSI-ResourceConfig* included in the configuration of the serving cell indicated with the field "carrier" above. The *CSI-ResourceConfig* indicated here contains only NZP-CSI-RS resources and/or SSB resources. This *CSI-ReportConfig* is associated with the DL BWP indicated by *bwp-Id* in that *CSI-ResourceConfig.* |
| ***subbandSize*** |
| Indicates one out of two possible BWP-dependent values for the subband size as indicated in TS 38.214 [191. table 5.2.1.4-2 . If *csi-ReportingBand* is absent, the UE shall ignore this field. |
| ***timeRestrictionForChannelMeasurements*** |
| Time domain measurement restriction for the channel (signal) measurements (see TS 38.214 [19], clause 5.2.1.1). |
| ***timeRestrictionForinterferenceMeasurements*** |
| Time domain measurement restriction for interference measurements (see TS 38.214 [19], clause 5.2.1.1). |

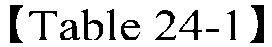

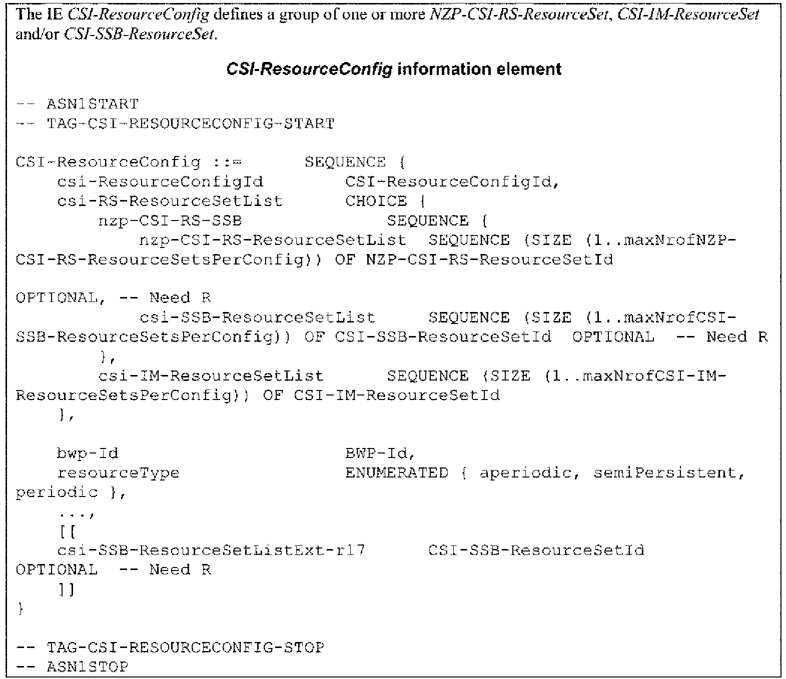

**[Table 24-2]**

| ***CSI-ResourceConfig* field descriptions** |
|---|
| ***bwp-Id*** |
| The DL BWP which the CSI-RS associated with this *CSI-ResourceConfig* are located in (see TS 38.214 [19], clause 5.2.1.2. |
| ***csi-ResourceConfigid*** |
| Used in *CSI-ReportConfig* to refer to an instance of *CSI-ResourceConfig.* |
| ***csi-RS-ResourceSetList*** |
| Contains up to maxNrofNZP-CSI-RS-ResourceSetsPerConfig resource sets if ResourceConfigType is 'aperiodic' and 1 otherwize (see TS 38.214 [19], clause 5.2.1.2). |
| ***csi-SSB-ResourceSetList*** |
| List of SSB resources used for beam measurement and reporting in a resource set (see TS 38.214 [19], clause 5.2.1.2). |
| ***resourceType*** |
| Time domain behavior of resource configuration (see TS 38.214 [19], clause 5.2.1.2). It does not apply to resources provided in the *csi-SSB-ResourceSetList.* |

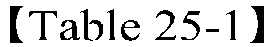

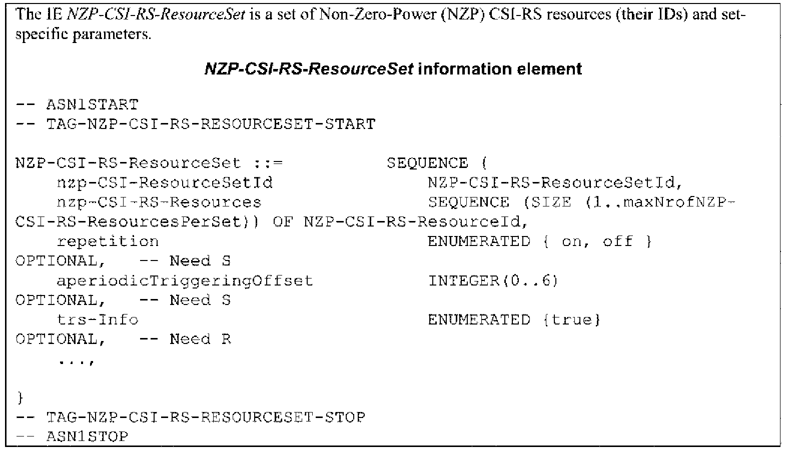

**[Table 25-2]**

| ***NZP-CSI-*RS-ResourceSet field descriptions** |
|---|
| ***aperiodicTriggeringOffset*** |
| Offset X between the slot containing the DCI that triggers a set of aperiodic NZP CSI-RS resources and the slot in which the CSI-RS resource set is transmitted. The value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. When the field is absent the UE applies the value 0. |
| ***nzp-CSI-RS-Resources*** |
| NZP-CSI-RS-Resources associated with this NZP-CSI-RS resource set (see TS 38.214 [19], clause 5.2). For CSI, there are at most 8 NZP CSI RS resources per resource set. |
| ***repetition*** |
| Indicates whether repetition is on/off. If the field is set to off or if the field is absent, the UE may not assume that the NZP-CSI-RS resources within the resource set are transmitted with the same downlink spatial domain transmission filter (see TS 38.214 [19], clauses 5.2.2.3.1 and 5.1.6.1.2). It can only be configured for CSI-RS resource sets which are associated with *CSI-ReportConfig* with report of L1 RSRP, L1 SINR or "no report". |
| ***trs-Info*** |
| Indicates that the antenna port for all NZP-CSI-RS resources in the CSI-RS resource set is same. If the field is absent or released the UE applies the value *false* (see TS 38.214 [19], clause 5.2.2.3.1). |

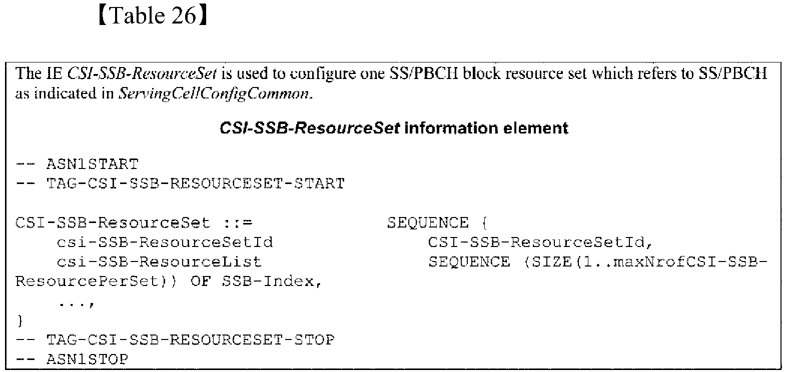

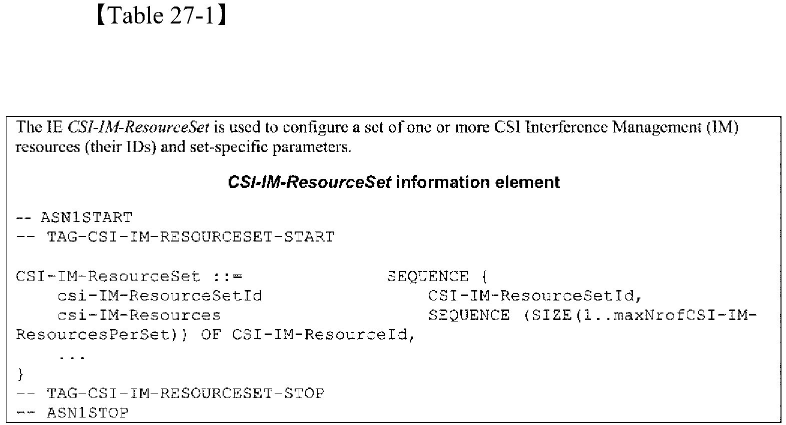

**[Table 27-2]**

| ***CSI-IM-ResourceSet* field descriptions** |
|---|
| ***csi-IM-Resources*** |
| *CSI-IM-Resources* associated with this *CSI-IM-ResourceSet* (see TS 38.214 [19], clause 5.2). |

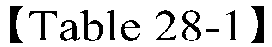

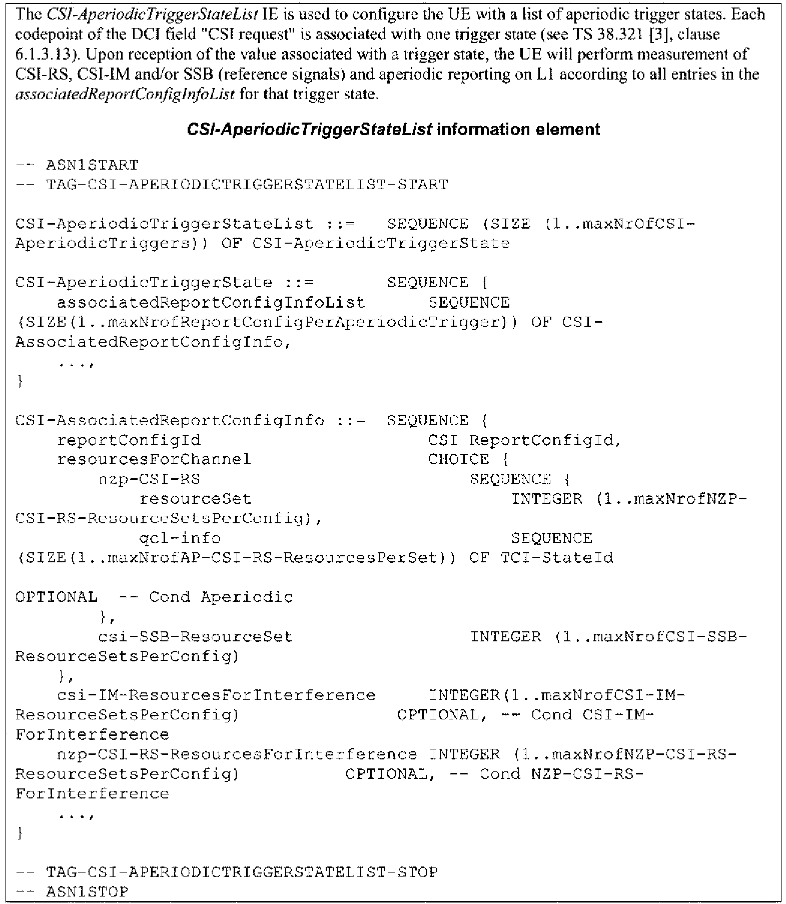

**[Table 28-2]**

| ***CSI-AssociatedReportConfigInfo* field descriptions** |
|---|
| ***csi-IM-ResourcesForInterference*** |
| *CSI-IM-ResourceSet* for interference measurement. Entry number in csi-IM-ResourceSetList in the *CSI-ResourceConfig* indicated by *csi-IM-ResourcesForInterference* in the *CSI-ReportConfig* indicated by *reportConfigId* above (value 1 corresponds to the first entry, value 2 to the second entry, and so on). The indicated *CSI-IM-ResourceSet* should have exactly the same number of resources like the *NZP-CSI-RS-ResourceSet* indicated in *resourceSet* within *nzp-CSI-RS.* |
| ***csi-SSB-ResourceSet*** |
| CSI-SSB-ResourceSet for channel measurements. Entry number in *csi-SSB-ResourceSetList* in the *CSI-ResourceConfig* indicated by *resourcesForChannelMeasurement* in the *CSI-ReportConfig* indicated by *reportConfigId* above (value 1 corresponds to the first entry, value 2 to the second entry, and so on). |
| ***nzp-CSI-RS-ResourcesForInterference*** |
| *NZP-CSI-RS-ResourceSet* for interference measurement. Entry number in *nzp-CSI-RS-ResourceSetList* in the *CSI-ResourceConfig* indicated by *nzp-CSI-RS-ResourcesForInterference* in the *CSI-ReportConfig* indicated by *reportConfigld* above (value 1 corresponds to the first entry, value 2 to the second entry, and so on). |
| ***qcl-info*** |
| List of references to TCI-States for providing the QCL source and QCL type for each NZP-*CSI-RS-Resource* listed in *nzp-CSI-RS-Resources* of the *NZP-CSI-RS-ResourceSet* indicated by *resourceSet* within *nzp-CSI-RS.* Each *TCI-StateId* refers to the *TCI-State* which has this value for *tci-StateId* and is defined in *tci-StatesToAddModList* or in *dl-OrJointTCI-StateList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in *qcl-info* corresponds to first entry in *nzp-CSI-RS-Resources* of that *NZP-CSI-RS-ResourceSet,* second entry in *qcl-info* corresponds to second entry in *nzp-CSI-RS-Resources,* and so on (see TS 38.214 [19], clause 5.2.1.5.1). |
| ***reportConfigld*** |
| The *reportConfigId* of one of the *CSI-ReportConfigToAddMod* configured in *CSI-MeasConfig* |
| ***resourceSet*** |
| *NZP-CSI-RS-ResourceSet* for channel measurements. Entry number in *nzp-CSI-RS-ResourceSetList* in the *CSI-ResourceConfig* indicated by *resourcesForChannelMeasurement* in the *CSI-ReportConfig* indicated by *reportConfigId* above (value 1 corresponds to the first entry, value 2 to the second entry, and so on). |

| **Conditional Presence** | **Explanation** |
|---|---|
| *Aperiodic* | The field is mandatory present if the *NZP-CSI-RS-Resources* in the associated *resourceSet* have the resourceType aperiodic. |
| | The field is absent otherwise. |
| *CSI-IM-Forinterference* | This field is optional need M if the *CSI-ReportConfig* identified by *reportConfigId* is configured with *csi-IM-ResourcesForinterference;* otherwise it is absent. |
| *NZP-CSI-RS-Forlnterference* | This field is optional need M if the *CSI-ReportConfig* identified by *reportConfigId* is configured with *nzp-CSI-RS-ResourcesForinterference;* otherwise it is absent. |

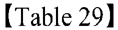

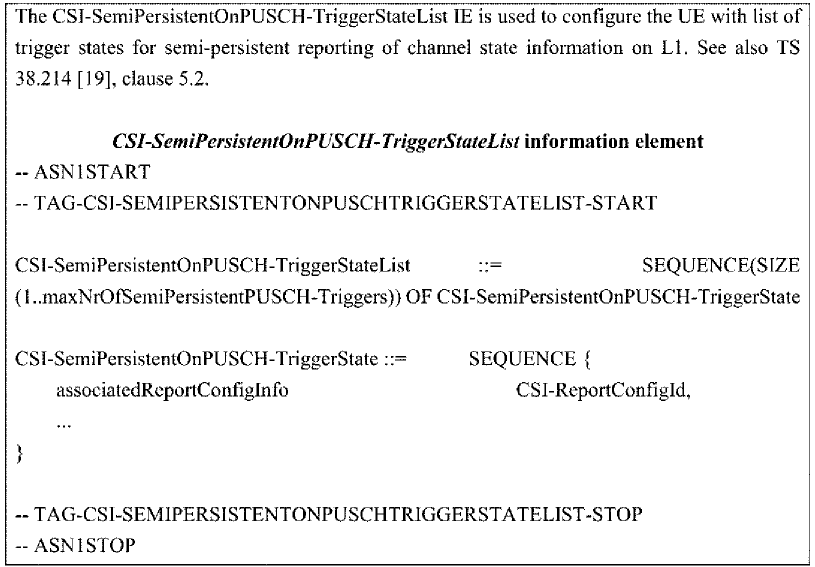

Regarding the above-described CSI report setting *(CSI-ReportConfig),* each report setting CSI-ReportConfig may be associated with a CSI resource setting associated with the corresponding report setting, and one downlink (DL) bandwidth part identified by a higher layer parameter bandwidth part identifier (bwp-id) given by CSI-ResourceConFIG. For the time domain reporting operation for each report setting CSI-ReportConfig, 'aperiodic', 'semi-persistent', and 'periodic' schemes are supported, which may be configured for the UE by the base station using the reportConfigType parameter set from the higher layer. The semi-persistent CSI reporting method supports 'semi-PersistentOnPUCCH' and 'semi-PersistentOnPUSCH'. For the periodic or semi-persistent CSI report method, the UE may be configured with the PUCCH or PUSCH resource for transmitting the CSI from the base station via the higher layer signaling. The periodicity and slot offset of the PUCCH or PUSCH resource for transmitting the CSI may be given as numerology of the uplink (UL) bandwidth part configured to transmit the CSI report. For the aperiodic CSI reporting method, the UE may receive the PUSCH resource for CSI transmission from the base station via L1 signaling (the above-described DCI format 0_1).

For the above-described CSI resource setting *(CSI-ResourceConfig),* each CSI resource setting CSI-ReportConfig may include S (≥1) sets of CSI resources (given by the higher layer parameter csi-RS-ResourceSetList). The CSI resource set list may be composed of a non-zero power (NZP) CSI-RS resource sets and an SS/PBCH block set, or may be composed of a CSI-interference measurement (CSI-IM) resource set. Each CSI resource setting may be located in a downlink (DL) bandwidth part identified by the higher layer parameter bwp-id, and the CSI resource setting may be associated with a CSI report setting in the same downlink bandwidth part. The time domain operation of the CSI-RS resources within the CSI resource setting may be configured as one of 'aperiodic', 'periodic', or 'semi-permanent' by the higher layer parameter resourceType. For the periodic or semi-permanent CSI resource setting, the number of CSI-RS resource sets may be limited to S=1, and the configured period and slot offset may be given by the numerology of the downlink bandwidth part identified by the bwp-id. The UE may receive one or more CSI resource settings for channel or interference measurement via the higher layer signaling from the base station, and may include, for example, the following CSI resources.
- CSI-IM resource for interference measurement
- NZP CSI-RS resource for interference measurement
- NZP CSI-RS resource for channel measurement

For the CSI-RS resource sets associated with the resource settings where the higher layer parameter resource Type is set to 'aperiodic', 'periodic', or 'semi-permanent', the trigger state for the CSI report setting where reportType is configured as 'aperiodic' and the resource setting for channel or interference measurement for one or more component cells (CCs) may be configured as the higher layer parameter CSI-AperiodicTriggerStateList.

The aperiodic CSI reporting of the UE may use the PUSCH, the periodic CSI reporting may use the PUCCH, and the semi-permanent CSI reporting may be performed using the PUSCH when triggered or activated by DCI, or using the PUCCH after being activated by the MAC control element (MAC CE). As described above, the CSI resource setting may also be configured as aperiodic, periodic, or semi-permanent. Combinations between the CSI report settings and the CSI resource configurations may be supported based on [Table 30] below.

**[Table 30]**

| **CSI-RS Configuration** | **Periodic CSI Reporting** | **Semi-Persistent CSI Reporting** | **Aperiodic CSI Reporting** |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The aperiodic CSI report may be triggered by a "CSI request" field of the above-described DCI format 0_1, which corresponds to the scheduling DCI for the PUSCH. The UE may monitor the PDCCH, acquire the DCI format 0_1, and acquire scheduling information and a CSI request indicator for the PUSCH. The CSI request indicator may be configured with NTS (=0, 1, 2, 3, 4, 5, or 6) bits and may be determined by the higher layer signaling (reportTriggerSize). One of one or more aperiodic CSI report trigger states, which may be configured via the higher layer signaling (CSI-AperiodicTriggerStateList), may be triggered by the CSI request indicator.
- If all bits of the CSI request field are 0, this may refer to that no CSI report is requested.
- If the number M of CSI trigger states within the configured CSI-AperiodicTriggerStateLite is greater than 2NTs-1, then M CSI trigger states may be mapped to 2NTs-1 according to the selected mapping relationship, and one of the trigger states of 2NTs-1 may be indicated as the CSI request field.
- If the number M of CSI trigger states within the configured CSI-AperiodicTriggerStateLite is less than or equal to 2NTs-1, then one of the M CSI trigger states may be indicated as the CSI request field.

[Table 31] below shows an example of the relationship between a CSI request indicator and a CSI trigger state that may be indicated by the corresponding indicator.

**[Table 31]**

| **CSI request field** | **CSI trigger state** | **CSI-ReportConfigId** | **CSI-ResourceConfigId** |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

For a CSI resource within the CSI trigger state triggered by the CSI request field, the UE may perform a measurement and generate a CSI (including at least one of the above-described CQI, PMI, CRI, SSBRI, LI, RI, or L1-RSRP, etc.) from this. The UE may transmit the acquired CSI using the PUSCH scheduled by the corresponding DCI format 0_1. When 1 bit corresponding to an uplink data indicator (UL-SCH indicator) in the DCI format 0_1 indicates "1", the UE may multiplex uplink data (UL-SCH) and acquired CSI and transmit the multiplexed data on the PUSCH resources scheduled by the DCI format 0_1. When the 1 bit corresponding to the uplink data indicator (UL-SCH indicator) in the DCI format 0_1 indicates "0", the UE may map only the CSI, without the uplink data (UL-SCH), and transmit the mapped CSI on the PUSCH resources scheduled by the DCI format 0_1.

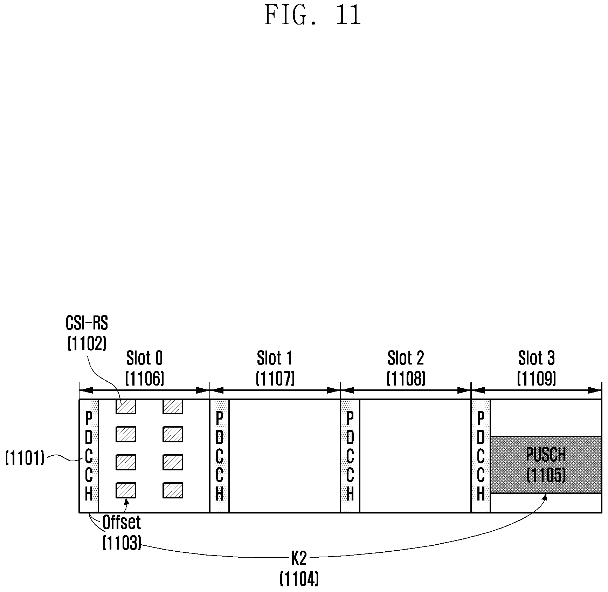

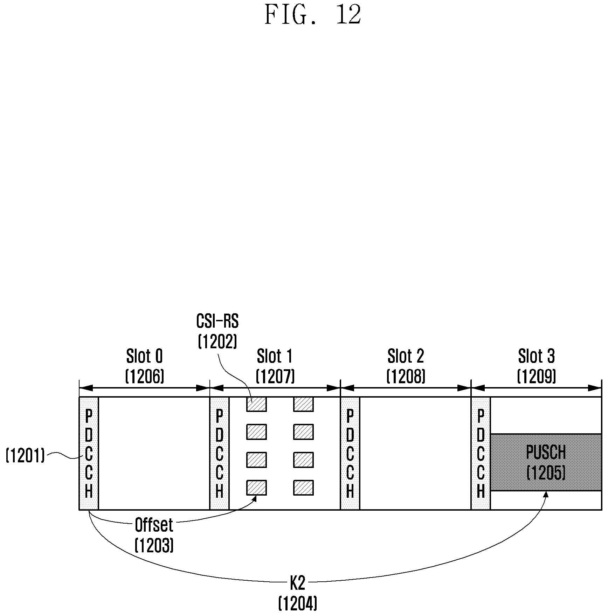

FIGS. 11 and 12 illustrate methods for reporting aperiodic CSI when the CSI-RS offset is 0 according to an embodiment of the present disclosure.

Referring to FIG. 11, the UE may acquire the DCI format 0_1 by monitoring a PDCCH 1101, and acquire the scheduling information and the CSI request information for a PUSCH 1105 from this. The UE may acquire the resource information for a CSI-RS 1102 to be measured from the received CSI request indicator. The UE may determine a time point at which to perform a measurement on a CSI-RS resource 1102 based on a time point at which the DCI format 0_1 is received and a parameter (aperiodicTriggeringOffset described above) for an offset within a CSI resource set configuration (e.g., NZP-CSI-RS-ResourceSet). Describing in more detail, the UE may be configured with an offset value X of the parameter aperiodicTriggeringOffset within the NZP-CSI-RS resource set configuration as the higher layer signaling from the base station, and the set offset value X may represent an offset 1103 between a slot in which the DCI triggering the aperiodic CSI report is received and a slot in which the CSI-RS resource is transmitted. For example, the aperiodicTriggeringOffset parameter value and the offset value X may have a mapping relationship as described in [Table 32] below.

**[Table 32]**

| **aperiodicTriggeringOffset** | **Offset X** |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

Referring to FIG. 12, the above-described offset value may be set to X=0. In this case, the UE may receive the CSI-RS 1202 in the slot (corresponding to slot 0 in FIG. 11) that receives the DCI format 0_1 triggering the aperiodic CSI report, and may report the CSI information measured by the received CSI-RS to the base station via the PUSCH 1205. The UE may acquire the scheduling information (pieces of information corresponding to each field of the above-described the DCI format 0_1) for the PUSCH 1205 for CSI report from the DCI format 0_1. For example, the UE may acquire information on a slot to transmit the PUSCH 1205 from the above-described time domain resource allocation information for the PUSCH 1205 in the DCI format 0_1. In one example of FIG. 11, the UE acquires a K2 value corresponding to the slot offset value for a PDCCH-to-PUSCH as 3, and thus, the PUSCH 1105 may be transmitted from slot 3 1109, which is 3 slots away from slot 0 1106, at the time point at which the PDCCH 1101 is received.

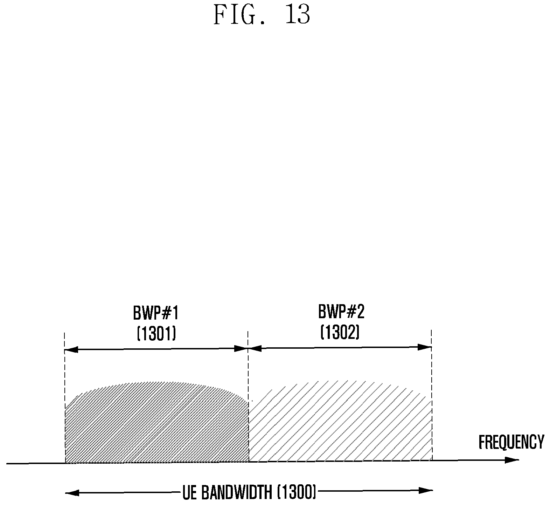

In one example of FIG. 12, the UE may acquire the DCI format 0_1 by monitoring the PDCCH 1201, and acquire the scheduling information and the CSI request information for the PUSCH 1205 from the DCI format 0_1. The UE may acquire the resource information for a CSI-RS 1202 to be measured from the received CSI request indicator. In one example of FIG. 12, an example in which the offset value for the above-described CSI-RS is set to X=1 is shown. In this case, the UE may receive the CSI-RS 1202 in the slot (corresponding to slot 0 1206 in FIG. 13) that receives the DCI format 0_1 triggering the aperiodic CSI report, and may report the CSI information measured by the received CSI-RS to the base station via the PUSCH 1205.

Next, the bandwidth part (BWP) configuration in the 5G communication system will be described in detail.

FIG. 13 illustrates a configuration for a bandwidth part in the 5G communication system according to an embodiment of the present disclosure.

Referring to FIG. 13, the UE bandwidth UE bandwidth 1300 may be configured with two bandwidth parts, namely bandwidth part #1 (BWP #1) 1301 and bandwidth part #2 (BWP #2) 1302. The base station may configure one or more bandwidth parts for the UE, and for each bandwidth part, it may set the following information as shown in Table 33.

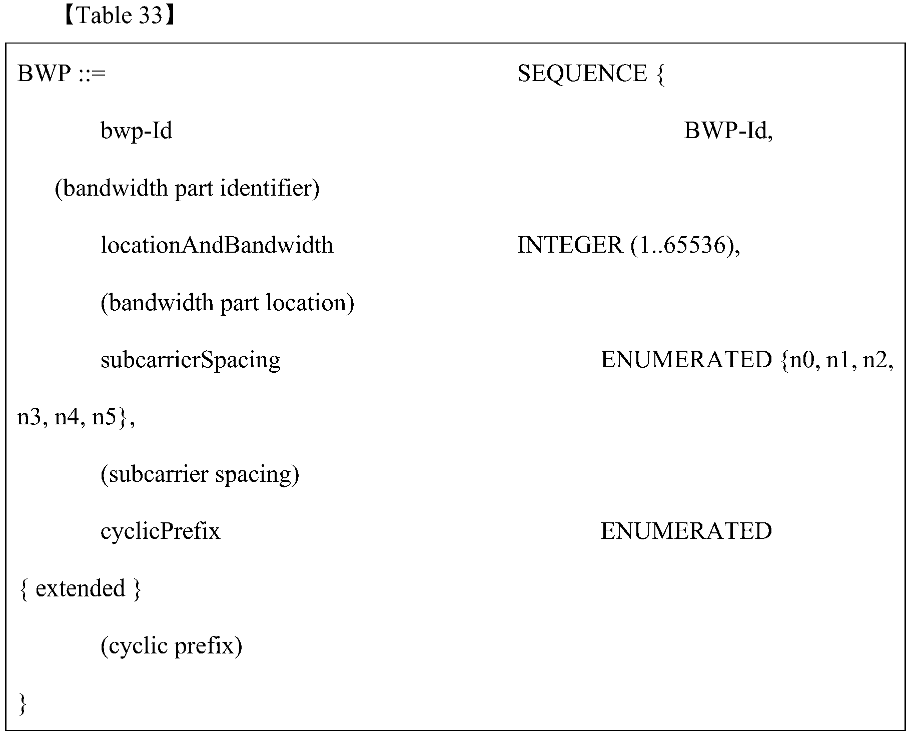

The pieces of information may be delivered from the base station to the UE via the higher layer signaling, such as radio resource control (RRC) signaling. Among one or more configured bandwidth parts, at least one bandwidth part may be activated. Whether the configured bandwidth part is activated may be delivered semi-statically from the base station to the UE via the RRC signaling or dynamically via the downlink control information (DCI).

The UE before the radio resource control (RRC) connection may be configured, by the base station, with an initial bandwidth part (initial BWP) for initial access via a master information block (MIB). More specifically, during the initial access phase, the UE may receive configuration information on a control resource set (CORESET) and a search space where the physical downlink control channel (PDCCH) for receiving system information (which may correspond to remaining system information (RMSI) or system information block 1 (SIB1)) required for the initial access may be transmitted via the MIB. The control resource set and search space configured by the MIB may each be regarded as identity (ID) 0. The base station may notify the UE of configuration information such as frequency allocation information, time allocation information, and numerology for control resource set#0 via the MIB. In addition, the base station may notify the UE of configuration information about monitoring periodicity and occasion for the control resource set#0, i.e., configuration information for search space#0, via the MIB. The UE may regard a frequency domain configured as control resource set #0, acquired from the MIB, as the initial bandwidth part for initial access. In this case, the initial bandwidth part identifier (ID) may be regarded as 0.

The configuration of the bandwidth part supported in the 5G may be used for various purposes.

According to an embodiment, when the bandwidth supported by the UE is smaller than the system bandwidth, this may be supported through the bandwidth part configuration. For example, by configuring, by the base station, the frequency position (configuration information 2) of the bandwidth part for the UE, the UE may transmit and receive data at a specific frequency location within the system bandwidth.

For the purpose of supporting different numerologies, the base station may configure multiple bandwidth parts for the UE. For example, to support data transmission and reception using both a 15 kHz subcarrier spacing and a 30 kHz subcarrier spacing for a UE, two bandwidth parts may be configured with the subcarrier spacings of 15 kHz and 30 kHz, respectively. Different bandwidth parts may be frequency-division multiplexed, and when data is to be transmitted and received at a specific subcarrier spacing, the bandwidth part configured for that subcarrier spacing may be activated.

Furthermore, the base station may configure bandwidth parts with different bandwidth sizes for a UE to reduce power consumption of a UE. For example, when the UE supports a very large bandwidth, for example, 100 MHz bandwidth, and always transmits and receives data in the corresponding bandwidth, very large power consumption may occur. In particular, performing monitoring of unnecessary downlink control channels in a large bandwidth of 100 MHz in a situation where there is no traffic may be very inefficient in terms of power consumption. To reduce the power consumption of the UE, the base station may configure a bandwidth part with a relatively small bandwidth, for example, 20 MHz bandwidth part, for a UE. In the situation where there is no traffic, the UE may perform the monitoring operation in the 20 MHz bandwidth part, and when data is generated, the UE may transmit and receive data in the 100 MHz bandwidth part according to the instructions of the base station.

In the method for configuring a bandwidth part, UEs before RRC connected may receive configuration information for the initial bandwidth part via the master information block (MIB) during the initial access phase. More specifically, the UE may be configured with a control resource set (CORESET) for a downlink control channel on which the downlink control information (DCI) for scheduling a system information block (SIB) may be transmitted from a MIB of a physical broadcast channel (PBCH). The bandwidth of the control resource set configured by the MIB may be regarded as the initial bandwidth part, and the UE may receive a physical downlink shared channel (PDSCH) on which the SIB is transmitted via the configured initial bandwidth part. In addition to the purpose of receiving the SIB, the initial bandwidth part may also be utilized for other system information (OSI), paging, and random access.

When a UE is configured with one or more bandwidth parts, the base station may instruct the UE to switch the bandwidth part using a bandwidth part indicator field in the DCI. For example, referring to FIG. 13, when the currently activated bandwidth part of the UE is bandwidth part #1 1301, the base station may instruct the UE to use bandwidth part #2 1302 by the bandwidth part indicator within the DCI, and the UE may perform the bandwidth part switch to the bandwidth part #2 1302 indicated by the bandwidth part indicator within the received DCI.

As described above, since the DCI-based bandwidth part switch may be indicated by the DCI scheduling the PDSCH or the physical uplink shared channel (PUSCH), when the UE receives a bandwidth part switch request, the UE should be able to seamlessly receive or transmit the PDSCH or the PUSCH scheduled by the corresponding DCI in the switched bandwidth part. To this end, requirements for delay time T_{BWP} required when switching the bandwidth part are regulated in the standard, which may be defined as in Table 34 below, for example.

**[Table 34]**

| ***µ*** | **NR Slot length (ms)** | **BWP switch delay T_{BWP} (slots)** | |
|---|---|---|---|
| | | **Type 1 ^{Note 1}** | **Type 2^{Note 1}** |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the smaller SCS between the SCS before BWP switch and the SCS after BWP switch. | | | |

The requirements for the bandwidth part switch delay time support type 1 or type 2, depending on the UE capability. The UE may report the supportable bandwidth part delay time type to the base station.

According to the requirements for the above-described bandwidth part switch delay time, when the UE receives DCI including a bandwidth part switch indicator in slot n, the UE may complete the switching to the new bandwidth part indicated by the bandwidth part switch indicator at a time no later than slot n + TBWP and perform transmission and reception of a data channel scheduled by the corresponding DCI in the changed new bandwidth part. When scheduling the data channel with the new bandwidth part, the base station may determine the time domain resource allocation for the data channel in consideration of the bandwidth part switch delay time T_{BWP} of the UE. That is, when scheduling the data channel with the new bandwidth part, the base station may schedule the corresponding data channel after the bandwidth part switch delay time in the method for determining time domain resource allocation for a data channel. Accordingly, the UE may not expect that the DCI indicating the bandwidth part switch indicates a slot offset (K0 or K2) value smaller than the bandwidth part change delay time T_{BWP}.

When the UE receives the DCI (e.g., DCI format 1_1 or 0_1) indicating the bandwidth part switch, the UE may not perform any transmission or reception during a time interval from a third symbol of a slot in which the PDCCH including the corresponding DCI is received to a start point of a slot indicated by the slot offset (K0 or K2) value indicated by a time domain resource allocation indicator field within the corresponding DCI. For example, when the UE receives the DCI indicating the bandwidth part switch in slot n and the slot offset value indicated by the corresponding DCI is K, the UE may not perform any transmission or reception from the third symbol of slot n to a symbol (i.e., the last symbol of slot n+K-1) before slot n+K.

Next, a method for configuring transmission and reception-related parameters for each bandwidth part in the 5G will be described.

The UE may be configured with one or multiple bandwidth parts from the base station, and may additionally be configured with parameters (e.g., configuration information related to uplink and downlink data channels and control channels, etc.) to be used for transmission and reception for each configured bandwidth part. For example, referring to FIG. 13, when the UE is configured with the bandwidth part #1 1301 and the bandwidth part #2 1302, the UE may be configured with transmission and reception parameter #1 for the bandwidth part #1 1301 and transmission and reception parameter #2 for the bandwidth part #2 1302. When the bandwidth part #1 1301 is activated, the UE may perform the transmission and reception with the base station based on the transmission and reception parameter #1, and when the bandwidth part #2 1302 is activated, the UE may perform the transmission and reception with the base station based on the transmission and reception parameter #2.

More specifically, the following parameters may be configured for the UE by the base station.

First, for the uplink bandwidth part, the pieces of information in Table 35 may be configured.

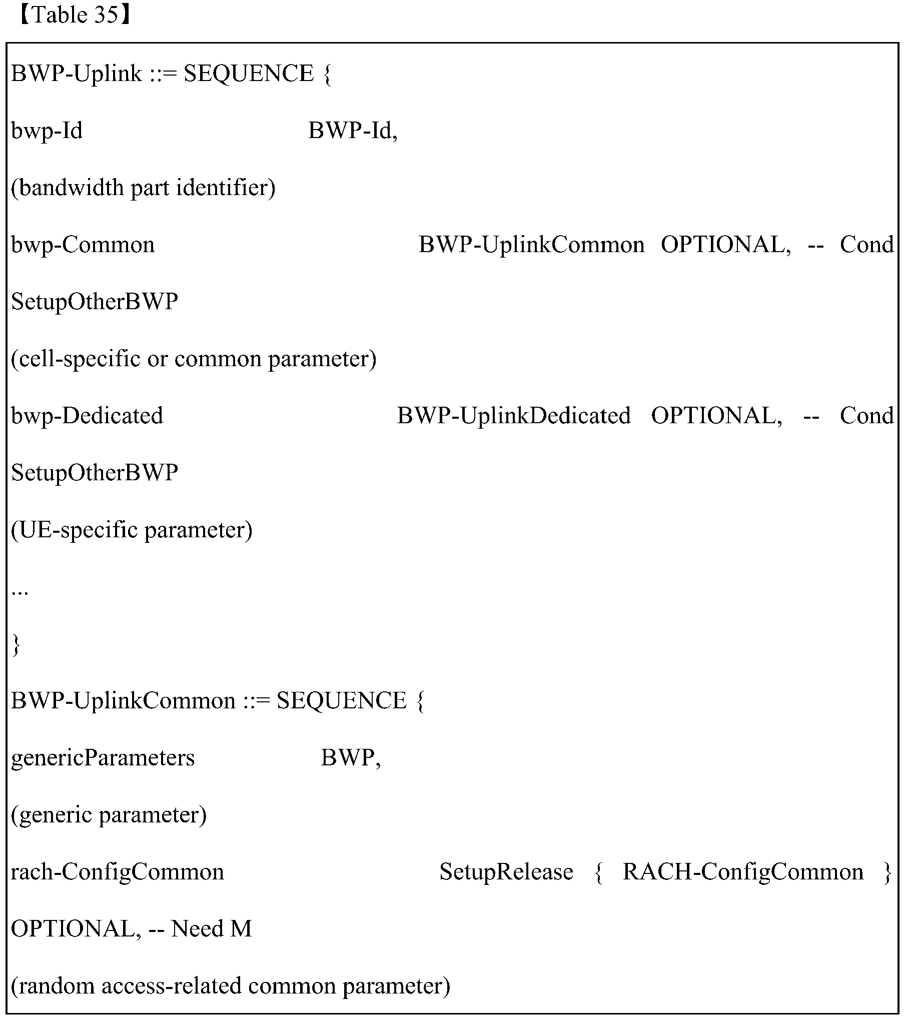

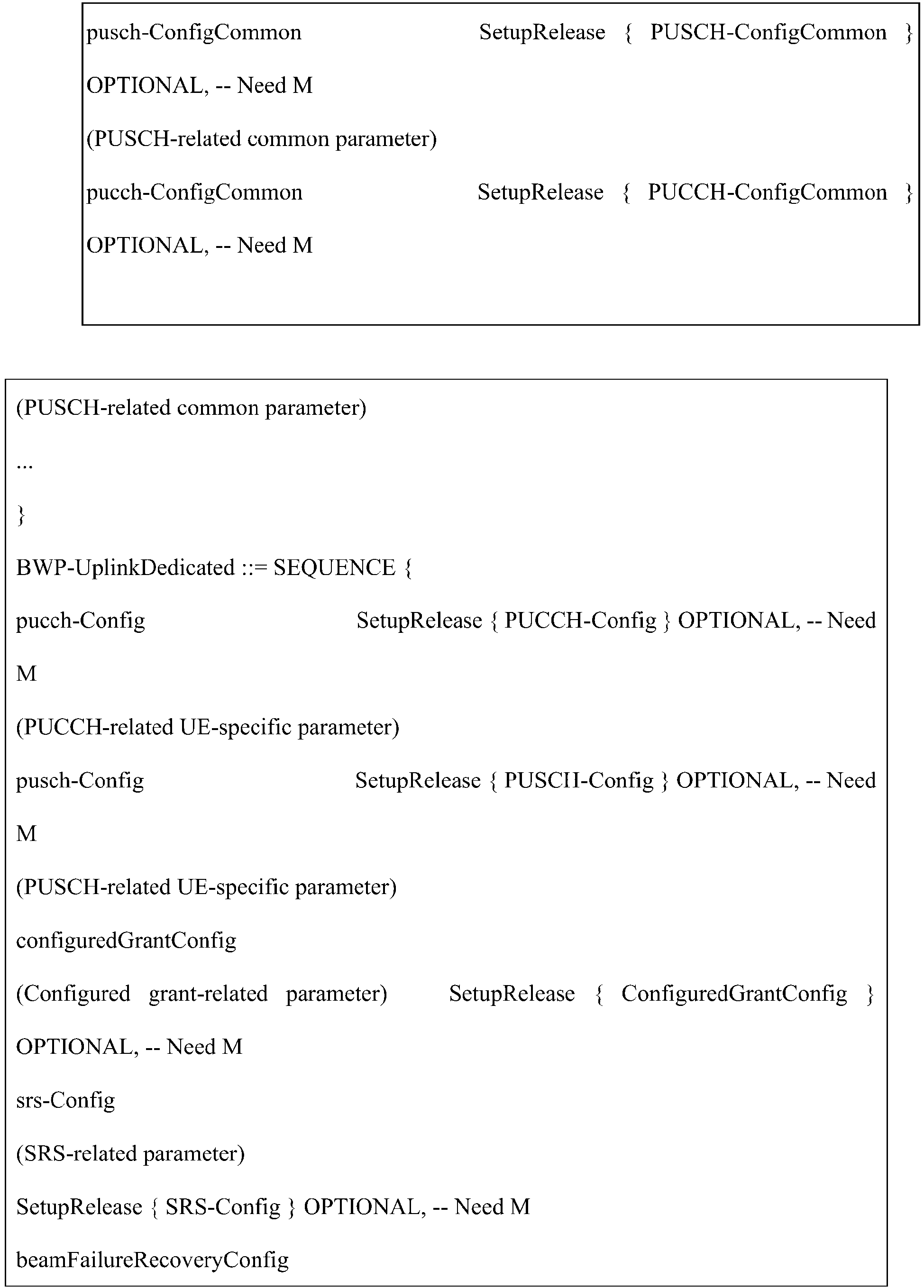

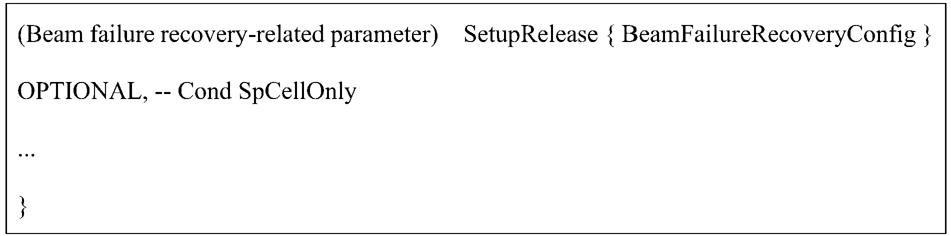

According to [Table 35], the UE may be configured, by the base station, with cell-specific (or cell-common or common) transmission-related parameters (e.g., parameters related to random access channel (RACH), physical uplink control channel (PUCCH), and physical uplink shared channel) (corresponding to BWP-UplinkCommon). In addition, the UE may be configured, by the base station, with the UE-specific (or dedicated) transmission-related parameters (e.g., parameters related to PUCCH, PUSCH, configured grant PUSCH, and sounding reference signal (SRS)) (corresponding to BWP-UplinkDedicated).

Next, for the downlink bandwidth part, the following pieces of information may be configured as shown in Table 36 below.

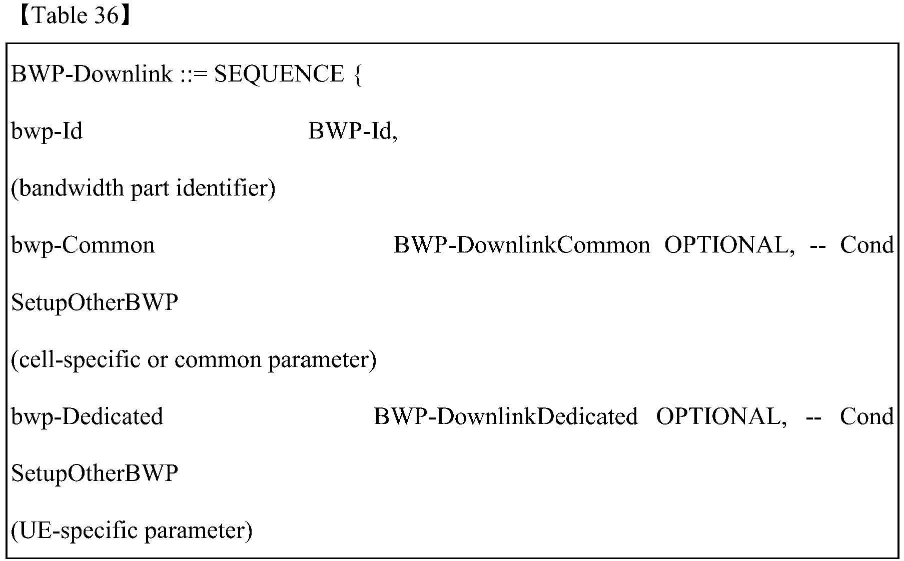

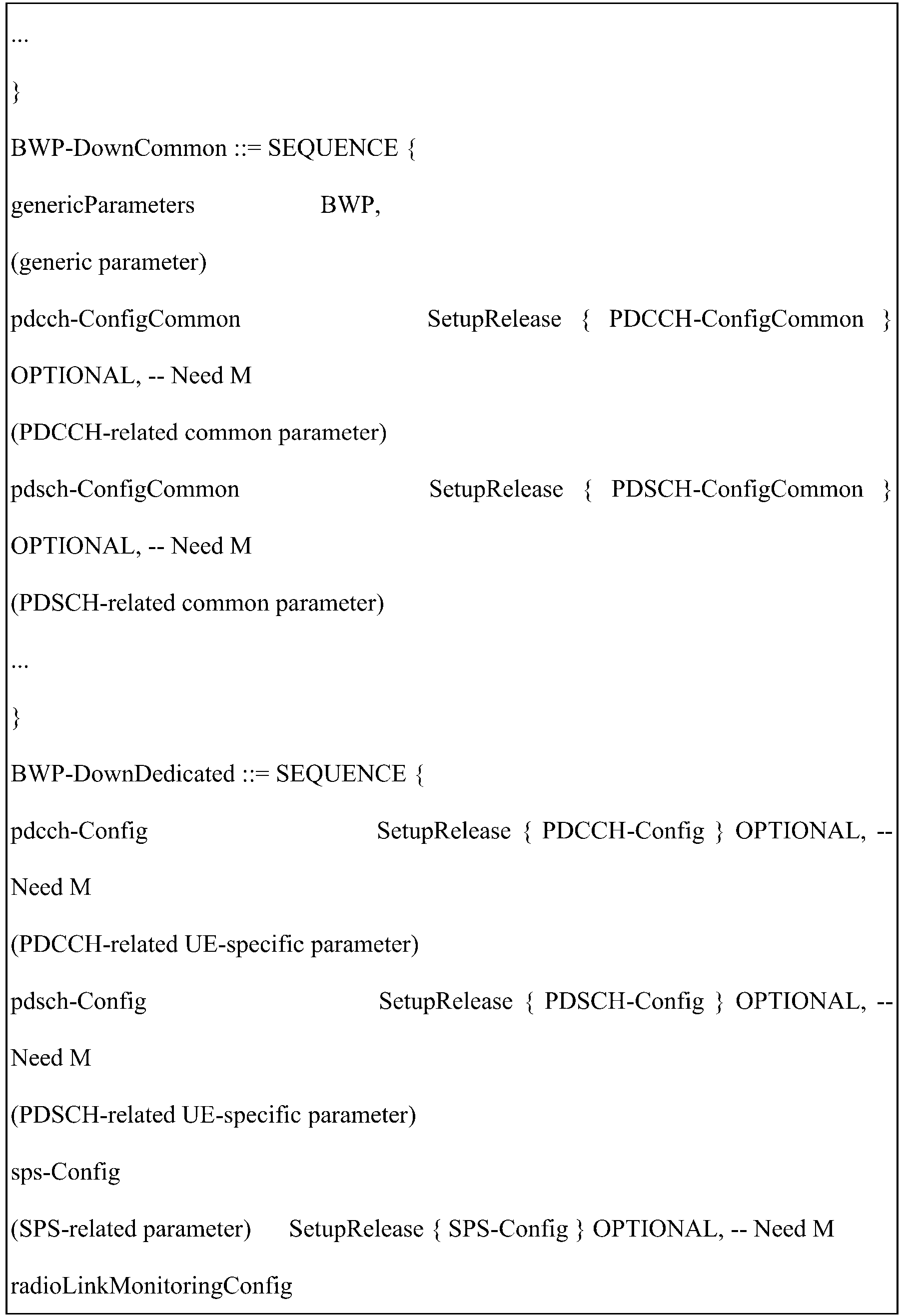

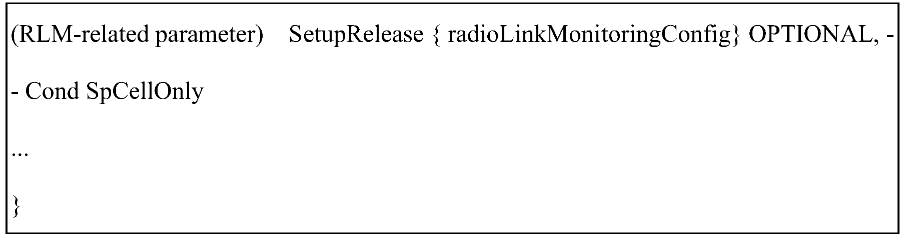

According to [Table 36], the UE may be configured, by the base station, with cell-specific (or cell-common or common) reception-related parameters (e.g., parameters related to random access channel (RACH), physical downlink control channel (PDCCH), and physical downlink shared channel) (corresponding to BWP-DownlinkCommon). In addition, the UE may be configured, by the base station, with the UE-specific (or dedicated) reception-related parameters (e.g., parameters related to PDCCH, PDSCH, configured grant-based downlink data transmission (semi-persistent scheduled PDSCH), and radio link monitoring (RLM)) (corresponding to BWP-UplinkDedicated).

Hereinafter, the discontinuous reception (DRX) configuration in the 5G communication system will be described in detail.

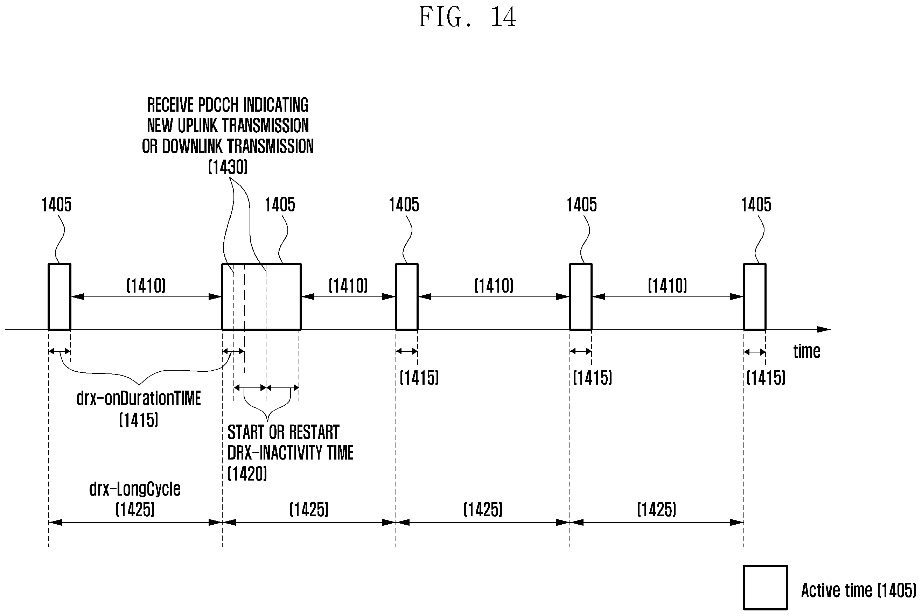

FIG. 14 illustrates discontinuous reception (DRX) in the 5G communication system according to an embodiment of the present disclosure.

The DRX is an operation in which a UE using services receives data discontinuously in an RRC connected state where a radio link is established between the base station and the UE. When the DRX is applied, the UE may turn on a receiver at a specific time point to monitor the control channel, and turn off the receiver if no data is received for a certain period to reduce the power consumption of the UE. The DRX operation may be controlled by a MAC layer device based on various parameters and timers.

Referring to FIG. 14, an Active Time 1405 is the time during which the UE wakes up at each DRX cycle to monitor the PDCCH. The Active time 1405 may be defined as follows.
- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, ra-ContentionResolutionTimer, etc., are timers whose values are configured by the base station and have a function of configuring the UE to monitor the PDCCH when predetermined conditions are satisfied.

drx-onDurationTimer 1415 is a parameter for setting a minimum time the UE stays awake in the DRX cycle. drx-InactivityTimer 1420 is a parameter for configuring an additional time during which the UE remains awake upon receiving a PDCCH indicating a new uplink or downlink transmission (1430). drx-RetransmissionTimerDL is a parameter for configuring a maximum time the UE remains awake to receive a downlink retransmission in a downlink HARQ procedure. The drx-RetransmissionTimerDL is a parameter for configuring a maximum time the UE remains awake to receive an uplink retransmission grant in an uplink HARQ procedure. drx-onDurationTimer, drx-InactivityTimer, drx-RetransmissionTimerDL, and drx-RetransmissionTimerUL may be configured, for example, as time, the number of subframes, the number of slots, etc. ra-ContentionResolutionTimer is a parameter for monitoring the PDCCH in the random access procedure.

inActive time 1410 is a time during which the PDCCH is not monitored or the PDCCH is not received during the DRX operation, and the remaining time after subtracting the Active Time 1405 from the total time of performing the DRX operation may be the inActive time 1410. When the UE does not monitor the PDCCH during the Active time (1405), it may enter a sleep or inActive state to reduce power consumption.

The DRX cycle refers to a periodicity at which the UE wakes up and monitors the PDCCH. That is, the DRX cycle refers to a time interval after the UE monitors the PDCCH until the UE monitors the next PDCCH or an on duration occurrence periodicity. The DRX cycle includes two types: a short DRX cycle and a long DRX cycle. The short DRX cycle may be applied optionally.

The long DRX cycle 1425 is the longer of the two DRX cycles configured for the UE. While operating in the long DRX, the UE restarts the drx-onDurationTimer 1415 at a time point at which a time corresponding the long DRX cycle 1425 has elapsed from a start point (e.g., a start symbol) of the drx-onDurationTimer 1415. When operating in the long DRX cycle 1425, the UE may start the drx-onDurationTimer 1415 in a slot after drx-SlotOffset in a subframe that satisfies [Equation 2] below. Here, the drx-SlotOffset represents a delay before starting the drx-onDurationTimer 1415. The drx-SlotOffset may be configured to, for example, a time, the number of slots, etc.$\left[\left(SFN\times 10\right)+subframe number\right] modulo \left(drx-LongCycle\right) = drx - StartOffset$

In this case, drx-LongCycleStartOffset may include long DRX cycle 1525 and drx-StartOffset, and may be used to define a subframe to start the long DRX cycle 1425. For example, the drx-LongCycleStartOffset may be set to time, the number of subframes, the number of slots, etc.

The short DRX cycle is the shorter of the two DRX cycles configured for the UE. The UE operates in the long DRX cycle 1425, when a predetermined event, such as receiving the PDCCH indicating a new uplink transmission or downlink transmission (1430), occurs during the active time 1405, the UE starts or restarts the drx-InactivityTimer 1420, and when the drx-InactivityTimer 1420 expires or receives a DRX command MAC CE, the drx-InactivityTimer 1420 may operate in the short DRX cycle. For example, in FIG. 14, the UE may start the drx-ShortCycleTimer at the time point at which the previous drx-onDurationTimer 1415 or the drx-InactivityTimer (1420) expires, and operate in a short DRX cycle until the drx-ShortCycleTimer expires. When the UE receives the PDCCH indicating the new uplink transmission or downlink transmission (1430), the UE may extend the active time 1405 or delay the arrival of the InActive Time 1410 with the expectation of additional uplink transmission or downlink transmission in the future. While operating in the short DRX, the UE restarts the drx-onDurationTimer 1415 at a time point after a time corresponding to the short DRX cycle has elapsed from the start point of the previous on duration. Thereafter, when the drx-ShortCycleTimer expires, the UE operates in the long DRX cycle 1425 again.

When operating in the short DRX cycle, the UE may start the drx-onDurationTimer 1415 after the drx-SlotOffset in a subframe that satisfies [Equation 3] below. Here, the drx-SlotOffset represents a delay before starting the drx-onDurationTimer 1415. For example, the drx-SlotOffset may be configured to a time, the number of slots, etc. 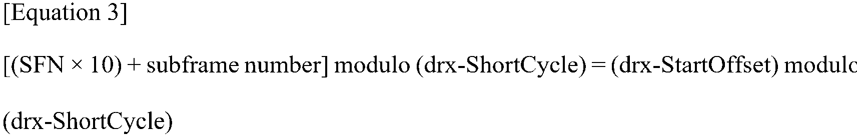 [Equation 3] [(SFN × 10) + subframe number] modulo (drx-ShortCycle) = (drx-StartOffset) modulo (drx -ShortCycle)

Here, drx-ShortCycle and drx-StartOffset may be used to define a subframe to start the short DRX cycle. The drx-ShortCycle and the drx-StartOffset may be configured, for example, to a time, the number of subframes, the number of slots, etc.

So far, the DRX operation has been described with reference to FIG. 14. According to an embodiment, the UE may reduce the power consumption of the UE by performing the DRX operation. However, even if the UE performs the DRX operation, the UE does not always receive the PDCCH related to the UE at the active time 1405. Therefore, in an embodiment of the present disclosure, a signal controlling the operation of the UE may be provided to save the power of the UE more efficiently.

In the 5G system, the UE in a new state called RRC_INACTIVE has been defined to reduce the energy and time consumed for an initial access of the UE. The RRC_INACTIVE UE may perform the following process in addition to the operations performed by the RRC_IDLE UE.
- Storage of access stratum (AS) information required for cell access,
- UE-specific DRX cycle operation configured by an RRC layer,
- Configuration and periodic updating of a radio access network (RAN)-based notification area (RNA) that may be utilized during handover by the RRC layer
- Monitoring of an RAN-based paging message transmitted via inactive-radio network temporary identifier (I-RNTI).

The UE in the RRC_CONNECTED state may change from RRC_CONNECTED to RRC_INACTIVE or RRC_IDLE state by receiving an RRC Release indication from the base station.

The UE in the RRC_INACTIVE or RRC_IDLE state may change from RRC_INACTIVE or RRC_IDLE to RRC_CONNECTED state by performing random access and completing all random access procedures.

The following describes a scheduling method in which the base station transmits downlink data to a UE or instructs the UE to transmit uplink data.

The downlink control information (DCI) may be control information transmitted by the base station to the UE via the downlink. The downlink control information may include downlink data scheduling information or uplink data scheduling information for a predetermined UE. Generally, the base station may independently channel-code the DCI for each UE and then transmit it to each UE via the physical downlink control channel (PDCCH) that is the downlink physical control channel.

The base station may apply and operate a predefined DCI format to the UE to be scheduled, depending on purposes such as whether the DCI is scheduling information (downlink assignment) for downlink data, whether the DCI is scheduling information (uplink grant) for uplink data, or whether the DCI is DCI for power control.

The base station may transmit the downlink data to the UE via the physical downlink shared channel (PDSCH) that is a physical channel for downlink data transmission. The scheduling information, such as a specific mapping position of the PDSCH in the time and frequency domains, a modulation scheme, HARQ-related control information, and power control information, may be informed to the UE by the base station through the DCI related to the downlink data scheduling, among the DCI transmitted via the PDCCH.

The UE may transmit the uplink data to the base station via the physical uplink shared channel (PUSCH) that is a physical channel for uplink data transmission. The base station may inform the scheduling information, such as a specific mapping position of the PUSCH in the time and frequency domains, the modulation scheme, the HARQ-related control information, and the power control information to the UE by the base station through the DCI related to uplink data scheduling, among the DCI transmitted via the PDCCH.

In the case of an RRC_IDLE/RRC_INACTIVE UE, the above-described DRX operation is performed, and a paging message is received. The UE may monitor paging occasion (PO) once during the DRX cycle. The PO may be a set of PDCCH monitoring occasions and may include multiple time slots (or subframes, or OFDM symbols) in which paging control information may be transmitted or received. A paging frame (PF) may be one radio frame (10ms) and may include one or multiple POs or a start point (e.g., offset) of the PO.

The PF and the PO may be determined by the following Equation.

A system frame number (SFN) for the PF may be determined by (SFN + PF_offset) mod T = (T div N) * (UE_ID mod N), where PF_offset is an offset for determining the PF, T is the DRX cycle, N is the number of PFs per DRX cycle (e.g., cell-common, cell-specific), which may be determined by a higher signal such as system information, and UE_ID is UE ID (e.g., 5G-S-TMSI), which may be determined by a core network.

The PFs determined by N may refer to paging frames that are commonly applied to UEs within a cell. Hereinafter, for convenience, may be referred to as cell-common PFs.

i_s, which indicates the PO index, may be determined by i_s = floor (UE_ID/N) mod Ns, where Ns may refer to the number of POs in one PF and may be determined by a higher signal such as system information.

For example, assuming that PF_offset=3, T=128, N=T/4=32, Ns=4, UE_ID mod 32 is 1, and UE_ID has floor(UE_ID/32) mod 4 of 1, parameter values may be determined by the following Equation:
$\left(SFN+3\right) mod 128 = \left(128 div 32\right) * \left(UE_ID mod 32\right) = 4 * 1 = 4 ,$
i_s = floor (UE_ID/32) mod 4 = 1

Therefore, the PF, which is the paging frame that a UE with the UE_ID should receive, may be determined from among the cell-common PFs as a radio frame with SFNs of 1, 129, 257, ..., and the PO may be determined as an (i_s + 1)th PO among the four POs within the PF.

The reception of Paging Early Indication (PEI) will be described in more detail below. In order to reduce the UE power consumed while monitoring and receiving the paging control channel and the paging data channel during each DRX cycle, the UE may receive PEI.

According to various embodiments of the present disclosure, the UE may monitor or receive PEI occasion (PEI-O) once before receiving paging during the DRX cycle. When the UE receives the PEI and the PEI indicates a subgroup and paging occasion to which the UE belongs, the UE belonging to the subgroup may monitor the associated paging occasion (PO). When the UE does not detect the PEI in the PEI occasion or the PEI does not indicate the subgroup and paging occasion to which the UE belongs, the UE does not need to monitor the associated paging occasion (PO), thereby reducing the UE power consumption.

The UE may determine the PEI occasion as follows. The PEI occasion may be located behind by a subframe offset with respect to a radio frame of a reference point that is located ahead by pei-FrameOffset, based on a PF including an associated PO. The UE may monitor the PEI at the PEI occlusion determined by the above-described scheme. Here, pei-FrameOffset, subframe offset, etc., may be determined by the higher signals such as the system information.

For convenience in the following description, cells, transmission points, panels, beams, or/and transmission directions, etc., which may be distinguished by higher layer/L1 parameter such as TCI state or spatial relation information, or by indicators such as cell ID, TRP ID, and panel ID, may be uniformly referred to as a transmission reception point (TRP) (transmission point), beam, or TCI state. Therefore, in actual application of the present disclosure, the TRP, beam, or TCI state may be appropriately replaced with one of the above-described terms.

Hereinafter, while the present disclosure is described below using the 5G system as an example, the embodiments of the present disclosure may also be applied to other communication systems with similar technical backgrounds or channel types. For example, LTE or LTE-A mobile communications, as well as mobile communication technologies developed after the 5G may be included. Therefore, the embodiments of the present disclosure may be applied to other communication systems with some modifications, as determined by those skilled in the art, without significantly departing from the scope of the present disclosure. The contents of the present disclosure are applicable to FDD, TDD, and/or XDD (or SBFD, full duplex) systems.

Hereinafter, in describing the present disclosure, the higher layer signaling may be signaling corresponding to at least one or one or more combinations of the following signaling types.
- MIB (Master Information Block)
- SIB (System Information Block) or SIB X (X=1, 2, ...)
- RRC (Radio Resource Control)
- MAC (Medium Access Control) CE (Control Element)

In addition, the L1 signaling may refer to signaling using at least one or one or more combinations of signaling methods using physical layer channels or signaling described below.
- PDCCH (Physical Downlink Control Channel)
- DCI (Downlink Control Information)
- UE-specific DCI
- Group common DCI
- Common DCI
- Scheduling DCI (e.g., DCI used for scheduling downlink or uplink data)
- Non-scheduling DCI (e.g., DCI not used for scheduling downlink or uplink data)
- PUCCH (Physical Uplink Control Channel)
- UCI (Uplink Control Information)

Hereinafter, the term "slot" as used in the present disclosure is a general term that may refer to a specific time unit corresponding to the transmit time interval (TTI), and specifically, may refer to a slot used in the 5G NR system, or a slot or a subframe used in the 4G LTE system.

In the present disclosure, deep sleep and ultra deep sleep may be distinguished depending on which components within the cell/base station may be turned off. Taking a main radio (MR) as an example, when the main radio is completely OFF, all components within the main radio may be OFF. When the main radio is in the deep sleep state, an oscillator, radio frequency-front end (RF-FE), and baseband modem may be OFF, while a control processor and a double data rate (DDR) memory may still remain ON. When the main radio is in the ultra deep sleep state, the oscillator, the radio frequency-front end (RF-FE), and the baseband modem may be OFF, and the control processor and the DDR memory may also operate at very low power or be OFF entirely.

The present disclosure may apply to RRC idle, RRC inactive, and RRC connected UE.

In the present disclosure, the expression that a specific cell is for data communication and/or only for data communication may include that the specific cell not only performs data communication but also performs transmission and reception of other signals. For example, signal transmission and reception other than sync and/or access may be included in the data communication.

In the present disclosure, the expression that a cell transitions to a particular state may include that the cell maintains the particular state without changing its state. For example, the expression that the cell transitions to the deep sleep state or the ultra-deep sleep state may include that the cell maintains the deep sleep state or the ultra-deep sleep state.

Hereinafter, the present disclosure describes the above examples through multiple embodiments, but these embodiments are not independent and one or more embodiments can be applied simultaneously or in combination.

As described above, in the 5G system, to achieve ultra-high-speed data services reaching several Gbps, ultra-wideband signal transmission and reception are supported or a spatial multiplexing method using multiple transmitting and receiving antennas is utilized, while various power saving modes are supported to reduce power consumption of the UE. On the other hand, excessive power consumption may also occur even in the base station.

For example, the required number of power amplifiers (PAs) increases in proportion to the number of transmitting antennas equipped in the base station or the UE. The maximum output of the base station and the UE depends on the characteristics of the power amplifiers, and generally, the maximum output of the base station varies depending on the size of the cell covered by the base station. The maximum output is usually expressed in dBm units. The maximum output of the UE is usually 23 dBm or 26 dBm.

As an example of a commercial 5G base station, the base station is equipped with 64 transmitting antennas and corresponding 64 power amplifiers in the 3.5 GHz frequency band and may operate at a bandwidth of 100 MHz. Consequently, the energy consumption of the base station increases in proportion to the output of the power amplifier and the operating time of the power amplifier.

Compared to the LTE base station, the 5G base station has a relatively higher operating frequency band and is therefore characterized by a wider bandwidth and a larger number of transmitting antennas. While such a feature has the effect of increasing the data rate, a cost of increased energy consumption of the base station incurs. Therefore, as the number of base stations in the mobile communication network increases, the overall energy consumption of the network increases in proportion to the number of gNBs.

As described above, the energy consumption of the base station is largely affected by the operation of the power amplifiers. Since the power amplifier is involved in the transmission operation of the base station, the downlink (DL) transmission operation of the base station is highly correlated with its energy consumption. The uplink (UL) reception operation of the base station relatively accounts for a small portion of the energy consumption of the base station.

The physical channel and the physical signal transmitted by the base station over the downlink are as follows.
- Physical Downlink Shared Channel (PDSCH): It is a downlink data channel including data to be transmitted to one or multiple UEs.
- Physical Downlink Control Channel (PDCCH): It is a downlink control channel including the scheduling information for the PDSCH and the physical uplink control channel (PUSCH). Alternatively, the PDCCH may be transmitted alone without the PDSCH or PUSCH to be scheduled, and the corresponding PDCCH may transmit control information such as slot format information and power control commands. The scheduling information includes resource information mapped to the PDSCH or the PUSCH, the hybrid automatic repeat request (HARQ)-related information, the power control information, etc.
- Physical Broadcast Channel (PBCH): Downlink broadcast channel providing the master information block (MIB), which is essential system information required for the transmission and reception of the data channel and control channel of the UE.
- Primary Synchronization Signal (PSS): Signal that serves as a reference for DL time and/or frequency (hereinafter time/frequency) synchronization and provides the remaining partial information of the cell ID.
- Secondary Synchronization Signal (SSS): Signal that serves as a reference for DL time/frequency synchronization and provides the remaining partial information of the cell ID.
- Demodulation Reference Signal (DM-RS): Reference signal for UE's channel estimation for each of the PDSCH, PDCCH, and PBCH.
- Channel-state Information Reference Signal (CSI-RS): Downlink signal that serves as a reference for the downlink channel state measurement of the UE.
- Phase-tracking Reference Signal (PT-RS): Downlink signal for phase tracking.

From the perspective of the base station energy saving, when the base station stops the downlink transmission, the power amplifier operation stops accordingly, thereby enhancing the energy saving effect of the base station, and additional energy savings may be achieved as operations of the other base station apparatuses, such as baseband equipment, as well as a power amplifier, are reduced.

Similarly, even though the uplink reception operation accounts for a relatively small fraction of the total energy consumption of the base station, stopping the uplink reception may obtain additional energy saving effect.

The downlink transmission operation of the base station fundamentally depends on the amount of downlink traffic. For example, when there is no data to transmit to a UE over the downlink, the base station does not need to transmit the PDSCH or the PDCCH for scheduling the PDSCH. Alternatively, when the transmission may be temporarily deferred for reasons such as the data not being sensitive to the transmission latency, the base station may not transmit the PDSCH or/and the PDCCH.

In contrast, the physical channels and the physical signals such as PSS, SSS, PBCH, and CSI-RS are characterized by being transmitted repeatedly at a predetermined periodicity, regardless of data transmission to the UE. Therefore, even if the UE does not receive data, the UE may continuously update downlink time/frequency synchronization, downlink channel state, radio link quality, etc. In other words, the PSS, SSS, PBCH, and CSI-RS are required to be essentially transmitted to the downlink regardless of the downlink data traffic, thereby causing the energy consumption of the base station. Therefore, the base station energy saving may be achieved by controlling the transmission of the signals, which are unrelated to (or have low relevance to) data traffic, to occur less frequently.

Through the two base station energy saving methods described above, the base station energy saving effect may be maximized by stopping or minimizing the operation of the power amplifier of the base station, the operations of the related RF devices, baseband devices, etc., during the time interval when the base station is not performing the downlink transmission.

As another method, the energy consumption of the base station may be reduced by switching off parts of the antenna or power amplifier of the base station. In this case, adverse effects such as a reduction in cell coverage and a reduction in throughput may occur as a counter-effect to the energy saving effect of the base station.

For example, the base station, which has 64 transmitting antennas and corresponding 64 power amplifiers in the 3.5 GHz frequency band as described above and operates in a 100 MHz bandwidth, activates only 4 transmitting antennas and 4 power amplifiers for a predetermined time interval and switches the rest off in order to save base station energy, the base station energy consumption during the corresponding time interval will be reduced to approximately 1/16 (= 4/64). However, due to the reduction in maximum transmission power and beamforming gain, it becomes difficult to achieve the cell coverage and throughput when assuming the existing 64 antennas and power amplifiers.

The above-described base station energy saving methods may be further reclassified into three categories. There are base station energy saving methods in the frequency domain that adjust the size of the BWP according to the base station traffic, base station energy saving methods in a spatial domain that adaptively reduce the number of antenna ports, and base station energy saving methods in a time domain that adjust cycles of CSI-RS, SSB, and DRX. The base station energy saving method of the three schemes may be used individually or in combination according to base station characteristics such as traffic or coverage, and information regarding such changes shall be shared with or transmitted to the UE.

Consequently, in the situation in which the above changed information or energy saving mode is shared with the UE, the impact of the energy saving mode on high energy-consuming technologies such as carrier aggregation/dual connectivity (CA/DC), PDSCH/PUSCH/PUCCH repetition, and multi-TRP (mTRP) should be examined.

The base station energy saving method proposed in the present disclosure is described below through specific embodiments. The embodiments described below may be implemented individually and/or at least in part in combination.

First, a structure of a network communication system for realizing energy saving may be considered.

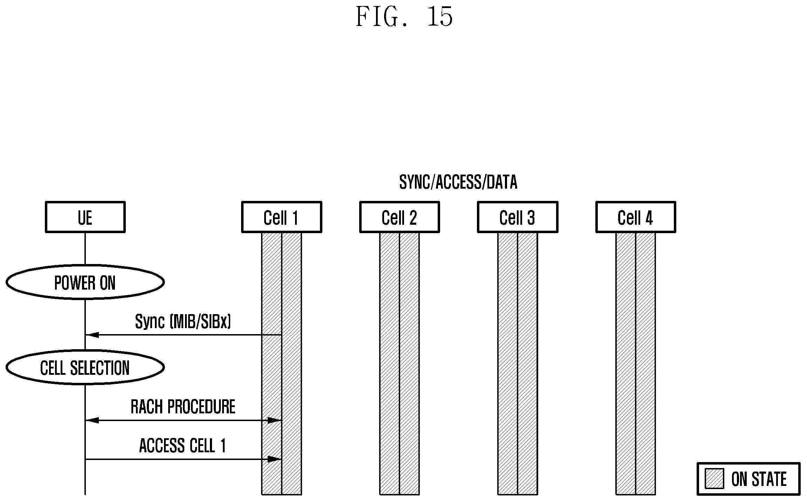

FIG. 15 is a diagram for describing an existing network communication system according to an embodiment of the present disclosure.

Referring to FIG. 15, cell 1 and cells 2, 3, and 4, which are multiple cells, are illustrated. Since all cells should support not only UEs (or connected UE, RRC connected UE) in a connected state but also UEs (or idle UE, RRC idle UE) (and/or RRC inactive UE) in an idle state, the base station energy saving should be achieved at a short period such as light sleep or micro sleep for periodic reference signal (e.g., SSB) transmission even when no traffic is present.

Although multiple cells are illustrated in FIG. 15, it should be noted that a cell may correspond to at least one of a distributed unit (DU), a radio unit (RU), a transmission and reception point (TRP), or a carrier, but is not limited thereto.

Referring to FIG. 15, the idle UE may synchronize with a cell (e.g., cell 1) transmitting a sync signal, select a cell for initial access, and perform a random access channel (RACH) procedure, thereby finally accessing a cell. FIG. 15 illustrates a case where the UE accesses the cell 1 to perform communication. In the conventional communication system of FIG. 15, it may be difficult to achieve network power saving because all cells are kept powered on for sync with and/or access the UE in consideration of mobility of the idle UE.

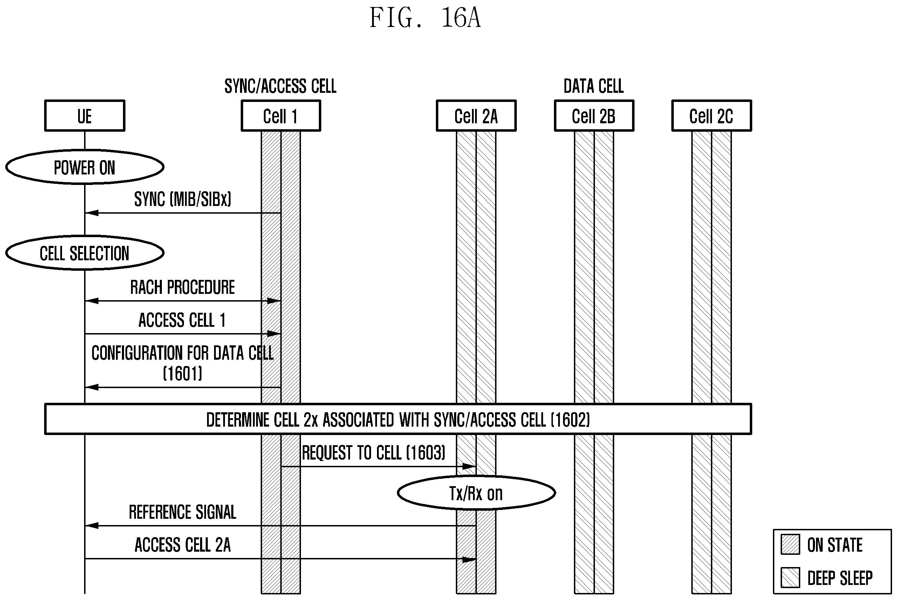

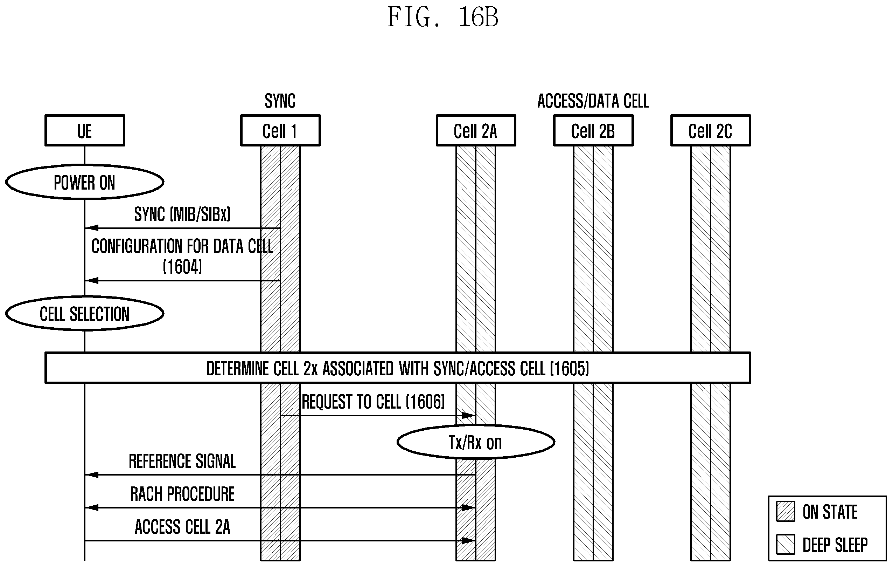

FIGS. 16A and 16B are diagrams for describing a network communication system for realizing energy saving according to an embodiment of the present disclosure.

Referring to FIG. 16A, multiple cells, for example, cell 1 and cell 2 (cell 2A, cell 2B, and cell 2C), are illustrated. Unlike FIG. 15, cell 1 is a sync/access cell, and cell 2 (cell 2A, cell 2B, and cell 2C) may be a cell (data cell) that performs only data communication with the UE without performing the sync/access function. For example, a cell that performs only the data communication to the UE may include not only a cell for only data communication/performing only data communication, but also a cell that performs functions other than sync/access function. For example, the data communication may include the transmission and reception of the reference signal and/or other signals. Hereinafter, unless specifically stated otherwise, the cell 2 in the present disclosure may be understood to include one or more cells, for example, cell 2A, cell 2B, and cell 2C. That is, the cell 2 in the present disclosure may be understood to be one or more cells distinct from the cell 1.

Although multiple cells are illustrated in FIG. 16A, it should be noted that a cell may correspond to at least one of a distributed unit (DU), a radio unit (RU), a transmission and reception point (TRP), or a carrier, but is not limited thereto.

Referring to FIG. 16A, the idle UE synchronizes with the cell 1 transmitting the sync signal, and performs a random access channel (RACH) procedure on the cell 1 for initial access, thereby finally accessing the cell 1. After the initial access to the cell 1, the UE attempts to access a cell (e.g., cell 2A, cell 2B, or cell 2C) to transmit and receive actual data. In FIG. 16A, it is assumed that the cell 1 may control the cell 2A, cell 2B, and cell 2C to save network power. Therefore, the cell 1 may provide the UE with the configurations for the cells controlled by the cell 1 (1601). In addition, the cell 1 may determine cells to control through an inter-cell interface (1602).

Specifically, the cell 1 may control Tx/Rx power on/off of the controlled cell(s), e.g., cell 2A, cell 2B, and/or cell 2C. Accordingly, when the cell 1 requests the controlled cell(s) to turn the Tx/Rx power on (1603), the corresponding cell may transmit and receive signals to and from the UE. The cell 1 may transmit the Tx/Rx power on request to one or more of the controlled cells and the cell receiving the corresponding request may perform the corresponding operation. For example, when the cell 1 requests the cell 2A to turn the Tx/Rx power on, the cell 2A may perform data communication with the UE.

There may be various methods for turning the Tx/Rx power on/off of the cell(s) controlled by the cell 1. For example, the location information of the UE may be utilized. For example, based on the location information of the UE, the cell 2A is determined among cells 2A to 2C as the cell for data communication with the UE, and the cell 1 may perform the Tx/Rx power on request for the determined cell 2A. However, it should be noted that the present disclosure does not limit such a method to a specific method.

Through the method according to an embodiment of the present disclosure exemplified in FIG. 16A, the cell 2A, cell 2B, and cell 2C may be in the deep sleep state, and only the cell(s) for which the Tx/Rx is turned on by the request from the cell 1 may be powered on (on state), thereby enabling transmission of signals to the UE and/or reception of signals from the UE.

In FIG. 16A, the reference signal is illustrated as the signal transmitted by the cell(s) for which the Tx/Rx is turned on, but it should be noted that the present disclosure does not limit the signal transmitted by the cell(s) for which the Tx/Rx is turned on to a specific signal. Therefore, the UE may receive the reference signal from the cell(s) for which the Tx/Rx is turned on and perform the data communication. FIG. 16A illustrates a case where the UE performs data communication with the cell 2A.

Next, referring to FIG. 16B, multiple cells, for example, cell 1 and cell 2 (cell 2A, cell 2B, and cell 2C), are illustrated. Unlike FIG. 16A, the cell 1 is a cell for sync (synchronization cell), and the cell 2 (cell 2A, cell 2B, and cell 2C) may be cells (access/data cell) that perform initial connection and data communication with the UE without performing the synchronization function. Although multiple cells are illustrated in FIG. 16B, it should be noted that a cell may correspond to at least one of a distributed unit (DU), a radio unit (RU), a transmission and reception point (TRP), or a carrier, but is not limited thereto.

Referring to FIG. 16B, the idle UE may synchronize with the cell transmitting the sync signal and select the corresponding cell. FIG. 16B illustrates a case where the cell 1 is selected.

In FIG. 16B, it is assumed that the cell 1 may control the cell 2 (cell 2A, cell 2B, and cell 2C) to save the network power. Therefore, the cell 1 may provide the UE with the configurations for the cells controlled by the cell 1 (1604). And/or, the cell 1 may determine cells to control through an inter-cell interface (1605).

Specifically, the cell 1 may control the Tx/Rx power on/off of the controlled cell(s), e.g., cell 2A, cell 2B, and/or cell 2C. Accordingly, when the cell 1 requests the controlled cell(s) to turn the Tx/Rx power on (1606), the corresponding cell may transmit and receive signals to and from the UE. The cell 1 may transmit the Tx/Rx power on request to one or more of the controlled cells and the cell receiving the corresponding request may perform the corresponding operation. For example, when the cell 1 requests the cell 2A to turn the Tx/Rx power on, the cell 2A may perform data communication with the UE.

There may be various methods for turning the Tx/Rx power on/off of the cell(s) controlled by the cell 1. For example, the location information of the UE may be utilized. For example, based on the location information of the UE, the cell 2A is determined among cells 2A to 2C as the cell for data communication with the UE, and the cell 1 may perform the Tx/Rx power on request for the determined cell 2A. However, it should be noted that the present disclosure does not limit such a method to a specific method.

Through the method according to an embodiment of the present disclosure exemplified in FIG. 16B, the cell 2 (cell 2A, cell 2B, and cell 2C) may be in the deep sleep state, and only the cell(s) for which the Tx/Rx is turned on by the request from the cell 1 may be powered on (on state), thereby enabling transmission of signals to the UE and/or reception of signals from the UE. In FIG. 16B, the reference signal is illustrated as the signal transmitted by the cell(s) for which the Tx/Rx is turned on, but it should be noted that the present disclosure does not limit the signal transmitted by the cell(s) for which the Tx/Rx is turned on to a specific signal. Unlike FIG. 16A, FIG. 16B illustrates a case where the random access channel (RACH) procedure is performed with the cell(s) for which the Tx/Rx is turned on by the cell 1. For example, the reference signal may include a sync signal, such that the UE is in a state in which at least DL synchronization has been acquired and/or is in a state in which at least DL synchronization is established with Cell 2 (at least one of Cell 2A, Cell 2B, and Cell 2C). Accordingly, the UE may perform the RACH procedure. FIG. 16B illustrates a case where the UE performs data communication by accessing the cell 2A after performing the RACH procedure to the cell 2A.

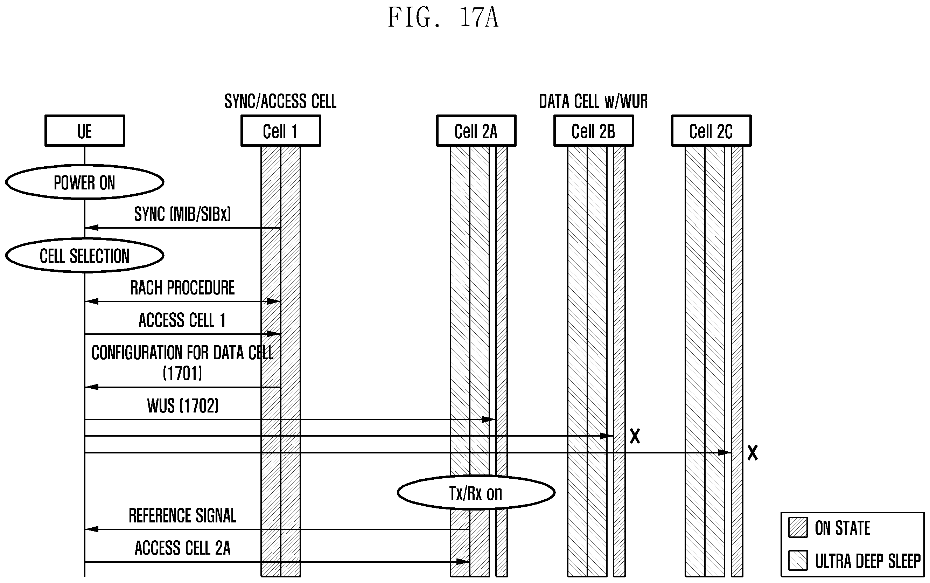

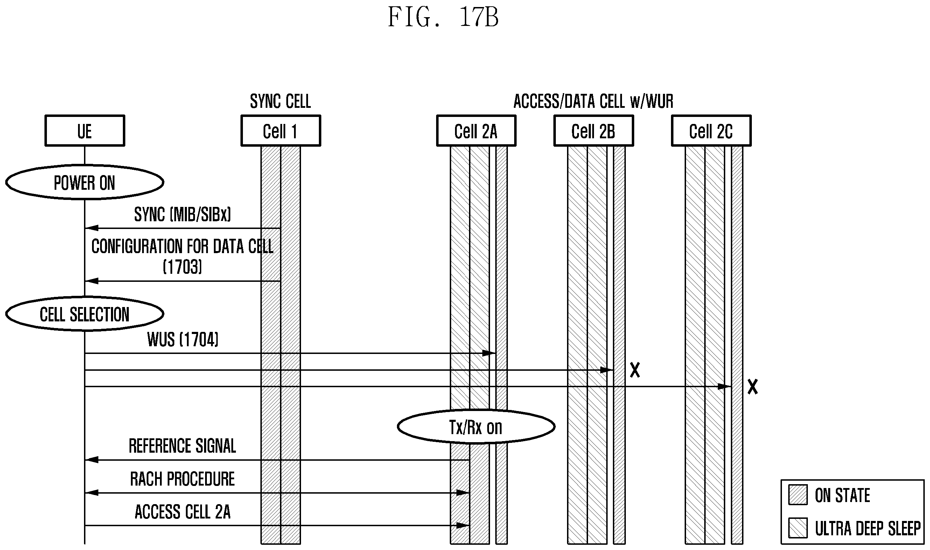

FIGS. 17A and 17B are diagrams for describing the network communication system for realizing energy saving according to an embodiment of the present disclosure.

Referring to FIG. 17A, multiple cells, for example, cell 1 and cell 2 (cell 2A, cell 2B, and cell 2C), are illustrated. The cell 1 is a sync/access cell, and cell 2 (cell 2A, cell 2B, and cell 2C) may be a cell (data cell) that performs only data communication with the UE without performing the sync/access function. For example, a cell that performs only the data communication to the UE may include not only a cell for only data communication/performing only data communication, but also a cell that performs functions other than sync/access function. For example, the data communication may include the transmission and reception of the reference signal and/or other signals.

Unlike FIGS. 16A and 16B, in the system of FIGS. 17A and 17B, the cell 2A, cell 2B, and cell 2C may include a wake-up receiver (WUR). When the cells include the WUR, the cell 2 (cell 2A, cell 2B, and cell 2C) may turn off the main radio (MR) to enter the ultra-deep sleep state, which may be more advantageous for energy saving. Although multiple cells are illustrated in FIG. 17A, it should be noted that the cell may correspond to at least one of the distributed unit (DU), the radio unit (RU), the transmission and reception point (TRP), or the carrier, but is not limited thereto.

Referring to FIG. 17A, the idle UE may synchronize with the cell 1 transmitting the sync signal, select a cell for initial access among cell 1, the cell 2A, the cell 2B, or the cell 2C, and perform the random access channel (RACH) procedure, thereby finally accessing the cell. In FIG. 17A, it is assumed that the cell 1 may provide the information on the cell 2 (cell 2A, cell 2B, and cell 2C). Therefore, the cell 1 may provide the UE with configurations for other cells (cell 2A, cell 2B, and cell 2C) (1701). The UE transmitting the corresponding information may transmit a wake-up signal (WUS) to the other cells (cell 2A, cell 2B, and cell 2C) (1702). Furthermore, the cells (cell 2A, cell 2B, and cell 2C) that were in the ultra-deep sleep state receive the WUS signal and turn on the MR (on state), thereby enabling transmission of signals to and/or reception of signals from the UE.

When the MR of all cells (cell 2A, cell 2B, and cell 2C) is turned on, the network power saving effect may be reduced. Therefore, it is necessary to ensure that only the required cells are woken up through various methods. For example, a method may be considered to turn on the MR (i.e., transition the MR to the on state) only when the strength of the WUS signal received by the cells (cell 2A, cell 2B, and cell 2C) that were in the ultra-deep sleep state is more than/exceeds a predetermined threshold. Here, the strength of the WUS signal may be referred to as wake-up signal received power (WUSRP). As a method for configuring the above threshold, various methods may be considered. For example, the configurations using the RRC, the MAC-CE, the DCI, or a combination thereof may be considered. And/or the configuration based on the inter-cell interface (and/or inter-base station interface) may be considered. And/or the threshold may be configured from the core network. And/or the threshold may be predefined. And/or combinations of at least some of the above-described methods for configuring a threshold may be considered. In addition, it should also be noted that the present disclosure does not limit the method for enhancing a network power saving effect to the above-described method. That is, the above-described method is an embodiment of the present disclosure, and the present disclosure is not limited to the above-described embodiment of the present disclosure.

It should be noted that, in FIG. 17A, the reference signal is illustrated as the signal transmitted by the cell(s) in which the MR is turned on, but the present disclosure does not limit the corresponding signal to a specific signal.

FIG. 17A illustrates a case where the MR of the cell 2A having received the WUS, is turned on, transmits the reference signal to the UE, and performs the data communication. For example, the UE may transmit the WUS to the cell 2A, cell 2B, and cell 2C. Among these, the MR of the cell 2A, which has received the WUS signal having the strength more than/exceeding the threshold, is turned on to transmit the reference signal to the UE and perform the data communication.

Next, referring to FIG. 17B, multiple cells, for example, cell 1 and cell 2 (cell 2A, cell 2B, and cell 2C), are illustrated. Unlike FIG. 17A, the cell 1 is a cell for sync (synchronization cell), and the cell 2 (cell 2A, cell 2B, and cell 2C) may be cells (access/data cell) that perform initial connection and data communication with the UE without performing the synchronization function. In the system of FIG. 17A and FIG. 17B, the cell 2 (cell 2A, cell 2B, and cell 2C) may include the wake-up receiver (WUR). When the cells include the WUR, the cell 2 (cell 2A, cell 2B, and cell 2C) may turn off the main radio (MR) to enter the ultra-deep sleep state, which may be more advantageous for energy saving. Although multiple cells are illustrated in FIG. 17B, it should be noted that a cell may correspond to at least one of a distributed unit (DU), a radio unit (RU), a transmission and reception point (TRP), or a carrier, but is not limited thereto.

Referring to FIG. 17B, the idle UE may synchronize with the cell transmitting the sync signal and select the corresponding cell. FIG. 17B illustrates a case where the cell 1 is selected.

In FIG. 17B, it is assumed that the cell 1 may provide the information on the cell 2 (cell 2A, cell 2B, and cell 2C). Therefore, the cell 1 may provide the UE with configurations for other cells (cell 2A, cell 2B, and cell 2C) (1703). The UE transmitting the corresponding information may transmit a wake-up signal (WUS) to the other cells (cell 2A, cell 2B, and cell 2C) (1704). Furthermore, the cells (cell 2A, cell 2B, and cell 2C) that were in the ultra-deep sleep state receive the WUS signal and turn on the MR (on state), thereby enabling transmission of signals to and/or reception of signals from the UE.

When the MR of all cells (cell 2A, cell 2B, and cell 2C) is turned on, the network power saving effect may be reduced. Therefore, it is necessary to ensure that only the required cells are woken up through various methods. For example, a method may be considered to turn on the MR only when the strength of the WUS signal received by the cells (cell 2A, cell 2B, and cell 2C) that were in the ultra-deep sleep state is a predetermined threshold or more. Here, the strength of the WUS signal may be referred to as wake-up signal received power (WUSRP). The method for configuring a threshold may refer to the description of FIG. 17A described above. In addition, it should also be noted that the present disclosure does not limit the method for enhancing a network power saving effect to the above-described method.

It should be noted that, in FIG. 17B, the reference signal is illustrated as the signal transmitted by the cell(s) in which the MR is turned on, but the present disclosure does not limit the corresponding signal to a specific signal.

Unlike FIG. 17A, FIG. 17B illustrates a case where the UE performs the random access channel (RACH) procedure to the access/data cells (cell 2A, cell 2B, and cell 2C). For example, the reference signal may include a sync signal, such that the UE is in a state in which at least DL synchronization has been acquired and/or is in a state in which at least DL synchronization is established with Cell 2 (at least one of Cell 2A, Cell 2B, and Cell 2C). Accordingly, the UE may perform the RACH procedure.

FIG. 17B illustrates a case where the UE performs data communication by accessing the cell 2A after performing the RACH procedure to the cell 2A. For example, the UE may transmit the WUS to the cell 2A, cell 2B, and cell 2C. Among these, the MR of the cell 2A, which has received the WUS signal with the strength more than/exceeding the threshold, is turned on and transmits the reference signal to the UE, and the UE may access the cell 2A by performing the RACH procedure on the cell 2A. Thereafter, the data communication between the UE and the cell 2A may be performed.

For RRC_IDLE UE, the synchronization cell becomes a primary cell (PCell), while for the RRC_CONNECTED UE, the data cell becomes the PCell. When necessary depending on the situation, the RRC_CONNECTED UE may configure another data cell as a secondary cell (SCell). In addition, when dual connectivity is supported, another data cell or a synchronization cell may be configured as a secondary cell group (SCG). Alternatively, the synchronization cell and the data cells below may become a master cell group (MCG). In this case, the PCell becomes the synchronization cell, and the data cells below may become the SCell. The SCG may be composed of other synchronization cells and the following data cells, and the corresponding synchronization cell may become a primary SCG cell (PSCell). Alternatively, the base stations belonging to the MCG or the SCG may all be data cells. The PCell may change depending on an entity confirming paging, or the PCell may be configured regardless of such entity.

Next, a method for reducing latency of a UE accessing from a synchronization cell to a data cell in a cell structure according to an embodiment of the present disclosure will be described.

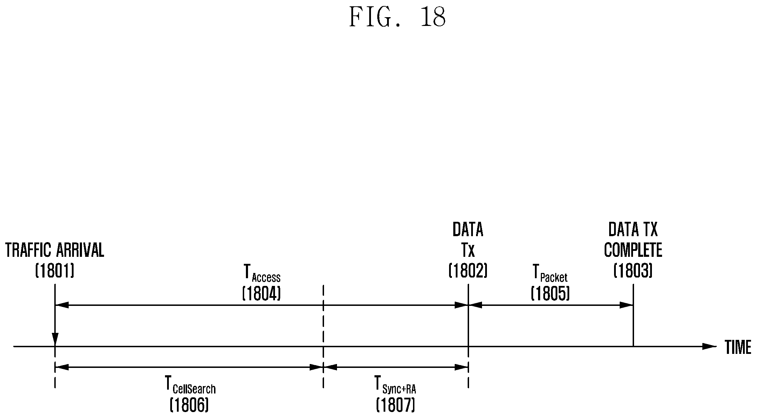

FIG. 18 is a diagram illustrating a classification of latency from the time during which a UE camps on a synchronization cell in a cell structure of FIGS. 15 to 17B according to an embodiment of the present disclosure until the UE receives all packets after accessing a data cell when data traffic occurs.

Referring to FIG. 18, when a time from a time point 1801 at which data traffic is generated at a UE being camped on a synchronization cell to a time point 1802 at which data transmission from a data cell starts is defined as T_{Access} (access latency) 1804, and a time from the time point (1802) at which the data transmission from the data cell starts to a time point at which all of the generated traffic is exhausted is defined as T_{Packet} (packet latency) 1805, a total latency is equal to T_{Access} + T_{Packet}. Since this latency increases the idle time of the base station and the UE to increase the overall energy consumption and decrease the throughput, reducing the latency is essential for the efficient operation of the cell structures of FIG. 16A to 17B.

To reduce the latency, the T_{Packet} 1805 is difficult to reduce because the time consumed for packet transmission is determined by the channel state between the data cell and the UE, and the cell structure of FIG. 15 also has the same latency.

The latency that occurs specifically in the cell structures of FIG. 16A to 17B may be called the T_{Access} 1804, which may be further subdivided into T_{cellSearch} (data cell search latency) 1806 and T_{Sync+RA} (data cell synchronization and random access latency) 1807. First, the T_{cellSearch} 1806 is latency required to select one of the data cells within or near the synchronization cell on which the UE is being camped. When all candidates for data cells are active as illustrated in the cell structure of FIG. 15, the UE measures the reference signal (RS) from the activated data cells and access a data cell having best signal strength, so the time required to select the data cell will be very short. However, in the cell structure as illustrated in FIG. 16A to FIG. 17B, the data cells may be inactive, so it may take a very long time to receive the RS from the data cell and measure the signal strength. For example, when a data cell having highest signal strength for a UE is in the deep sleep state, the time required to wake up the data cell will be long, so T_{cellSearch} 1806 increases. There are various methods for reducing latency, but the most effective method for this is for the corresponding UE not to always access the best data cell, but to optionally access the best data cell among the activated data cells. In this case, the T_{cellSearch} may be significantly reduced, but when the channel state between the selected data cell and the UE is poor, the time required for T_{Packet} may be long, so it is important to select the second-best data cell by carefully considering this trade-off.

Next, the T_{Sync+RA} represents a time required for a UE to receive a downlink RS from a data cell, to achieve synchronization, and to access the data cell, in a situation in which the UE has already selected the best or second-best data cell and the data cell is active. While the UE camps on the synchronization cell and is synchronized with the synchronization cell in terms of time and frequency, the UE is not synchronized with the data cell. When the corresponding data cell uses the same frequency band as the synchronization cell, the UE may synchronize with the data cell immediately through the synchronization process. However, when the data cell and the synchronization cell use different frequency bands, the UE should perform the synchronization process by receiving the downlink RS from the data cell several times. When the UE needs to receive the downlink RS three times at a periodicity of 20 ms to synchronize with the data cell, approximately 60 ms is required only for the synchronization process, so it is very important to reduce the synchronization time. To reduce this process, a downlink RS burst with a shorter periodicity may be transmitted, thereby allowing the UE to receive RSs several times within a short time and to perform synchronization much faster than 60 ms.

Even in CA, a similar function called "fast SCell activation" exists for fast synchronization between the SCell and the UE in the PCell. In fast SCell activation, when the RRC_CONNECTED UE is assigned an SCell for CA, a tracking reference signal (TRS) burst is received from the SCell to achieve the fast synchronization between the inactive SCell and the UE. To this end, the PCell notifies the UE of which TRS burst is transmitted from which SCell, and when the UE is triggered by the PCell, the UE receives the TRS from the SCell after a specific time point from the time point at which the UE is triggered.

When configuring the CA, one dormant BWP may be configured for the SCell to enable the fast SCell activation. When the active BWP of the activated SCell is the dormant BWP, the UE stops the PDCCH monitoring and SRS/PUSCH/PUCCH transmission from the SCell. However, when the dormant BWP is configured, the UE may continue to perform CSI measurements, auto gain control (AGC), and beam management. The DCI is used to control the activation/deactivation of dormant BWPs for one or more SCell(s) or one or more SCell groups(s).

When configuring the CA, in order to enable the fast SCell activation, aperiodic CSI-RS for tracking the fast SCell activation may be configured so that the SCell assists AGC and time/frequency synchronization. MAC CE is used to trigger the activation of one or more SCell(s) and to trigger the aperiodic CSI-RS for tracking the fast SCell activation for inactivated SCell(s).

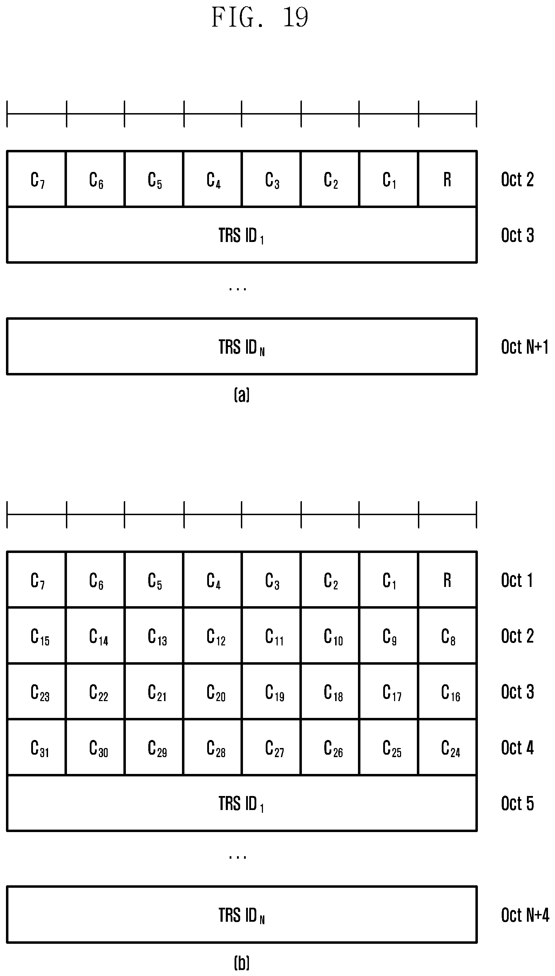

FIG. 19 is a diagram illustrating two octet structures of a trigger for MAC CE-based fast SCell activation according to an embodiment of the present disclosure.

FIG. 19A illustrates an enhanced SCell activation/deactivation MAC CE structure having a single octet Cᵢ field. Referring to FIG. 19A, the enhanced SCell activation/deactivation MAC CE having one octet Cᵢ field is identified by a MAC subheader having eLCID. The size is variable and is composed of 7 C-fields, 1 R-field, and 0 or more TRS IDⱼ fields in ascending order based on SCellIndex for the SCell indicated by the Cᵢ field(s) to be activated.

FIG. 19B illustrates the enhanced SCell activation/deactivation MAC CE structure having four octet Cᵢ fields. Referring to FIG. 19B, the enhanced SCell activation/deactivation MAC CE having four octet Cᵢ fields is identified by the MAC subheader having eLCID. The size is variable and is composed of 31 C-fields, 1 R-field, and 0 or more TRS IDⱼ fields in ascending order based on the SCellIndex for the SCell indicated by the Cᵢ field s to be activated.

The definitions for each field within the enhanced SCell activation/deactivation MAC CE of FIG. 19 are specifically as follows.
- Cᵢ: When there is a SCell configured in the MAC entity, this field indicates the activation/deactivation state of the SCell as SCellIndex i; otherwise, the MAC entity ignores the Cᵢ field. The Cᵢ field is configured to 1 to indicate that the SCell with the SCellIndex i should be activated and that the TRS IDⱼ field is included for the SCell. The Cᵢ field is configured to 0 to indicate that the SCell with SCellIndex i is deactivated and that the TRS ID field is not included for the SCell.
- TRS IDⱼ: When the TRS IDⱼ is configured to a non-zero value, it indicates that the corresponding TRS is activated by scellActivationRSId. When the TRS IDⱼ is configured to 0, it indicates that the TRS is not used for the corresponding SCell.
- R: Reserved bit configured to 0.

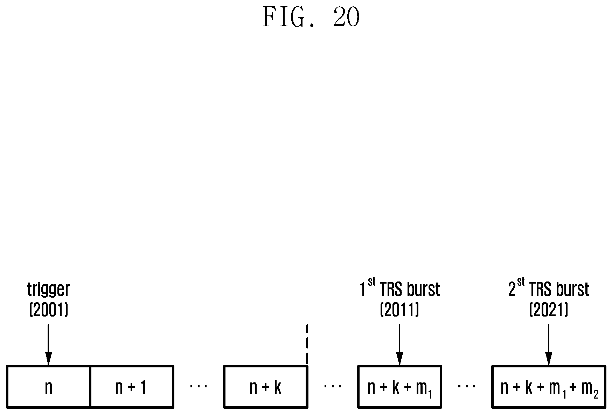

FIG. 20 is a diagram illustrating a timeline for the fast SCell activation according to an embodiment of the present disclosure.

The UE is configured with aperiodic CSI-RS resources for tracking an SCell for fast SCell activation using NZP-CSI-RS-ResourceSet(s) having the higher layer parameter scellActivationRS-ConfigToAddModList, and the QCL relationship may be provided by higher layer parameter qcl-Info.

Referring to FIG. 20, the PCell may transmit the enhanced SCell activation/deactivation MAC-CE in slot n 2001 that triggers CSI-RS bursts for fast SCell activation for the disabled SCell(s) once or twice.

When the UE receives the enhanced SCell activation/deactivation MAC-CE,
- When the MAC-CE indicates that a first CSI-RS burst for SCell activation exists in the SCell, the UE may assume that the first CSI-RS burst for SCell activation exists in the corresponding SCell. A first slot of the first CSI-RS burst starts at SCell slot m₁ 2011 after the last SCell slot that corresponds to reference slot n+k.
- When the MAC-CE indicates that a second CSI-RS burst for SCell activation exists in the SCell, the UE may assume that the second CSI-RS burst for SCell activation exists in the corresponding SCell. The first slot of the second CSI-RS burst starts at SCell slot m₂ 2021 after the end of the first CSI-RS burst. The CSI-RS of the second burst should have the same antenna port index, OFDM symbol assignment within slot, and the same PRB assignment location as the CSI-RS of the first burst.
- The CSI-RS burst is defined as four consecutive CSI-RS resources across two slots, and m₁ and m₂ are provided by gapBetweenBursts associated with CSI-RS burst(s) triggered by aperiodicTriggeringOffsetL2 of NZP-CSI-RS-ResourceSet and MAC-CE, respectively.

Unlike the fast SCell activation described above, various modifications are required to enable the fast activation of the data cell in the cell structure illustrated in FIGS. 16A to 17B.

First, since the target is the UE in the RRC_IDLE or INACTIVE state rather than the RRC_CONNECTED UE, the corresponding UE may not be configured with RRC, so information on TRS and SCELL may be provided to the UE via SIB. The RRC_IDLE/INACTIVE UE may also receive the TRS, and the UE may receive the TRS configuration vis SIB17 in Table 37-1.

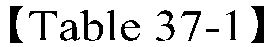

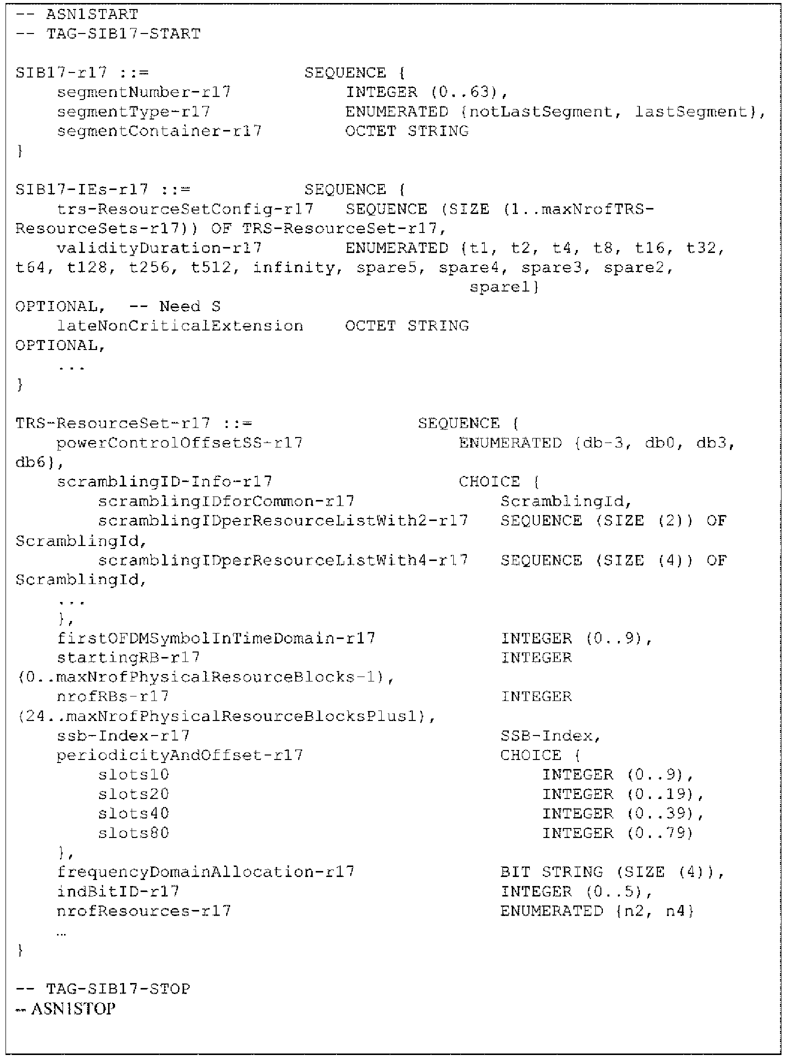

Table 37-2 shows the description of parameters within SIB17 in Table 37-1.

**[Table 37-2]**

| **SIB17 field descriptions** |
|---|
| ***trs-ResourceSetConfig*** |
| RS configuration of TRS occasion(s) for idle/inactive UE(s), in terms of a list of N>=1 NZP TRS resource set(s). The maximum number of TRS resource sets configured by higher layer is 64. If a TRS resource is configured, the L1 based availability indication is always enabled based on that configuration. A UE which acquired *SIB-X* with a TRS configuration but did not yet receive an associated L1-based availability indication considers the configured TRS as unavailable. |
| ***TRS-Resourceset*** |
| Common configuration parameters for the TRS resource set. |
| ***validityDuration*** |
| The valid time duration at least for a paging PDCCH based L1 availability indication, time unit is one default paging cycle. When the validity duration is not configured, UE assumes a default time duration to be 2 default paging cycles. |
| |

| ***TRS-ResourceSet* field descriptions** |
|---|
| ***firstOFDMSymbolInTimeDomain*** |
| The index of the first OFDM symbol in the PRB used for TRS in a slot. The field indicates first symbol in a slot, a second symbol in the same slot can be derived implicitly with symbol index as *firstOFDMSymbolInTimeDomain*+4. |
| ***frequencyDomalnAllocation*** |
| Indicates the offset of the first RE to RE#0 in a RB in row1. |
| ***indBitID*** |
| The index of the associated bit in TRS availability indication field in DCI. Each TRS resource set is configured with an ID i for the association with (i+1)-th indication bit in TRS availability indication field in DCI. |
| ***nrofRBs*** |
| Number of PRBs across which corresponding TRS resource spans. |
| ***nrofResources*** |
| The number of TRS resources for a TRS resource set. |
| ***periodicityAndOffset*** |
| The periodicity and slot offset (slot) for periodic TRS. It is used to determine the location of the first slot of TRS resource set. The periodicity value slots10 corresponds to 10 slots, value *slots20* corresponds to 20 slots, and so on. |
| ***powerControlOffsetSS*** |
| Power offset (dB) of NZP CSI-RS RE to SSS RE. |
| ***scramblingID-Info*** |
| One or more scrambling IDs are configured for a TRS resource set. If a common scrambling ID is configured, it applies to all the TRS resources within the TRS resource set. Otherwise, each TRS resource within the TRS resource set is provided with a scrambling ID. If the number of TRS resources for the TRS resource set is 2, *scramblingIDperResourceListWith2-r17* is configured, while *scramblingIDperResourceListWith4-r17* is configured for the case that the number of TRS resources for the TRS resource set is 4. |
| ***ssb-Index*** |
| The index of reference SSB with which quasi-collocation information is provided as specified in TS 38.214 [19] clause 5.1.5. |
| ***startingRB*** |
| The PRB index where corresponding TRS resource starts in relation to common resource block #0 (CRB#0) on the common resource block grid. |

As described above, after the SIB17 is configured on the UE, the base station may indicate the UE on which TRS resource set to configure through TRS availability indications in DCI format 1_0 and DCI format 2_7, which are CRC-scrambled with P-RNTI. There are no new TRS patterns or types for RRC_IDLE/INACTIVE UE, and when TRS is configured on the UE in the RRC_CONNECTED state in the current network, the corresponding TRS resource set may be identically configured for RRC_IDLE/INACTIVE UEs. Therefore, if the TRS is not configured on the RRC_CONNECTED UE, the TRS availability indication may not be configured for the RRC_IDLE/INACTIVE UEs. In a similar manner, the TRS configuration for the RRC_IDLE/INACTIVE UE may reuse the structure of the SIB17. However, in addition to this, since the information on the data cells is also required, candidate data cell(s) IDs may be additionally included within the SIB17-IEs, or candidate data cell(s) IDs may be transmitted to SIB1, and all the TRS configurations specified in the SIB17-IEs for each data cell may be considered valid. The term actually used, such as SIB17, may vary.

Next, among the TRS configurations configured in the synchronization cell, the channel actually used for fast activation will be described. Since the data cells are in a sleep state, the synchronization cell should trigger the data cells. As described above, since the SIB serves the purpose of setting the configuration to the UE, dynamic indication is difficult. Furthermore, because of difficulties of MAC CE or RRC not being allocated to the UE in RRC configuration, such indication may be provided by DCI basis. For example, the synchronization cell may trigger the fast activation of the data cell in the UE via the DCI format 1_0 CRC-scrambled with the P-RNTI. Table 38 shows the structure of the DCI format 1_0 CRC-scrambled with the P-RNTI, and Table 39 shows a short message indicator, which is one of the fields in Table 38.

**[Table 38]**

| Field | Bits | Note |
|---|---|---|
| Short Messages indicator | 2 | |
| Short Messages | 8 | |
| Frequency domain resource assignment | $\left⌈{log}_{2}\left({N}_{RB}^{DL , BWP}\left({N}_{RB}^{DL , BWP}+1\right)/2\right)\right⌉$ | * |
| Time domain resource assignment | 4 | * |
| VRB-to-PRB mapping | 1 | * |
| Modulation and coding scheme | 5 | * |
| TB scaling | 2 | * |
| TRS availability indication | M=0-6 | ** |
| Reserved bits | (8-M) or (6-M) | *** |

The description of 'note' in Table 38 is as follows:
* If only the short message is carried, this bit field is reserved
** M = 1 ~ 6 bits (if TRS-ResourceSetConfig is configured), 0 (otherwise)
*** with spectrum sharing or without spectrum sharing

In Table 38, ${N}_{RB}^{DL , BWP}$ is a size of CORESET 0. A short messages indicator in a first row of Table 38 is 2 bits of information and serves to indicate whether it is short message information, paging information, or both, as shown in Table 40.

**[Table 39]**

| **Bit field** | **Short Message indicator** |
|---|---|
| 00 | Reserved |
| 01 | Only scheduling information for Paging is present in the DCI |
| 10 | Only short message is present in the DCI |
| 11 | Both scheduling information for Paging and short message are present in the DCI |

Here, the short message includes information related to changes in system information or disasters, as shown in Table 40.

**[Table 40]**

| **Bit** | **Short Message** |
|---|---|
| 1 | ***systemInfoModification*** |
| 2 | ***etwsAndCmasIndication*** |
| 3 | ***stopPagingMonitoring*** |
| 4 | ***systemInfoModification-eDRX*** |
| **5** - **8** | Not used in this release of the specification, and shall be ignored by UE if received. |

To always perform the fast activation of the data cell, the TRS burst may be allocated when the traffic exists for the corresponding UE. In this case, the UE that confirms that paging is intended for the UE via the DCI format 1_0 CRC-scrambled with the P-RNTI recognizes, when 01 or 11 is indicated in the short message indicator in Table 39, that the corresponding paging is downlink traffic and that it should perform the random access to the data cell to receive the downlink traffic. The UE expects that the TRS exists for the data cell the UE intends to access, receives the TRS indicated by the TRS availability indication, acquires synchronization, and accesses the data cell. However, when the data cell is in the sleep state, the UE may need to continuously monitor the TRS because it is difficult to dynamically indicate the time required for ramp-up.

As another method, there is a method for explicitly configuring additional fields in DCI. As shown in Tables 38 to 40, there are a large number of reserved bits. By this reserved bits, which data cell is a candidate for activation may be indicated by a bit or a bitmap. For example, when the bitmap is 1100010, there are 7 data cells that may be indicated by the corresponding synchronization cell, and the UE may consider the 1st, 2nd, and 6th data cells as candidates for activation. Additionally, the synchronization cell may directly indicate a ramp-up time according to the sleep state of the data cell.

As another method, a method for combining the implicit method and the explicit method described above may also be considered. For example, when the short message indicator is indicated as 01 or 11, candidate data cell(s) are explicitly indicated by a bit or a bitmap, and both the transition time for ramp-up and the TRS availability indication are indicated, so the UE may knowwhich TRS is transmitted from which data cell(s). Of course, similar functions may be indicated by the DCI format 1_0 or the DCI format 2_7, CRC-scrambled with C-RNTI, SI-RNTI, RA-RNTI, MsgB-RNTI, etc., or by newly defined DCI.

Finally, there may be changes in the time point, that is, the timing, when the UE receives the trigger and receives the TRS from the actual data cell. When the UE receives the trigger for fast data cell activation via the DCI in slot n, and a slot following T_{cellSearch} is defined as slot n+k, similar to Fast SCell activation, the UE may receive the first TRS burst after slot m₁ based on slot n+k, and then, the second TRS burst after slot m₂ based on the slot m₁. Information on m₁ and m₂ may be provided in the same way in aperiodicTriggeringOffsetL2 and gapBetweenBursts, respectively. However, since the above information is provided through the RRCs of NZP-CSI-RS-ResourceSet and SCellActivationRS-Config, respectively, a context performing the similar function may be included in the TRS-ResourceSet of Table 37, as shown in Table41. Additionally, since the second TRS burst should have the QCL relationship with the first TRS burst, the corresponding qcl-Info may also be provided in the TRS-ResourceSet.

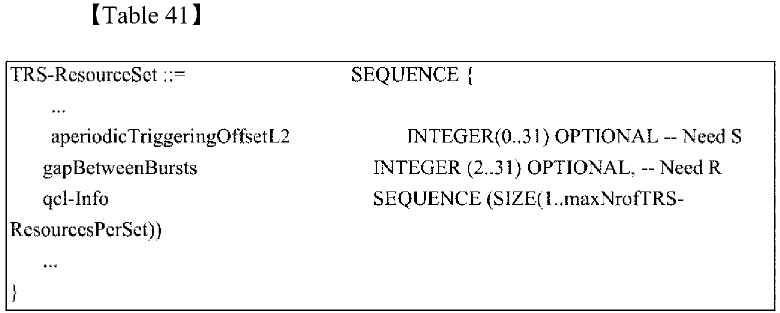

Consequently, when the information on the m₁ and m₂ is similarly transmitted to the SIB17, the UE may confirm the timing at which the TRS burst is transmitted from the data cell depending on how slot k from n to n+k are configured. This timing may vary significantly depending on the state of the data cell. For example, assuming data cell 1 is in a light sleep state and data cell 2 is in a deep sleep state, which is deeper than the light sleep, the transition time to enter an active state will be longer for data cell 2, as it requires turning on more components than the data cell 1. Unless the synchronization cell provides such information for each data cell, it is difficult for the UE to know the information. Without this information, the UE should continuously search for the TRS, thereby increasing the power consumption. On the other hand, when the synchronization cell provides this information, the UE may know exactly at what time point the TRS is transmitted. However, when the number of candidate data cells increases, notifying the state of each data cell may cause significant overhead. Therefore, the synchronization cell may quantize the transition time value and notify the UE OF the quantized transition time value. For example, 2-bit information for 00, 01, 10, and 11 may be represented as {0, 6, 50, 200ms}. In other words, as shown in Table 42, quatizedTransitionTime may be added to SIB17-IEs. Here, a bitmap size X refers to a quantization level.

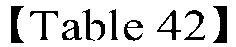

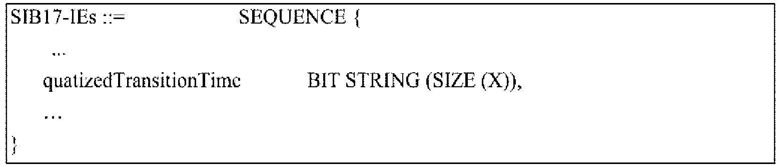

When quatizedTransitionTime is configured, the UE may accurately identify the location of the TRS through up to 2^X attempts. However, since increasing the size of X may allow the UE to wake up more frequently, a specific value among those defined in quatizedTransitionTime may be indicated via the DCI. The corresponding value may be transmitted together via the PDCCH, which dynamically notifies an ID of a data cell or a TRS ID. Since the UE may know the ID of the data cell to be activated and what transition time the UE has, the UE may accurately receive the TRS in a single attempt.

Meanwhile, regarding slots for PUCCH transmission in a cell structure as illustrated in FIG. 15, when the UE receives an activation command from the PDSCH for SCell to terminate at slot n, the UE may perform SCell activation after slot n+k, except in the following cases:
- Operation related to CSI reporting for a serving cell activated at slot n+k
- Operation related to scellDeactivationTimer associated with the SCell applied by the UE at slot n+k
- Operation related to CSI reporting for the serving cell not activated at slot n+k, applied by the UE after the earliest slot n+k

Here, k is ${k}_{1} + 3 ⋅ {N}_{slot}^{subframe , μ} + 1$, and k₁ is the number of slots for PUCCH transmission having HARQ-ACK information for PDSCH reception, and is indicated by a PDSCH-to-HARQ feedback timing indicator field in the DCI format, where ${N}_{slot}^{subframe , μ}$ is the number of slots per subframe that is the SCS configuration of the PUCCH transmission.

Similarly, even in the cell structures of FIGS. 16A to 17B, the TRS may also be received from the data cell after the slot n+k. However, since it is not in the RRC_CONNECTED state, information on HARQ-ACK feedback is not required, so the definition of k may differ.

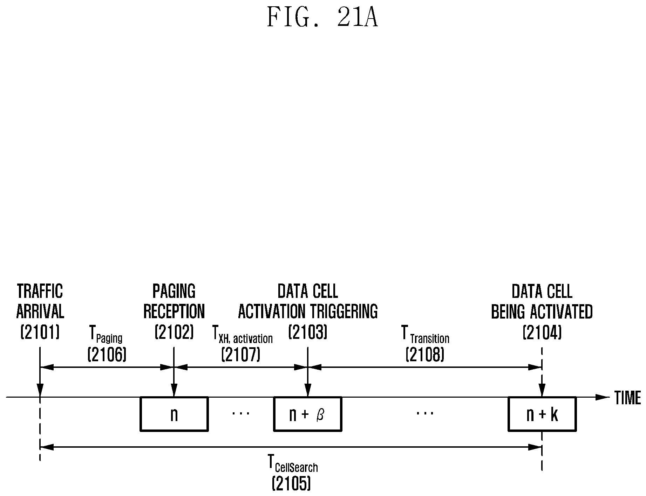

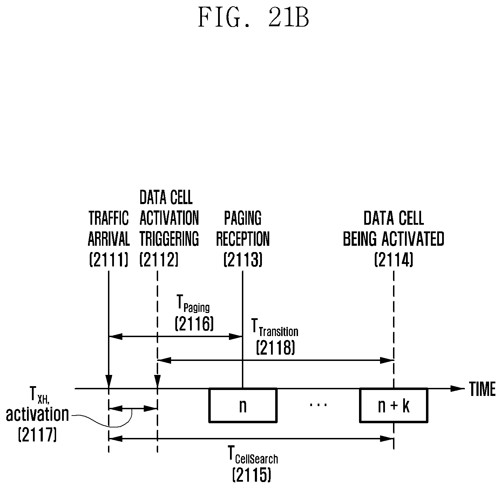

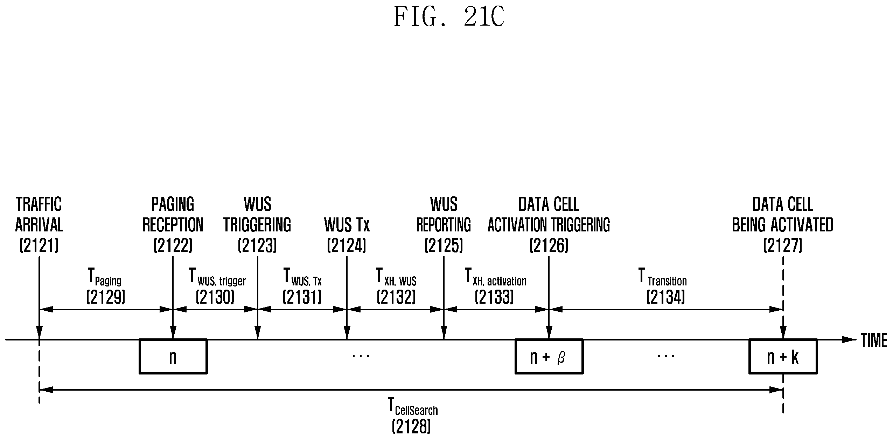

FIGS. 21A, 21B, and 21C illustrate three timelines from the traffic occurrence for the UE to a time point at which the data cell is activated according to an embodiment of the present disclosure.

FIGS. 21A and 21B illustrate a scenario in which there is no WUR in the data cell, as illustrated in FIGS. 16A and 16B.

Referring to FIG. 21A, after the traffic occurs (2101), the synchronization cell may transmit paging to the UE. Since the location where the paging may be received is determined by the UE ID, the paging may be received by the UE after a delay time corresponding to the time of T_{Paging} 2106 (2102). If it is assumed that the UE receives a trigger for dynamically fast data cell activation via the DCI while receiving the paging, the current time point may be slot n. At the same time, the synchronization cell may activate the data cell(s) suitable for the corresponding UE. Assuming that the synchronization cell and the data cell share a DU and are separated into RU units, the synchronization cell may trigger the activation of the data cell via the fronthaul, middlehaul, or backhaul (2103). In this case, when the required time is β=T_{XH,activation} 2107, the current time point is slot n+β. The data cell that was in the sleep state may be finally activated after a state transition during Tₜᵣₐₙₛᵢₜᵢₒₙ 2108 starting from slot n+β (2104). In this case, the time point is slot n+k. The time corresponding to the slot k may be indicated to the UE via the DCI as a raw value or a quantization value as in the embodiment described above, or the UE may also perform a try and error according to the pre-configured value. When the time corresponding to slot β is determined, β information is delivered via the SIB17, and the synchronization cell may notify the UE via the DCI only about the time of slot k- β.

Referring to FIG. 21B, after the traffic occurs (2111), the synchronization cell may, in order to reduce latency, trigger the activation of the data cell(s) in advance via the fronthaul, middlehaul, or backhaul at T_{XH,activation} 2117 (2112). The synchronization cell may transmit the paging at a location where the UE may receive the paging. For example, the synchronization cell may transmit the paging after the time of the T_{paging} 2116 after the traffic occurs (2111). The data cell that was in the sleep state may be finally activated after the state transition during Tₜᵣₐₙₛᵢₜᵢₒₙ 2118 (2114). The data cell may be completely activated (2114) after slot k after the UE receives the paging (2113). The time corresponding to slot k may be indicated to the UE as a raw value or a quantization value via the DCI as in the embodiment described above, or the UE may perform the try and error according to the pre-configured value.

Referring to FIG. 21C, after the traffic occurs (2121), the synchronization cell may transmit the paging to the UE. Since the location where the paging may be received is determined by the UE ID, the paging may be received by the UE after a delay time corresponding to the time of T_{Paging} 2129 (2122). If it is assumed that the UE receives the trigger for dynamically fast data cell activation via the DCI while receiving the paging, the current time point is slot n. At the same time, the synchronization cell may trigger the WUS (2123) to select the data cell(s) suitable for the corresponding UE. For example, the synchronization cell may trigger the WUS (2123) after T_{wus,trigger} 2130 from the paging reception of the UE (2122). When the WUS is triggered, the UE transmits the WUS after T_{wus,Tx} 2131 when there is the WUS occasion (2124). The WUR in the data cell receives the WUS, and if the received WUS satisfies the criteria (e.g., when the RSRP is higher than the configured threshold), the corresponding power level or RSRP may be reported to the synchronization cell via fronthaul, middlehaul, or backhaul (2125). When multiple data cells are suitable, the synchronization cell may indicate the activation of the data cell with the highest received power via the fronthaul, middlehaul, or backhaul (2126). For example, the synchronization cell may indicate the activation of the data cell after T_{XH,activation} 2133 from the reception of the report 2125 (2126). In some cases, since the reporting and activation via the fronthaul, middlehaul, or backhaul may cause additional latency, the reporting and activation may be omitted, and when the received WUS satisfies the criteria, the activation may be performed immediately. In this case, the activation trigger time point 2126 is slot n+β, and the activation may be fully achieved after a transition time 2134 (2127). In this case, the time point is slot n+k. The time corresponding to slot k may be indicated to the UE as a raw value or a quantization value via the DCI as in the embodiment described above, or the UE may perform the try and error according to the pre-configured value. When the time corresponding to slot β is determined, β information is delivered via the SIB17, and the synchronization cell may notify the UE via the DCI only about the time of slot k-β^{.}

In the configuration defined above, even if the UE receives the configuration for the fast data cell activation via the SIB, if a dynamic indication, i.e., the trigger, is not transmitted via the DCI, the UE may assume that the fast data cell activation is deactivated.

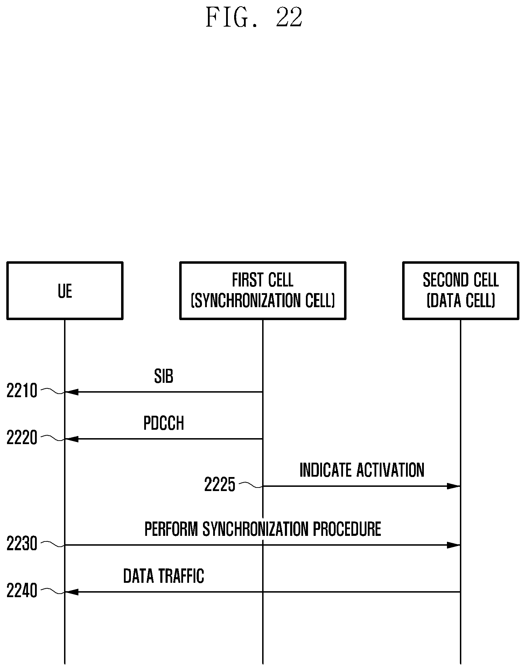

FIG. 22 illustrates signaling between a terminal and a base station operating based on fast data cell activation according to an embodiment of the present disclosure.

The UE and the base station of FIG. 22 may operate based on the above-described embodiment. The signaling sequence of FIG. 22 may be changed, and two or more operations may be combined and performed in one step. In addition, some operations may be omitted in some cases.

Referring to FIG. 22, in operation 2210, the UE may receive a system information block. The UE may be in an RRC idle state or an RRC inactive state. The system information block may be received from the first cell (or the base station associated with the first cell) on which the UE is camped. That is, the first cell (or the base station associated with the first cell) on which the UE is camped may transmit the system information block to the UE. For example, the system information block may be the SIB17 of the above-described embodiment. For example, the system information block may include identities of candidate cells having data traffic to be transmitted to the UE.

In operation 2220, the UE may receive the PDCCH including the DCI format from the first cell (or the base station associated with the first cell). That is, the first cell (or the base station associated with the first cell) may transmit the PDCCH including the DCI format to the UE. For example, the DCI format may include information to trigger the activation of the second cell. For example, the CRC of the DCI format may be scrambled with the P-RNTI. In this case, the DCI format may include a short message indicator field. It may be confirmed whether the UE performs the random access procedure to the second cell based on the short message indicator field.

In step 2225, the first cell (or the base station associated with the first cell) may transmit information indicating the second cell (or the base station associated with the second cell) to activate. The second cell (or the base station associated with the second cell) may transition from the sleep state to the activated state based on the information.

In operation 2230, the UE may perform the synchronization procedure to the second cell. For example, the synchronization procedure may be performed after the first time from the time point at which the UE receives the PDCCH. For example, the first time may be composed of a sum of (i) a second time in which the first cell triggers activation of the second cell, and (ii) a third time required for the second cell to transition from a sleep state to an active state, For example, information on the second time may be included in the system information block, and information on the third time may be included in the DCI format.

In operation 2240, the UE may receive the data traffic from the second cell (or the base station associated with the second cell). The second cell (or the base station associated with the second cell) may transmit the data traffic to the UE.

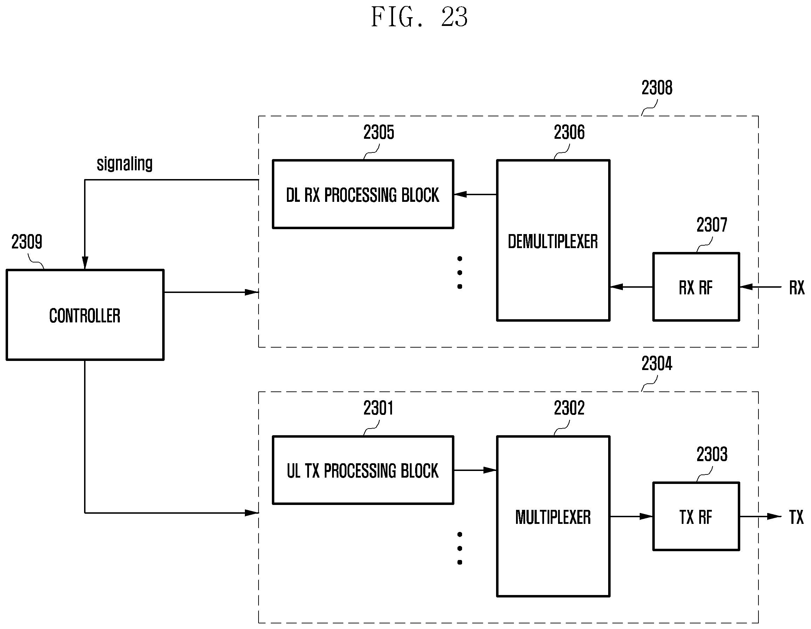

FIG. 23 illustrates a terminal transceiver according to an embodiment of the present disclosure. For convenience of description, apparatuses not directly related to the present disclosure may be omitted from illustration and description.

Referring to FIG. 23, the terminal may be configured with a transmitting unit 2304 including an uplink transmission processing block 2301, a multiplexer 2302, and a transmission RF block 2303, a receiving unit 2308 including a downlink reception processing block 2305, a demultiplexer 2306, and a reception RF block 2307, and a controller 2309.

As described above, the controller 2309 may control each of the configuration blocks of the receiving unit 2308 for receiving a data channel or a control channel transmitted by the base station and each of the configuration blocks of the transmitting unit 2304 for transmitting an uplink signal.

In the transmitting unit 2304 of the terminal, the uplink transmission processing block 2301 may perform processes such as channel coding and modulation to generate signals to be transmitted. The signals generated by the uplink transmission processing block 2301 may be multiplexed with other uplink signals by the multiplexer 2302, processed by the transmission RF block 2303, and then transmitted to the base station.

The receiving unit 2308 of the terminal demultiplexes the signals received from the base station and distributes the signals to the respective downlink reception processing blocks. The downlink reception processing block 2305 may perform processes such as demodulation and channel decoding on the downlink signals from the base station to acquire control information or data transmitted by the base station. The terminal receiving unit 2308 may apply output results of the downlink reception processing block to the controller 2309 to support the operation of the controller 2309.

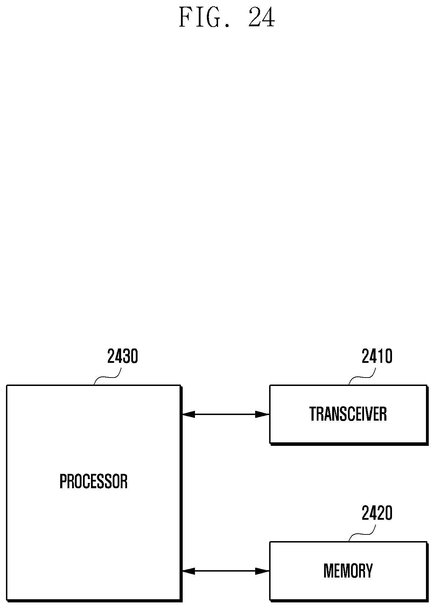

FIG. 24 is a block diagram of a terminal according to an embodiment of the present disclosure.

Referring to FIG. 24, the terminal may include a processor 2430, a transceiver 2410, and a memory 2420. However, the components of the terminal are not limited to the examples described above. For example, the terminal may include more or fewer components than the components described above. Furthermore, the processor 2430, the transceiver 2410, and the memory 2420 may be implemented in a single chip form. According to an embodiment, the transceiver 2410 of FIG. 24 may include a transmitting unit 2204 and a receiving unit 2208 of FIG. 22. Furthermore, the processor 2430 of FIG. 24 may include a controller 2209 of FIG. 22.

According to an embodiment, the processor 2430 may control a series of processes to enable the terminal to operate according to the above-described embodiment of the present disclosure. For example, according to the embodiments of the present disclosure, the components of the terminal may be controlled to perform a transmitting and receiving method of the terminal depending on whether a base station mode is a base station energy saving mode or a base station general mode. For example, the processor 2430 may be configured to receive a system information block from a first cell on which the terminal in an RRC idle or RRC inactive state is camped, receive a PDCCH including a DCI format from the first cell, the DCI format including information for triggering activation of a second cell, perform a synchronization procedure to the second cell after a first time from the time point at which the PDCCH is received, and receive data traffic from the second cell. The number of processors 2430 may be one or more, and the processor 2430 may execute programs stored in the memory 2420 to perform the transmission and reception operations of the terminal in the wireless communication system applying the above-described carrier aggregation of the present disclosure.

The transceiver 2410 may transmit and receive signals to and from the base station. The signals transmitted and received to and from the base station may include control information and data. The transceiver 2410 may include an RF transmitter that up-converts the frequency of the transmitted signal and amplifies the transmitted signal, an RF receiver that performs low-noise amplification on the received signal and down-converts the frequency of the received signal, etc. However, this is only one embodiment of the transceiver 2410, and the components of the transceiver 2410 are not limited to the RF transmitter and the RF receiver. In addition, the transceiver 2410 may receive a signal via a radio channel, output the signal to the processor 2430, and transmit the signal output from the processor 2430 via the radio channel.

According to an embodiment, the memory 2420 may store programs and data necessary for the operation of the terminal. In addition, the memory 2420 may store the control information or data included in the signal transmitted and received by the terminal. The memory 2420 may be configured as storage media, such as a ROM, a RAM, a hard disk, a CD-ROM, or a DVD, or a combination of the storage media. In addition, the plurality of memories 2420 may be provided.

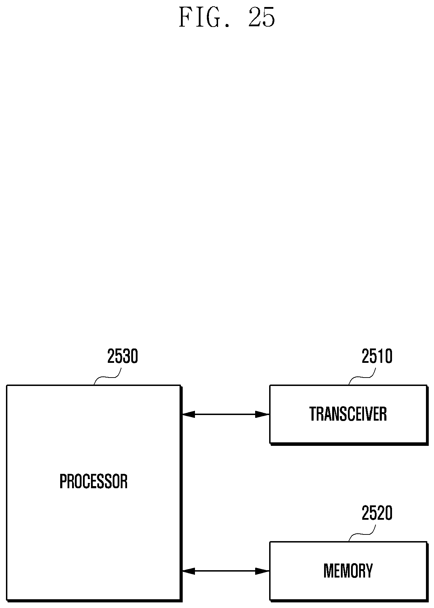

FIG. 25 is a block diagram of a base station according to an embodiment of the present disclosure.

Referring to FIG. 25, the base station may include a processor 2530, a transceiver 2510, and a memory 2520. However, the components of the base station are not limited to the examples described above. For example, the base station may include more or fewer components than the components described above. Furthermore, the processor 2530, the transceiver 2510, and the memory 2520 may be implemented in a single chip form.

The processor 2530 may control a series of processes to enable the base station to operate according to the above-described embodiment of the present disclosure. For example, according to the embodiments of the present disclosure, the components of the base station may be controlled to perform a method for transmitting and receiving a terminal depending on whether a base station mode is a base station energy saving mode or a base station general mode. The processor 2530 is configured to transmit a system information block to a terminal in an RRC idle or RRC inactive state, in which the terminal is camped on a first cell, transmit a PDCCH including a DCI format to the terminal, in which the DCI format includes information for triggering an activation of a second cell having data traffic to be transmitted to the terminal, and transmit, to the second cell, information indicating the activation, in which a synchronization procedure to the second cell may be performed after a first time from the time point at which the PDCCH is transmitted. The processor 2530 may be one or a plurality of processors, and the processor 2530 may perform the method of the present disclosure described above by executing programs stored in the memory 2520.

The transceiver 2510 may transmit and receive signals to and from the terminal. The signals transmitted and received to and from the terminal may include control information and data. The transceiver 2510 may include an RF transmitter that up-converts the frequency of the transmitted signal and amplifies the transmitted signal, an RF receiver that performs low-noise amplification on the received signal and down-converts the frequency of the received signal, etc. However, this is only one embodiment of the transceiver 2510, and the components of the transceiver 2510 are not limited to the RF transmitter and the RF receiver. In addition, the transceiver 2510 may receive a signal via a radio channel, output the signal to the processor 2530, and transmit the signal output from the processor 2530 via the radio channel.

According to an embodiment, the memory 2520 may store programs and data necessary for the operation of the base station. In addition, the memory 2520 may store the control information or data included in the signal transmitted and received by the base station. The memory 2520 may be configured as storage media, such as a ROM, a RAM, a hard disk, a CD-ROM, or a DVD, or a combination of the storage media. Furthermore, the number of memories 2520 may be plural. According to an embodiment, the memory 2520 may store a program for performing the methods of the embodiments of the present disclosure described above.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although exemplary embodiments of the disclosure have been described and shown in the specification and the drawings by using particular terms, they have been used in a general sense merely to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented. Also, the above respective embodiments may be employed in combination, as necessary.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving a system information block from a first cell on which the terminal in a radio resource control (RRC) idle or RRC inactive state is camped;
receiving a physical downlink control channel (PDCCH) including a downlink control information (DCI) format from the first cell, the DCI format including information for triggering activation of a second cell;
performing a synchronization procedure to the second cell after a first time from a time point at which the PDCCH is received; and
receiving data traffic from the second cell.

2. The method of claim 1, wherein a cyclic redundancy check (CRC) of the DCI format is scrambled with a paging-radio network temporary identifier (P-RNTI).

3. The method of claim 2, further comprising:
identifying to perform a random access procedure to the second cell based on a short message indicator field included in the DCI format.

4. The method of claim 1, wherein the first time is composed of a sum of (i) a second time in which the first cell triggers activation of the second cell, and (ii) a third time required for the second cell to transition from a sleep state to an active state.

5. The method of claim 4, wherein information on the second time is included in the system information block, and
wherein information on the third time is included in the DCI format.

6. The method of claim 1, wherein the system information block includes identities of candidate cells including the second cell, and
wherein the candidate cells are associated with the data traffic.

7. A method performed by a base station associated with a first cell in a wireless communication system, the method comprising:
transmitting a system information block to a terminal in a radio resource control (RRC) idle or RRC inactive state, the terminal being camped on the first cell;
transmitting, to the terminal, a physical downlink control channel (PDCCH) including a downlink control information (DCI) format, the DCI format including information for triggering an activation of a second cell having data traffic to be transmitted to the terminal; and
transmitting, to the second cell, information indicating the activation,
wherein a synchronization procedure to the second cell is performed after a first time from a time point at which the PDCCH is transmitted.

8. The method of claim 7, wherein a cyclic redundancy check (CRC) of the DCI format is scrambled with a paging-radio network temporary identifier (P-RNTI), and
wherein whether a random access procedure is to be performed for the second cell is identified based on a short message indicator field included in the DCI format.

9. The method of claim 7, wherein the first time is composed of a sum of (i) a second time in which the first cell triggers activation of the second cell, and (ii) a third time required for the second cell to transition from a sleep state to an active state.

10. The method of claim 9, wherein information on the second time is included in the system information block, and
wherein information on the third time is included in the DCI format.

11. The method of claim 7, wherein the system information block includes identities of candidate cells including the second cell, and
wherein the candidate cells are associated with the data traffic.

12. A terminal in a wireless communication system, the terminal comprising:
a transceiver; and
a processor, wherein the processor is configured to:
receive a system information block from a first cell on which the terminal in a radio resource control (RRC) idle or RRC inactive state is camped,
receive a physical downlink control channel (PDCCH) including a downlink control information (DCI) format from the first cell, the DCI format including information for triggering activation of a second cell,
perform a synchronization procedure to the second cell after a first time from a time point at which the PDCCH is received, and
receive data traffic from the second cell.

13. The terminal of claim 12, wherein the processor is further configured to identify, based on a short message indicator field included in the DCI format, to perform a random access procedure to the second cell, and
wherein a cyclic redundancy check (CRC) of the DCI format is scrambled with a paging-radio network temporary identifier (P-RNTI).

14. The terminal of claim 12, wherein the first time is composed of a sum of (i) a second time in which the first cell triggers activation of the second cell, and (ii) a third time required for the second cell to transition from a sleep state to an active state,
wherein information on the second time is included in the system information block, and
wherein information on the third time is included in the DCI format.

15. A base station associated with a first cell in a wireless communication system, the base station comprising:
a transceiver; and
a processor, wherein the processor is configured to
transmit a system information block to a terminal in a radio resource control (RRC) idle or RRC inactive state, the terminal being camped on the first cell,
transmit, to the terminal, a physical downlink control channel (PDCCH) including a downlink control information (DCI) format, the DCI format including information for triggering an activation of a second cell having data traffic to be transmitted to the terminal, and
transmit, to the second cell, information indicating the activation,
wherein a synchronization procedure to the second cell is performed after a first time from a time point at which the PDCCH is transmitted.
